# EUROPEAN PATENT APPLICATION

(11) **EP 4 537 982 A1**
(43) Date of publication of application: **16.04.2025**
(21) Application number: 23819440.1
(22) Date of filing: 17.02.2023
(51) Int. Cl.: B24B 41/06, B24B 9/10, B24B 41/053, B28D 5/00, B28D 7/04, C03C 19/00

(54) **GRINDING SYSTEM**

(30) Priority: 07.06.2022 JP 2022092531
(71) Applicant: BANDO KIKO CO., LTD., Tokushima 770-0871 (JP)
(72) Inventor: BANDO, Kazuaki, Tokushima-shi, Tokushima 770-0871 (JP)
(74) Representative: Ashton, Gareth Mark
(86) International application number: PCT/JP2023/005719
(87) International publication number: WO 2023/238452

(57) **Abstract**

Provided is a grinding processing system capable of firmly fixing a main body portion of a glass plate, and capable of performing grinding processing on a peripheral edge of the main body portion while preventing sideslip (lateral deviation) of the main body portion of the glass plate in a case where the peripheral edge of the main body portion of the glass plate is ground by biting in of a side surface (cylindrical portion) of a rotating disk-shaped grinding stone of a grinding device.

A grinding processing system 10a includes a magnet installed on a table sucker 130 and located immediately below a lower surface of a main body portion of a glass plate placed on a grinding processing table, a magnetic weight material located on a side of an upper surface of the main body portion of the glass plate and attracted to the magnet, first fixing means for causing the table sucker 130 to abut on the lower surface of the main body portion of the glass plate to attract and hold the lower surface of the main body portion before starting of grinding processing on a peripheral edge of the main body portion of the glass plate, and second fixing means for causing the magnet located immediately below the lower surface of the main body portion and the magnetic weight material abutting on the upper surface of the main body portion and attracted to the magnet to sandwich the main body portion before starting of the grinding processing on the peripheral edge of the main body portion of the glass plate.

## Description

### Technical Field

The present invention relates to a grinding processing system that performs grinding processing on a peripheral edge of a main body portion of a glass plate that is a processing target such as a window glass plate of an automobile or a liquid crystal glass plate.

### Background Art

A glass plate processing system is disclosed which includes a carry-in conveyor that carries in a glass plate, a notching processing region located in front of the carry-in conveyor, a bend-breaking processing region located in front of the notching processing region, a grinding processing region located in front of the bend-breaking processing region, a carry-out conveyor located in front of the grinding processing region, and a conveyance mechanism that conveys the glass plate from the carry-in conveyor to each processing region (see Patent Literature 1).

The notching processing region of the glass plate processing system includes a notching processing table having a first movement mechanism that moves in a width direction in a state in which a positioned glass plate is placed thereon, and a notching mechanism that is movable in a front-rear direction. In the notching processing region, after the notching mechanism moves rearward in the front-rear direction toward the outside in the width direction of the edge portion of the glass plate placed on the notching processing table, the notching processing table is caused to move in the width direction toward the notching mechanism by the first movement mechanism, and a contour cutout line is formed on the glass plate placed on the notching processing table by using the notching mechanism. The bend-breaking processing region includes a bend-breaking processing table on which the positioned glass plate after the notching processing is placed, and a bend-breaking mechanism that is movable in the front-rear direction. In the bend-breaking processing region, after the bend-breaking mechanism moves rearward in the front-rear direction toward the bend-breaking processing table, an end cutting line (scribe) is formed on the edge portion of the glass plate placed on the bend-breaking processing table by using the bend-breaking mechanism, and the edge portion of the glass plate extending to the outside of the contour cutout line is bend-broken.

The grinding processing region includes a grinding processing table having a second movement mechanism that moves in the width direction in a state in which the main body portion of the glass plate positioned after the bend-breaking processing is placed thereon, and a grinding mechanism that is movable in the front-rear direction. In the grinding processing table, a plurality of suckers (attraction pads) having a predetermined area for attracting and holding a lower surface of the main body portion of the glass plate are installed. In the grinding processing region, the main body portion of the glass plate is placed and fixed on the grinding processing table by the suckers, the grinding mechanism moves rearward in the front-rear direction toward the outside in the width direction of the edge of the main body portion of the glass plate placed on the grinding processing table, and then the grinding processing table moves in the width direction toward the grinding mechanism by the second movement mechanism, and a peripheral edge of the main body portion of the glass plate placed on the grinding processing table is ground by using the grinding mechanism. Note that the notching processing and the grinding processing are performed in synchronization.

### Citation List

### Patent Literature

Patent Literature 1: JP 2020 040877 A

### Summary of Invention

### Technical Problem

Note that, in a grinding device (chamfering device) for peripheral edges of various glass plates having different shapes that are processing targets, a method of processing a glass plate of which one surface is attracted and held by suckers by making a side surface (cylindrical portion) of a rotating disk-shaped grinding stone bite into the glass plate has been widely employed. In the grinding processing, it is important that the glass plate on attraction surfaces of the suckers, attracted and held by the suckers by the reaction force generated due to the "biting", does not sideslip (does not deviate). However, in the holding method using the suckers, a frictional force parallel to the glass surface (holding surface) is obtained by a force (attraction force) in which a differential pressure between the inside pressure and the outside pressure of the sucker reduced in pressure presses the glass surface perpendicularly to the holding surface. In a case of a small piece of glass, there is a problem in that an area itself for attraction and holding is small, and thus, an obtained frictional force is also limited, so that a processing speed cannot be maintained (when the glass plate is forcibly processed, the glass plate shifts and sideslips, and the glass plate positionally deviates, so that the glass plate cannot be finished into a glass plate having a predetermined shape of which a peripheral edge is ground as designed).

An object of the present invention is to provide a grinding processing system capable of firmly fixing a main body portion of a glass plate, and capable of grinding a peripheral edge of the main body portion while preventing sideslip (lateral deviation) of the main body portion of the glass plate in a case where the peripheral edge of the main body portion of the glass plate is ground by biting in of a side surface (cylindrical portion) of a rotating disk-shaped grinding stone of a grinding mechanism. Furthermore, an object of the present invention is to provide a grinding processing system capable of maintaining a grinding processing speed and finishing a glass plate to have a predetermined shape of which a peripheral edge is ground as designed.

### Solution to Problem

A premise of the present invention for solving the above problems is a grinding processing system that includes a grinding processing table on which a main body portion of a glass plate of which an edge portion is bend-broken through predetermined bend-breaking processing is placed, a table sucker having a predetermined area, which is installed on the grinding processing table and attracts and holds a lower surface of the main body portion of the glass plate, and a grinding mechanism, and that performs grinding processing on a peripheral edge of the main body portion of the glass plate placed and fixed on the grinding processing table by the table sucker by using the grinding mechanism.

A feature of the present invention in the above premise is that the grinding processing system includes a magnet placed on the table sucker and located immediately below the lower surface of the main body portion of the glass plate placed on the grinding processing table; a magnetic weight material having a predetermined weight and located on a side of an upper surface of the main body portion of the glass plate and attracted to the magnet; first fixing means for causing the table sucker to abut on the lower surface of the main body portion of the glass plate before starting of the grinding processing on the peripheral edge of the main body portion of the glass plate to attract and hold the lower surface of the main body portion; and second fixing means for causing the magnet located immediately below the lower surface of the main body portion and the magnetic weight material abutting on the upper surface of the main body portion and attracted to the magnet to sandwich the main body portion before starting of the grinding processing on the peripheral edge of the main body portion of the glass plate.

As an example of the present invention, the grinding processing system further includes a magnetic weight material holding mechanism located on the side of the upper surface of the main body portion of the glass plate, in which the grinding system includes first lowering means for lowering the magnetic weight material toward the upper surface of the main body portion in a state in which the magnetic weight material holding mechanism holds the magnetic weight material before starting of the grinding processing on the peripheral edge of the main body portion of the glass plate and placing the magnetic weight material immediately above the magnet to sandwich the main body portion, and first lifting means for causing the magnetic weight material holding mechanism to release holding of the magnetic weight material and lifting the magnetic weight material holding mechanism above the magnetic weight material after the magnetic weight material is placed immediately above the magnet by the first lowering means before starting of the grinding processing on the peripheral edge of the main body portion of the glass plate.

As another example of the present invention, grinding processing system further includes positioning means for causing the magnetic weight material holding mechanism to move in a front-rear direction to locate the magnetic weight material held by the magnetic weight material holding mechanism above the main body portion of the glass plate and at a center of the main body portion, in which the first lowering means lowers the magnetic weight material toward the upper surface of the main body portion after the magnetic weight material is located above the main body portion and at the center of the main body portion by the positioning means.

As still another example of the present invention, the grinding processing system further includes second lowering means for lowering the magnetic weight material holding mechanism toward the magnetic weight material to hold the magnetic weight material after the grinding processing on the peripheral edge of the main body portion of the glass plate is ended; and second lifting means for lifting the magnetic weight material holding mechanism upward from the upper surface of the main body portion of the glass plate in a state of holding the magnetic weight material after the second lowering means causes the magnetic weight material holding mechanism to hold the magnetic weight material after the grinding processing on the peripheral edge of the main body portion of the glass plate is ended, and releasing attraction of the magnetic weight material to the magnet.

As still another example of the present invention, the grinding processing system further includes a glass plate holder that is movable in a front-rear direction and an up-down direction and causes the main body portion of the glass plate on which the grinding processing is ended to move from the grinding processing table to a carry-out region; and a holder sucker that is installed in the glass plate holder and attracted to the upper surface of the main body portion of the glass plate, in which the magnetic weight material holding mechanism is installed in the glass plate holder.

As still another example of the present invention, the grinding processing further includes a lifting/lowering mechanism that is installed in the glass plate holder and individually lifts or lowers the magnetic weight material holding mechanism, in which in the second lifting means, the magnetic weight material holding mechanism holding the magnetic weight material is lifted by the lifting/lowering mechanism to release the attraction of the magnetic weight material to the magnet, and the grinding processing system further includes movement means for, after the magnetic weight material holding mechanism holding the magnetic weight material is lifted by the lifting/lowering mechanism, causing the glass plate holder to move in the front-rear direction to locate the holder sucker above the main body portion of the glass plate, after the holder sucker is located above the main body portion, lowering the glass plate holder such that the holder sucker is attracted to the upper surface of the main body portion of the glass plate, and, after the holder sucker is attracted to the upper surface of the main body portion, causing the main body portion of the glass plate to move to the carry-out region by causing the glass plate holder to move upward and forward.

As still another example of the present invention, the magnet has an attraction surface having a predetermined area facing the lower surface of the main body portion of the glass plate, and the attraction surface is located at a center of the table sucker having the predetermined area.

As still another example of the present invention, the magnet is a permanent magnet.

As still another example of the present invention, the permanent magnet is covered with an iron cap to form a yoke that induces a magnetic flux.

As still another example of the present invention, the magnetic weight material is made of any metal of iron, nickel, and cobalt, has a predetermined weight, and has a facing surface having a predetermined area facing the upper surface of the main body portion of the glass plate.

### Advantageous Effects of Invention

According to the grinding processing system related to the present invention, the table sucker abuts on the lower surface of the main body portion of the glass plate to attract and hold the lower surface of the main body portion before starting of the grinding processing on the peripheral edge of the main body portion of the glass plate, and the main body portion is sandwiched between the magnet located immediately below the lower surface of the main body portion and the magnetic weight material abutting on the upper surface of the main body portion and attracted to the magnet before starting of the grinding processing on the peripheral edge of the main body portion of the glass plate. Therefore, not only the main body portion of the glass plate is placed and fixed on the grinding processing table by the table sucker, but also the fixation of the main body portion of the glass plate to the grinding processing table is reinforced by sandwiching the main body portion of the glass plate between the magnet and the magnetic weight material attracted to the magnet. As a result, even for a small-size (small-area) glass plate having a small main body portion, the main body portion of the glass plate can be firmly fixed to the grinding processing table by the magnet and the magnetic weight material together with the table sucker. In the grinding processing system, in a case where the peripheral edge of the main body portion of the glass plate is ground by biting in of the side surface (cylindrical portion) of the rotating disk-shaped grinding stone of the grinding mechanism, it is possible to prevent sideslip (lateral deviation) of the main body portion of the glass plate in the grinding processing table, and can perform grinding processing on the peripheral edge of the main body portion in a state in which the main body portion of the glass plate is reliably fixed to the grinding processing table. The grinding processing system can maintain a grinding processing speed and finish a glass plate having a predetermined shape with a peripheral edge ground as designed.

The grinding processing system includes the magnetic weight material holding mechanism located on the upper surface side of the main body portion of the glass plate, the magnetic weight material is placed immediately above the magnet to sandwich the main body portion by lowering the magnetic weight material toward the upper surface of the main body portion in a state in which the magnetic weight material holding mechanism holds the magnetic weight material before starting of grinding processing on the peripheral edge of the main body portion of the glass plate, and after the magnetic weight material is placed immediately above the magnet before starting of grinding processing on the peripheral edge of the main body portion of the glass plate, the magnetic weight material holding mechanism releases holding of the magnetic weight material and is lifted above the magnetic weight material, the magnetic weight material is placed immediately above the magnet by lowering the magnetic weight material holding mechanism toward the upper surface of the main body portion before starting of grinding processing on the peripheral edge of the main body portion of the glass plate, and after the magnetic weight material is placed immediately above the magnet, the magnetic weight material holding mechanism releases the holding of the magnetic weight material and is lifted above the magnetic weight material. Therefore, the main body portion of the glass plate can be reliably sandwiched between the magnet and the magnetic weight material, and the fixation of the main body portion of the glass plate to the grinding processing table can be reinforced by the magnet and the magnetic weight material. As a result, even for a small-size (small-area) glass plate having a small main body portion, the main body portion can be firmly fixed to the grinding processing table. Since the grinding processing system reinforces the fixation of the main body portion of the glass plate to the grinding processing table with the magnet and the magnetic weight material, even if the peripheral edge of the main body portion of the glass plate is ground by biting in of the side surface (cylindrical portion) of the rotating disk-shaped grinding stone of the grinding mechanism, the main body portion of the glass plate in the grinding processing table does not sideslip (laterally deviation), and it is possible to perform grinding processing on the peripheral edge of the main body portion in a state in which the main body portion of the glass plate is reliably fixed to the grinding processing table.

In the grinding processing system, the magnetic weight material holding mechanism moves in the front-rear direction to locate the magnetic weight material held by the magnetic weight material holding mechanism above the main body portion of the glass plate and at the center of the main body portion, after the magnetic weight material is located above the main body portion and at the center of the main body portion, the magnetic weight material is lowered toward the upper surface of the main body portion, the magnetic weight material is lowered to the center of the main body portion, and the main body portion is sandwiched between the magnet located immediately below the lower surface of the main body portion at the center of the main body portion and the magnetic weight material abutting on the upper surface of the main body portion and attracted to the magnet. Therefore, the center of the main body portion of the glass plate can be reliably sandwiched between the magnet and the magnetic weight material, and fixation of the main body portion of the glass plate to the grinding processing table can be reinforced by the magnet and the magnetic weight material. As a result, even for a small-size (small-area) glass plate having a small main body portion, the main body portion can be firmly fixed to the grinding processing table.

In the grinding processing system, the magnetic weight material holding mechanism is lowered toward the magnetic weight material to hold the magnetic weight material after grinding processing on the peripheral edge of the main body portion of the glass plate is ended, and the magnetic weight material holding mechanism is lifted upward from the upper surface of the main body portion of the glass plate in a state of holding the magnetic weight material after the magnetic weight material holding mechanism holds the magnetic weight material and grinding processing on the peripheral edge of the main body portion of the glass plate is ended, and releases attraction of the magnetic weight material to the magnet. The magnetic weight material holding mechanism lowered toward the upper surface of the main body portion of the glass plate holds the magnetic weight material after grinding processing on the peripheral edge of the main body portion of the glass plate is ended, and the magnetic weight material holding mechanism holding the magnetic weight material is lifted upward from the upper surface of the main body portion releases attraction of the magnetic weight material to the magnet. Thus, it is possible to reliably release the sandwiching of the main body portion of the glass plate between the magnet and the magnetic weight material, and it is possible to convey the main body portion of the glass plate of which the peripheral edge has been subjected to grinding processing to the next carry-out region (processing end region). In the grinding processing system, after the grinding processing on the peripheral edge of the main body portion of the glass plate is ended, the engagement between the magnet and the magnetic weight material is released to convey the main body portion of the glass plate to the carry-out region, and the main body portion of the next glass plate not subjected to the grinding processing is placed and fixed on the grinding processing table to perform the grinding processing on the peripheral edge of the main body portion. Therefore, the grinding processing on the main body portion of the glass plate can be continuously performed, and a plurality of glass plates can be efficiently subjected to the grinding processing.

In the grinding processing system including the glass plate holder that is movable in the front-rear direction and the up-down direction and causes the main body portion of the glass plate on which grinding processing is ended to move from the grinding processing table to the carry-out region, and the holder sucker that is installed in the glass plate holder and attracted to the upper surface of the main body portion of the glass plate, the magnetic weight material holding mechanism is installed in the glass plate holder, before starting of the grinding processing on the peripheral edge of the main body portion of the glass plate, the magnetic weight material holding mechanism installed in the glass plate holder is lowered toward the upper surface of the main body portion and places the magnetic weight material immediately above the magnet, and after the magnetic weight material is placed immediately above the magnet, the magnetic weight material holding mechanism releases holding of the magnetic weight material and is lifted above the magnetic weight material. Therefore, the main body portion of the glass plate can be reliably sandwiched between the magnet and the magnetic weight material, and the fixation of the main body portion of the glass plate to the grinding processing table can be reinforced by the magnet and the magnetic weight material. As a result, even for a small-size (small-area) glass plate having a small main body portion, the main body portion can be firmly fixed to the grinding processing table. In the grinding processing system, after the grinding processing on the peripheral edge of the main body portion of the glass plate is ended, the magnetic weight material holding mechanism installed in the glass plate holder is lowered toward the upper surface of the main body portion of the glass plate to hold the magnetic weight material, and after the magnetic weight material is held, the magnetic weight material holding mechanism installed in the glass plate holder is lifted upward from the upper surface of the main body portion to release the attraction of the magnetic weight material to the magnet, so that it is possible to reliably release the sandwiching of the main body portion of the glass plate between the magnet and the magnetic weight material, and it is possible to convey the main body portion of the glass plate of which the peripheral edge has been subjected to the grinding processing to the next carry-in region (processing end region).

In the grinding processing system including the lifting/lowering mechanism that is installed in the glass plate holder and individually lifts or lowers the magnetic weight material holding mechanism, the magnetic weight material holding mechanism holding the magnetic weight material is lifted by the lifting/lowering mechanism to release attraction of the magnetic weight material to the magnet, after the magnetic weight material holding mechanism holding the magnetic weight material is lifted by the lifting/lowering mechanism, the glass plate holder moves in the front-rear direction to locate the holder sucker above the main body portion of the glass plate, after the holder sucker is located above the main body portion, the glass plate holder is lowered to attract the holder sucker to the upper surface of the main body portion of the glass plate, and after the holder sucker is attracted to the upper surface of the main body portion, and the glass plate holder moves upward and forward such that the main body portion of the glass plate moves to the carry-out region. Since the main body portion of the glass plate moves to the carry-out region through movement of the glass plate holder in a state in which the holder sucker is attracted to the upper surface of the main body portion of the glass plate subjected to the grinding processing, the main body portion of the glass plate of which the peripheral edge has been subjected to the grinding processing can be continuously conveyed to the carry-out region (processing end region).

In the grinding processing system in which the magnet has the attraction surface having a predetermined area facing the lower surface of the main body portion of the glass plate and the attraction surface is located at the center of the table sucker having a predetermined area, not only the main body portion of the glass plate is placed and fixed on the grinding processing table by the table sucker having the predetermined area, but also the main body portion of the glass plate is sandwiched between the magnet of which the attraction surface having the predetermined area is located at the center of the table sucker and the magnetic weight material attracted to the magnet. Therefore, the fixation of the main body portion of the glass plate to the grinding processing table can be reinforced by the magnet having the attraction surface having the predetermined area and the magnetic weight material, and the main body portion of the glass plate can be firmly fixed to the grinding processing table by the magnet having the attraction surface having the predetermined area and the magnetic weight material together with the table sucker. In the grinding processing system, in a case where the peripheral edge of the main body portion of the glass plate is subjected to grinding processing by biting in of the side surface (cylindrical portion) of the rotating disk-shaped grinding stone of the grinding mechanism, it is possible to prevent sideslip (lateral deviation) of the main body portion of the glass plate in the grinding processing table by using the magnet having the attraction surface having the predetermined area and the magnetic weight material together with the table sucker, and it is possible to perform grinding processing on the peripheral edge of the main body portion in a state in which the main body portion of the glass plate is reliably fixed to the grinding processing table.

In the grinding processing system in which the magnet is a permanent magnet, not only the main body portion of the glass plate is placed and fixed on the grinding processing table by the table sucker, but also the main body portion of the glass plate is sandwiched between the permanent magnet and the magnetic weight material attracted to the permanent magnet. Therefore, the fixation of the main body portion of the glass plate to the grinding processing table can be reinforced by the permanent magnet and the magnetic weight material, and the main body portion of the glass plate can be firmly fixed to the grinding processing table by the permanent magnet and the magnetic weight material together with the table sucker. In the grinding processing system, in a case where the peripheral edge of the main body portion of the glass plate is subjected to grinding processing by biting in of the side surface (cylindrical portion) of the rotating disk-shaped grinding stone of the grinding mechanism, it is possible to prevent sideslip (lateral deviation) of the main body portion of the glass plate in the grinding processing table by using the permanent magnet and the magnetic weight material together with the table sucker, and it is possible to perform grinding processing on the peripheral edge of the main body portion in a state in which the main body portion of the glass plate is reliably fixed to the grinding processing table.

In the grinding processing system in which the permanent magnet is covered with the iron cap to form the yoke that induces the magnetic flux, by forming the yoke that induces the magnetic flux to the permanent magnet with the iron cap, the attraction force of the permanent magnet can be increased. The main body portion of the glass plate is sandwiched between the permanent magnet covered with the iron cap and the magnetic weight material attracted to the permanent magnet, so that the fixation of the main body portion of the glass plate to the grinding processing table can be reinforced by the permanent magnet and the magnetic weight material, and the main body portion of the glass plate can be reliably fixed to the grinding processing table by the permanent magnet covered with the iron cap and the magnetic weight material together with the table sucker.

In the grinding processing system in which the magnetic weight material is made of any metal of iron, nickel, and cobalt and has a predetermined weight, and the magnetic weight material has a facing surface having a predetermined area facing the upper surface of the main body portion of the glass plate, the magnetic weight material is made of any metal of iron, nickel, and cobalt and is thus easily attracted to the magnet (a permanent magnet or an electromagnet), and the main body portion of the glass plate is sandwiched between the magnet of which the attraction surface having a predetermined area is located at the center of the sucker and the magnetic weight material having a predetermined weight attracted to the magnet, so that fixation of the main body portion of the glass plate to the grinding processing table can be reinforced by the magnet having the attraction surface having a predetermined area and the magnetic weight material having a predetermined weight made of any metal of nickel and cobalt, and the main body portion of the glass plate can be firmly fixed to the grinding processing table by the magnet and the magnetic weight material together with the table sucker. In the grinding processing system, in a case where the peripheral edge of the main body portion of the glass plate is subjected to grinding processing by biting in of the side surface (cylindrical portion) of the rotating disk-shaped grinding stone of the grinding mechanism, it is possible to prevent sideslip (lateral deviation) of the main body portion of the glass plate in the grinding processing table by using the magnet having the attraction surface having a predetermined area together with the sucker and the magnetic weight material having a predetermined weight made of any metal of nickel and cobalt, and it is possible to perform grinding processing on the peripheral edge of the main body portion in a state in which the main body portion of the glass plate is reliably fixed to the grinding processing table.

### Brief Description of Drawings

Fig. 1 is a side view of a glass plate processing system employing a grinding processing system.
Fig. 2 is a top view of the glass plate processing system using a grinding device (grinding mechanism).
Fig. 3 is a top view illustrating an example of a glass plate that is a processing target to be processed by the grinding processing system.
Fig. 4 is a front view illustrating an example of a fourth glass plate holder.
Fig. 5 is a side view illustrating an example of the fourth glass plate holder.
Fig. 6 is a plan view illustrating an example of the fourth glass plate holder.
Fig. 7 is a side view of a carry-in region.
Fig. 8 is a top view of the carry-in region.
Fig. 9 is a front view of the carry-in region.
Fig. 10 is a top view of a notching processing table and a grinding processing table.
Fig. 11 is a side view of the notching processing table and the grinding processing table.
Fig. 12 is a diagram for describing movement of the notching processing table and the grinding processing table.
Fig. 13 is a side view of a notching device as an example installed in a notching processing region.
Fig. 14 is a front view of the notching device.
Fig. 15 is a top view of the notching device.
Fig. 16 is a top view of a bend-breaking processing table.
Fig. 17 is a side view of the bend-breaking processing table.
Fig. 18 is a side view of a bend-breaking device.
Fig. 19 is a front view of the bend-breaking device.
Fig. 20 is a top view of the bend-breaking device.
Fig. 21 is an enlarged front view of the bend-breaking device.
Fig. 22 is an enlarged front view of the bend-breaking device.
Fig. 23 is a partially broken side view of first and second bend-breaking jigs.
Fig. 24 is a front view of first and second bend-breaking jigs.
Fig. 25 is a top view of the bend-breaking processing table illustrating a support device in an exposed state.
Fig. 26 is a front view of the bend-breaking processing table when the support device is viewed from the front.
Fig. 27 is a front view of a grinding device as an example installed in a grinding processing region.
Fig. 28 is a side view of the grinding device.
Fig. 29 is a top view of the grinding device.
Fig. 30 is a view illustrating an example of a change of a rolling direction of a bend-breaking cutter wheel.
Fig. 31 is a view illustrating another example of a change of the rolling direction of the bend-breaking cutter wheel.
Fig. 32 is a view illustrating still another example of a change of the rolling direction of the bend-breaking cutter wheel.
Fig. 33 is a view illustrating an example of a bend-breaking procedure in bend-breaking processing.

### Description of Embodiments

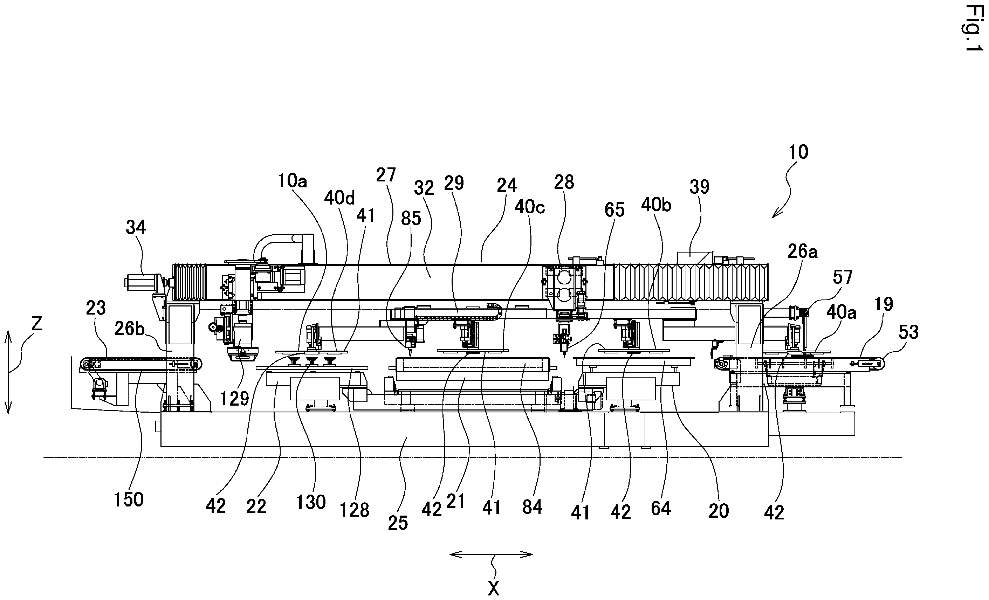

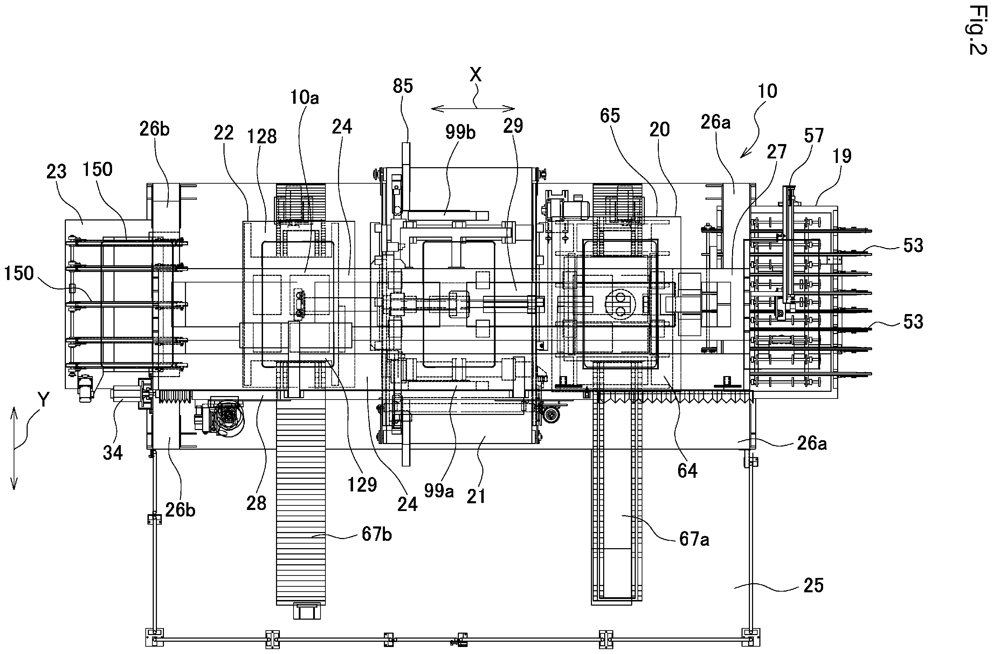

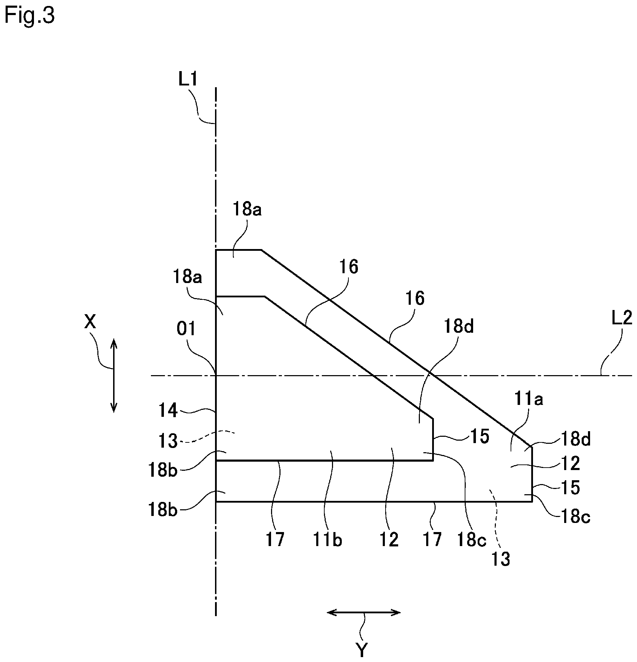

A grinding processing system (grinding processing method) according to the present invention will be described in detail below with reference to the accompanying drawings such as Fig. 1 which is a side view of a glass plate processing system 10 employing a bend-breaking system 10a. Fig. 2 is a top view of the glass plate processing system 10 using a grinding device 129 (grinding mechanism), and Fig. 3 is a top view illustrating an example of the glass plates 11a and 11b that are processing targets to be processed by the bend-breaking system 10a (glass plate processing system 10). In Fig. 3, the glass plates 11a and 11b are illustrated in a state of being positioned in the carry-in region 19. In Figs. 1 to 3, a front-rear direction (X-axis direction) is indicated by an arrow X, a width direction (Y-axis direction) is indicated by an arrow Y, and an up-down direction (Z-axis direction) is indicated by an arrow Z.

As illustrated in Fig. 3, each of the glass plates 11a and 11b (glass plates 11a and 11b before processing) that are processing targets to be processed in the glass plate processing system 10 has an upper surface 12 having a predetermined area and a lower surface 13 having a predetermined area, has a predetermined thickness, and is formed into a rectangle (quadrangle) of which a planar shape is long in the width direction. Each of the glass plates 11a and 11b that are processing targets has a first side edge 14 (one side edge) and a second side edge 15 (the other side edge) that face each other at a distance in the width direction and extend in the front-rear direction, a front end edge 16 and a rear end edge 17 that face each other at a distance in the front-rear direction and extend in the width direction, and first to fourth corner portions 18a to 18d. Note that a planar shape of the glass plate that is a processing target may be formed into a polygon other than a rectangle (quadrangle), and may be formed so that each edge of the glass plate is curved, and a shape of the glass plate includes any shape.

The glass plate processing system 10 performs notching processing, bend-breaking processing, and grinding processing on the glass plates 11a and 11b (plate-shaped glass) that are processing targets having different sizes in which the areas of the upper and lower surfaces 12 and 13 are different from each other, from the large-size (large-area) glass plate 11a having a large area of the upper surface 12 and the lower surface 13 to the small-size (small-area) glass plate 11b having a small area of the upper surface 12 and the lower surface 13. The glass plate processing system 10 is controlled by a controller (control device) (not illustrated).

The controller is a computer that includes a central processing unit (a CPU or an MPU) and a memory (a main memory and a cache memory) and is operated by an independent operating system (virtual OS), and has a large-capacity hard disk (mass storage region) built thereinto. An input device (not illustrated) such as a keyboard and a numeric keypad unit, and an output device (not illustrated) such as a monitor, a display, or a touch panel are connected to the controller.

In the large-capacity hard disk (large-capacity storage region) of the controller, a plurality of pieces of coordinate data (side edge coordinates and coordinates of front and rear end edges of the glass plates 11a and 11b, coordinates of the first to fourth corner portions 18a to 18d, coordinates of centers of the glass plates 11a and 11b, and the like) of the glass plates 11a and 11b, which are different depending on a name and a product number of each of the glass plates 11a and 11b that are processing targets, and a size (area) and a shape of each of the glass plates 11a and 11b that are processing targets, and image data (planar image (6-plane image) and stereoscopic image (3D image)) of the glass plates 11a and 11b that are processing targets are stored in association with glass plate specifying information (glass plate specifying identifier) for specifying the glass plates 11a and 11b. As the glass plate specifying information, production numbers, serial numbers, and the like of the glass plates 11a and 11b are used, and a controller generates a unique identifier for specifying the glass plates 11a and 11b, and the generated identifier can be used as the glass plate specifying information.

In the notching processing in the notching (cutting) processing region 20, the bend-breaking processing in the bend-breaking processing region 21, and the grinding processing in the grinding processing region 22, which will be described later, the controller NC-controls a notching device 65 (notching mechanism), a bend-breaking device 85 (bend-breaking mechanism), and a grinding device 129 (grinding mechanism), which will be described later, by using the coordinate data of the glass plates 11a and 11b stored in the large-capacity hard disk. In the NC control, the controller quantifies a position where coordinate processing (XY plane coordinates) is started and a change position of a processing direction by using the coordinates, and quantifies an operation direction, a distance, and a speed on two axes of the X axis (front-rear direction) and the Y axis (width direction). Signals obtained by quantifying the command coordinates and the axes are transmitted (input) to the notching device 65, the bend-breaking device 85, and the grinding device 129. In the NC control, a shape to be processed is accurately represented by repeating "coordinates → axis → command".

A glass plate processing system 10 includes a carry-in region 19 (processing start region) into which the glass plates 11a and 11b that are processing targets (before processing) are loaded; a carry-out region 23 (processing end region) from which the processed glass plates 11a and 11b are carried out; processing regions 20 to 22 which are disposed (installed) between the carry-in region 19 and the carry-out region 23 and in which the glass plates 11a and 11b are processed; and a conveyance mechanism 24 that sequentially conveys the glass plates 11a and 11b from the rear side (upstream) toward the front side (downstream) in the front-rear direction to the carry-in region 19, the processing regions 20 to 22, and the carry-out region 23, and causes the notching device 65 and the grinding device 129 to move in the front-rear direction. The processing regions 20 to 22 are arranged in the front-rear direction while facing each other at a distance therebetween in the front-rear direction between the carry-in region 19 and the carry-out region 23.

The processing regions 20 to 22 include a notching processing region 20 located forward (downstream) in the front-rear direction of the carry-in region 19 and separated forward from the carry-in region 19 by a predetermined dimension, a bend-breaking processing region 21 located forward (downstream) in the front-rear direction of the notching processing region 20 and separated forward from the notching processing region 20 by a predetermined dimension, and a grinding processing region 22 located forward (downstream) in the front-rear direction of the bend-breaking processing region 21 and separated forward from the bend-breaking processing region 21 by a predetermined dimension. The notching processing region 20, the bend-breaking processing region 21, and the grinding processing region 22 are formed on a system stand 25 (machine stand) formed in a rectangular shape elongated in the front-rear direction.

The conveyance mechanism 24 includes a pair of first pillars 26a located in a rear portion of the system stand 25 and extending in the up-down direction, a pair of second pillars 26b located in a front portion of the system stand 25 and extending in the up-down direction, a fixed frame 27 located between the first and second pillars 26a and 26b and extending in the front-rear direction, a first movement unit 28 (first movement means) installed on one side portion of the fixed frame 27, and a second movement unit 29 (second movement means) installed on a lower portion of the fixed frame 27.

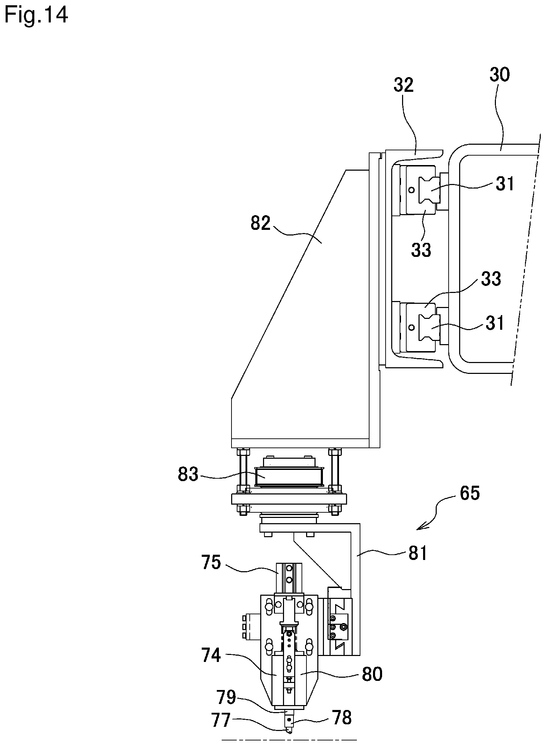

The first movement unit 28 causes the notching device 65 and the grinding device 129 to advance and retreat (linearly move) in the front-rear direction (X-axis direction). The first movement unit 28 includes a first guide frame 30, a pair of first guide rails 31, a first feed screw (ball screw) (not illustrated), a first traveling frame 32, a first slide block (housing nut) (not illustrated), a pair of first guide shoes 33, and a first servomotor 34 (see Fig. 14).

The first guide frame 30 is installed on the fixed frame 27 and extends in the front-rear direction. The first guide rails 31 are spaced apart from and face each other in the up-down direction, are coupled and fixed to one side portion of the first guide frame 30 by predetermined coupling means, and extend in the front-rear direction. The first feed screw (ball screw) is located between the first guide rails 31, is rotatably supported by a plurality of bearings (not illustrated) fixed to one side portion of the first guide frame 30, and extends in the front-rear direction.

The first traveling frame 32 is located on one side portion of the first guide frame 30 and extends in the front-rear direction. The first slide blocks (housing nuts) are arranged side by side at a predetermined interval in the front-rear direction, and are coupled and fixed to a facing surface of the first traveling frame 32 facing the first guide frame 30 by predetermined coupling means. The first guide shoes 33 face each other at a distance therebetween in the up-down direction, are coupled and fixed to the facing surface of the first traveling frame 32 facing the first guide frame 30 by predetermined coupling means, and extend in the front-rear direction.

The first servomotor 34 is located at the front end portion of the first guide frame 30 and is coupled to the second pillar 26b via a bracket. A shaft of the first servomotor 34 is coupled and fixed to the other end portion of the first feed screw. The first feed screw rotates due to rotation of the first servomotor 34, and the notching device 65 and the grinding device 129 advance and retreat (linearly move) in the front-rear direction (X-axis direction) due to rotation of the first feed screw.

When the shaft of the first servomotor 34 rotates in the counterclockwise direction, the first feed screw rotates in the counterclockwise direction, the first slide block moves in the front-rear direction from the front side to the rear side of the first guide frame 30 due to the rotation of the first feed screw in the counterclockwise direction, and the first traveling frame 32 moves in the front-rear direction from the front side to the rear side of the first guide frame 30 due to the movement of the first slide block. Conversely, when the shaft of the first servomotor 34 rotates in the clockwise direction, the first feed screw rotates in the clockwise direction, the first slide block moves in the front-rear direction from the rear side to the front side of the first guide frame 30 due to the rotation of the first feed screw in the clockwise direction, and the first traveling frame 32 moves in the front-rear direction from the rear side to the front side of the first guide frame 30 due to the movement of the first slide block.

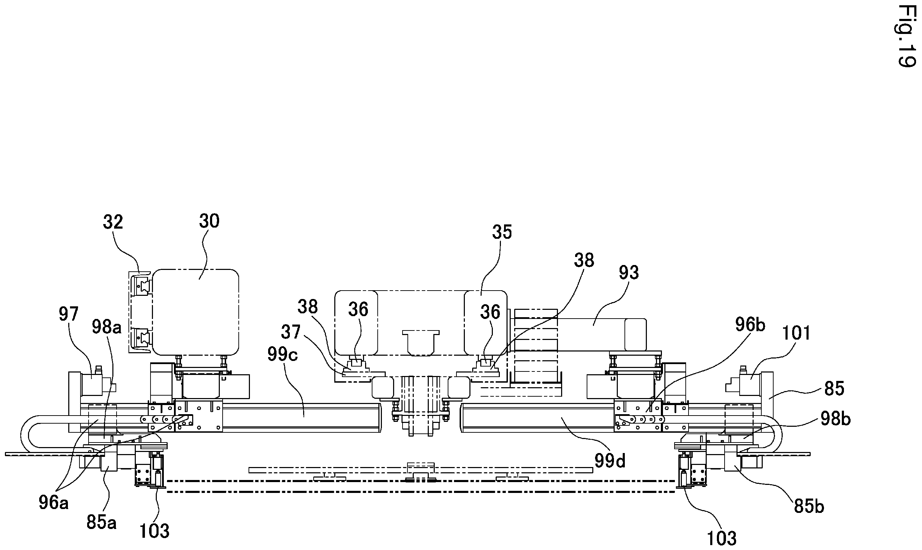

The second movement unit 29 causes first to fourth glass plate holders 40a to 40d that will be described later to advance and retreat (linearly move) in the front-rear direction (X-axis direction). The second movement unit 29 includes a second guide frame 35, a pair of second guide rails 36, a second feed screw (ball screw) (not illustrated), a second traveling frame 37, a second slide block (housing nut) (not illustrated), a pair of second guide shoes 38, a second servomotor 39, and first to fourth glass plate holders 40a to 40d (first to fourth glass plate lifters) (see Fig. 19).

The second guide frame 35 is installed on the fixed frame 27 and extends in the front-rear direction. The second guide rails 36 face each other at a distance therebetween in the width direction, are coupled and fixed to a lower portion of the second guide frame 35 by predetermined coupling means, and extend in the front-rear direction. The second feed screw (ball screw) is located between the second guide rails 36, is rotatably supported by a plurality of bearings (not illustrated) fixed to the lower portion of the second guide frame 35, and extends in the front-rear direction.

The second traveling frame 37 is located below the second guide frame 35 and extends in the front-rear direction. The second slide blocks (housing nuts) are arranged side by side at a predetermined interval in the width direction, and are coupled and fixed to the facing surface of the second traveling frame 37 facing the second guide frame 35 by predetermined coupling means. The second guide shoes 38 face each other at a distance therebetween in the width direction, are coupled and fixed to a facing surface of the second traveling frame 37 facing the second guide frame 35 by predetermined coupling means, and extend in the front-rear direction.

The second servomotor 39 is located at the rear end portion of the second guide frame 35 and is fixed to the fixed frame 27. The shaft of the second servomotor 39 is coupled and fixed to one end portion of the second feed screw via a timing belt (and/or a gear). The second feed screw rotates due to rotation of the second servomotor 39, and the first to fourth glass plate holders 40a to 40d advance and retreat (linearly move) in the front-rear direction (X-axis direction) due to rotation of the second feed screw.

When a shaft of the second servomotor 39 rotates in the clockwise direction, the second feed screw rotates in the clockwise direction, the second slide block moves in the front-rear direction from the rear side to the front side of the second guide frame 35 due to the rotation of the second feed screw in the clockwise direction, and the second traveling frame 37 (first to fourth glass plate holders 40a to 40d) moves in the front-rear direction from the rear side to the front side of the second guide frame 35 due to the movement of the second slide block. Conversely, when the shaft of the second servomotor 39 rotates in the counterclockwise direction, the second feed screw rotates in the counterclockwise direction, the second slide block moves in the front-rear direction from the front side to the rear side of the second guide frame 35 due to the rotation of the second feed screw in the counterclockwise direction, and the second traveling frame 37 (first to fourth glass plate holders 40a to 40d) moves in the front-rear direction from the front side to the rear side of the second guide frame 35 due to the movement of the second slide block. A control unit that controls start/stop, the number of rotations, and a rotation speed of the first and second servomotors 34 and 39 is connected to the controller via an interface (wired or wireless) (not illustrated).

The first to fourth glass plate holders 40a to 40d are attached to the lower portion of the second traveling frame 37, extend downward from the traveling frame 37, and are arranged to be spaced apart at equal intervals in the front-rear direction. The first to fourth glass plate holders 40a to 40d include a pad installation plate 41, a holder sucker 42 (attraction pad) that is installed at a central portion of the pad installation plate 41 and attracts and holds the upper surfaces 12 of the glass plates 11a and 11b, a vacuum mechanism (air suction device) (air vacuum pump) (not illustrated) that makes the holder sucker 42 have a negative pressure and causes the holder sucker 42 to develop an attraction force, and a holder lifting/lowering mechanism (lifting/lowering mechanism) that lifts or lowers the pad installation plate 41 (holder sucker 42) in the up-down direction.

The holder sucker 42 (attraction pad) is made of a rubber-based material such as nitrile rubber, natural rubber, or polyurethane rubber, and has a predetermined area. The holder lifting/lowering mechanism is driven by a servomotor (not illustrated). A control unit that controls start/stop of the vacuum mechanism (air vacuum pump) and the pad lifting/lowering mechanism (servomotor) is connected to the controller via an interface (wired or wireless) (not illustrated).

The first glass plate holder 40a reciprocates in the front-rear direction between the carry-in region 19 and the notching processing region 20, advances from the carry-in region 19 toward the notching processing region 20, and retreats from the notching processing region 20 toward the carry-in region 19. Further, the first glass plate holder 40a is caused to reciprocate (lifted or lowered) in the up-down direction in the carry-in region 19 and the notching processing region 20 by the holder lifting/lowering mechanism. The second glass plate holder 40b reciprocates in the front-rear direction between the notching processing region 20 and the bend-breaking processing region 21, advances from the notching processing region 20 toward the bend-breaking processing region 21, and retreats from the bend-breaking processing region 21 toward the notching processing region 20. Further, the second glass plate holder 40b is caused to reciprocate (lifted or lowered) in the up-down direction in the notching processing region 20 and the bend-breaking processing region 21 by the holder lifting/lowering mechanism.

The third glass plate holder 40c reciprocates in the front-rear direction between the bend-breaking processing region 21 and the grinding processing region 22, advances from the bend-breaking processing region 21 toward the grinding processing region 22, and retreats from the grinding processing region 22 toward the bend-breaking processing region 21. Further, the third glass plate holder 40c is caused to reciprocate (lifted or lowered) in the up-down direction in the bend-breaking processing region 21 and the grinding processing region 22 by the holder lifting/lowering mechanism. The fourth glass plate holder 40d reciprocates in the front-rear direction between the grinding processing region 22 and the carry-out region 23, advances from the grinding processing region 22 toward the carry-out region 23, and retreats from the carry-out region 23 toward the grinding processing region 22. Further, the fourth glass plate holder 40d is caused to reciprocate (lifted or lowered) in the up-down direction in the grinding processing region 22 and the carry-out region 23 by the holder lifting/lowering mechanism.

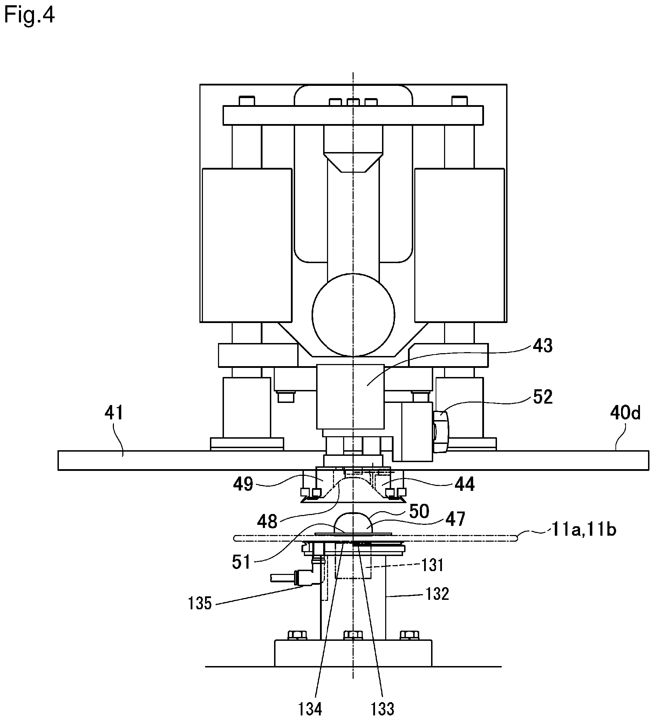

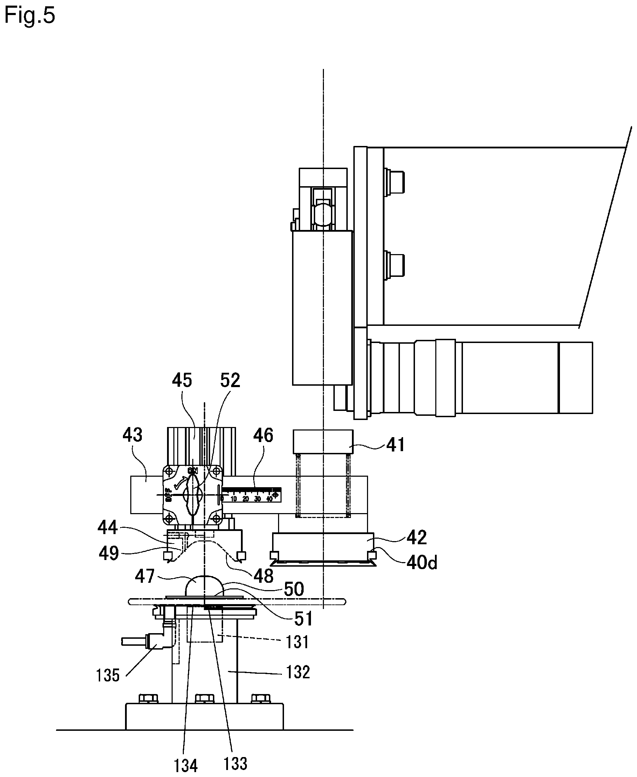

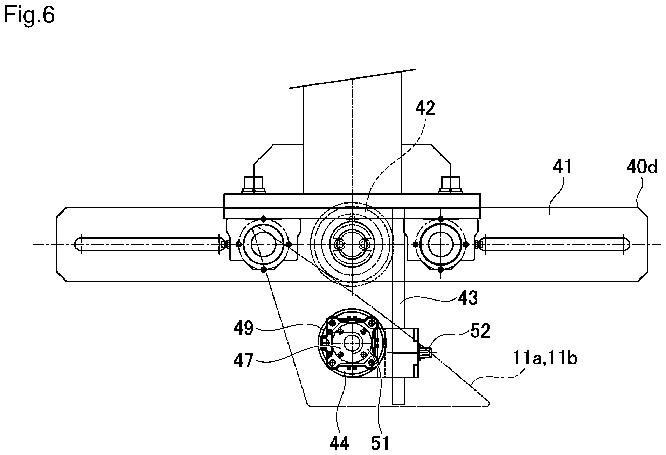

Fig. 4 is a front view illustrating an example of the fourth glass plate holder 40d, and Fig. 5 is a side view illustrating an example of the fourth glass plate holder 40d. Fig. 6 is a plan view illustrating an example of the fourth glass plate holder 40d. Fig. 5 illustrates a state in which a magnetic weight material 47 is placed at the center of main body portions 66a of the glass plates 11a and 11b.

The fourth glass plate holder 40d is provided with a slide rod 43 located substantially at the center thereof and extending in the front-rear direction, a magnetic weight material holding mechanism 44 attached to the slide rod 43 and slidable (movable) in the front-rear direction, and a lifting/lowering mechanism 45 that lifts or lowers only the magnetic weight material holding mechanism 44 in the up-down direction. As illustrated in Fig. 5, a memory 46 extending in the front-rear direction is presented on a surface of the slide rod 43.

The magnetic weight material holding mechanism 44 includes the magnetic weight material 47, a magnetic weight material holding sucker 49 including an attraction holding surface 48 that attracts and holds the magnetic weight material 47, a vacuum mechanism (air suction device) (air vacuum pump) (not illustrated) that causes the attraction holding surface 48 of the magnetic weight material holding sucker 49 to have a negative pressure and causes the magnetic weight material holding sucker 49 to develop an attraction force, and a clamp mechanism (not illustrated) that fixes the magnetic weight material holding mechanism 44 (magnetic weight material holding sucker 49) to the slide rod 43 and releases the fixation of the magnetic weight material holding mechanism 44 (magnetic weight material holding sucker 49) to the slide rod 43. An air cylinder is used for the lifting/lowering mechanism 45. A control unit that controls start/stop of the magnetic weight material holding mechanism 44 (air vacuum pump) and the lifting/lowering mechanism 45 (air cylinder) is connected to the controller via an interface (wired or wireless) (not illustrated).

The magnetic weight material 47 is a three-dimensional object formed in a hemispherical shape and having a predetermined volume, and has an attraction surface 50 detachably attracted to the attraction holding surface 48 of the magnetic weight material holding sucker 49 and a facing surface 51 (pressing surface) located below the attraction surface 50. The attraction surface 50 has an arc to protrude upward from the facing surface 51 (pressing surface). The facing surface 51 is a flat surface having a circular shape and having a predetermined area flat in the horizontal direction. The magnetic weight material 47 is made of any metal of iron, nickel, and cobalt and has a predetermined weight. In the magnetic weight material 47, substantially the entire area of the attraction surface 50 is attracted and held on the attraction holding surface 48 of the magnetic weight material holding sucker 49. The weight of the magnetic weight material 47 is in a range of 120 to 150 g, and preferably in a range of 130 to 140 g.

The magnetic weight material holding sucker 49 is made of a rubber-based material such as nitrile rubber, natural rubber, or polyurethane rubber. The attraction holding surface 48 of the magnetic weight material holding sucker 49 is formed in a hemispherical shape that protrudes upward, and made to have a negative pressure due to the start of the air vacuum pump to develop an attraction force, and the attraction force disappears due to the stop of the air vacuum pump. In the fourth glass plate holder 40d, by causing a handle coupled to the clamp mechanism to rotate counterclockwise and aligning the handle 52 with an OFF position, the fixation of the magnetic weight material holding mechanism 44 (magnetic weight material holding sucker 49) to the slide rod 43 is released, and the magnetic weight material holding mechanism 44 can be slid (moved) forward or rearward in the front-rear direction along the slide rod 43.

In the fourth glass plate holder 40d, in order to place the magnetic weight material 47 at the center of the main body portions 66a of the glass plates 11a and 11b, the position of the magnetic weight material holding mechanism 44 (magnetic weight material holding sucker 49) with respect to the slide rod 43 is adjusted according to a size (area) of the main body portions 66a of the glass plates 11a and 11b. The handle 52 is aligned with the OFF position, and the magnetic weight material holding mechanism 44 (magnetic weight material holding sucker 49) is slid (moved) forward or rearward in the front-rear direction to determine the position of the magnetic weight material holding mechanism 44 with respect to the slide rod 43. Then, the handle 52 rotates clockwise to align the handle 52 with an ON position, and the magnetic weight material holding mechanism 44 (magnetic weight material holding sucker 49) is fixed to the slide rod 43. Note that once the position of the magnetic weight material holding mechanism 44 (magnetic weight material holding sucker 49) with respect to the slide rod 43 is adjusted unless the size (area) of the main body portion 66a is changed, no subsequent adjustment is performed.

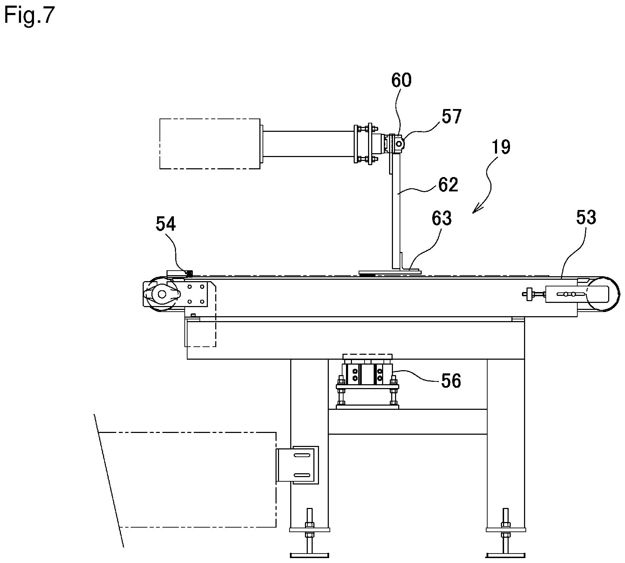

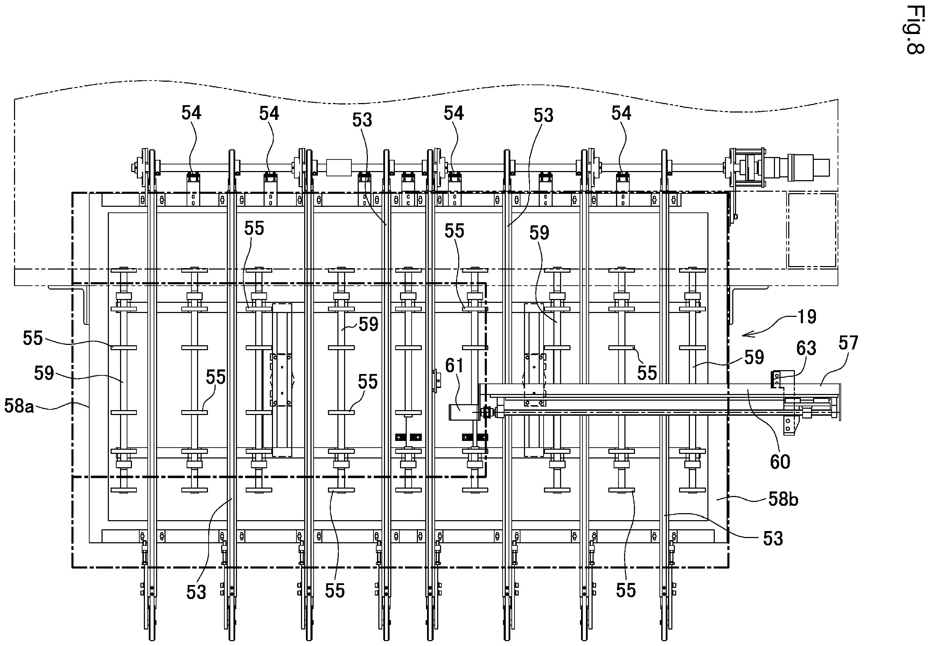

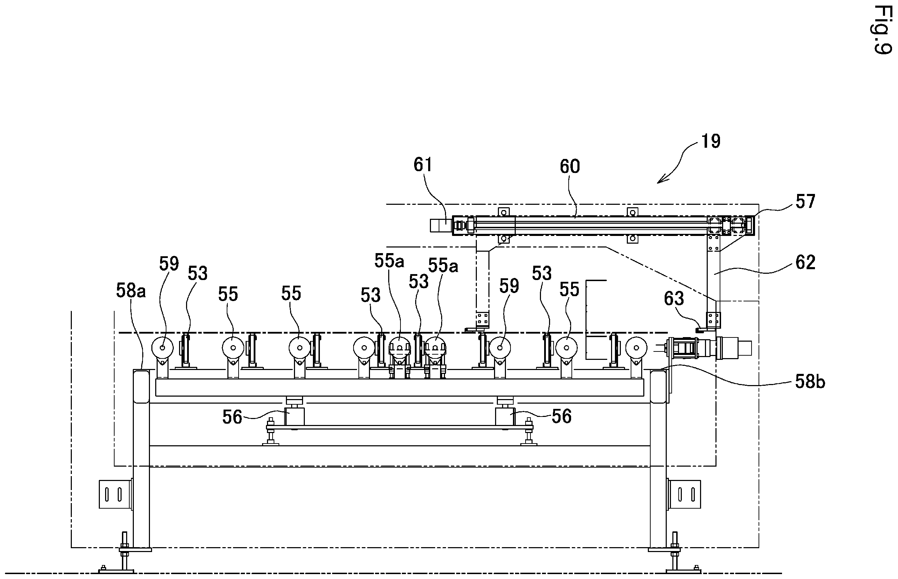

Fig. 7 is a side view of the carry-in region 19, and Fig. 8 is a top view of the carry-in region 19. Fig. 9 is a front view of the carry-in region 19. The carry-in region 19 includes a carry-in conveyor 53, a stopper 54, a roller 55, a pair of roller lifting/lowering mechanisms 56, and a movement mechanism 57. The carry-in region 19 is supported by legs (supports) extending upward from a floor surface of the system stand 25. In the carry-in region 19, first positioning means (first positioning step) and second positioning means (second positioning step) are performed to position the glass plates 11a and 11b to be sent to each of the processing regions 20 to 22.

A first positioning reference L1 (virtual first positioning reference line) extending in the front-rear direction and a second positioning reference L2 (virtual second positioning reference line) extending in the width direction are set in one side edge portion 58a of the carry-in region 19. The first positioning reference L1 is a virtual line linearly extending in the front-rear direction, which is assumed on the basis of the outermost edge located on the outermost side in the width direction among the first side edges 14 extending in the front-rear direction on one side of the large-size (large-area) glass plate 11a (the glass plate 11a to be processed first) in the width direction. For example, in a case where the first side edge 14 (one side edge) of each of the glass plates 11a and 11b is curved, the outermost edge is a vertex of a curve located most outward in the width direction. In a case where the first side edge 14 (one side edge) of each of the glass plates 11a and 11b extends straight in the front-rear direction, the side edge 14 is the outermost edge.

At the first positioning reference L1, the outermost edge located on the outermost side in the width direction among the first side edges 14 (one side edge) extending in the front-rear direction on one side in the width direction of the glass plates 11a and 11b is located. Here, the outermost edge being located at the first positioning reference L1 includes not only a case where the outermost edge completely matches the first positioning reference L1, but also a case where the outermost edge is located in the vicinity (nearest) of the inside of the first positioning reference L1 in the width direction, or a case where the outermost edge is located in the vicinity (nearest) of the outside of the first positioning reference L1 in the width direction.

At the second positioning reference L2, a front-rear direction center O1 (a center line L2 extending in the width direction by dividing the dimension of the glass plates 11a and 11b in the front-rear direction by 2) of the first side edge 14 (one side edge) extending in the front-rear direction on one side in the width direction of the glass plates 11a and 11b is located. Here, the front-rear direction center O1 (center line L2) being located at the second positioning reference L2 includes not only a case where the front-rear direction center O1 (center line L2) completely matches the second positioning reference L2, but also a case where the front-rear direction center O1 (center line L2) is located in the vicinity (nearest) of the front of the second positioning reference L2 in the front-rear direction, or a case where the front-rear direction center O1 (center line L2) is located in the vicinity (nearest) of the rear of the second positioning reference L2 in the front-rear direction.

The controller (glass plate processing system 10) calculates a dimension of each of the glass plates 11a and 11b in the width direction by using the coordinate data of each of the glass plates 11a and 11b stored in the large-capacity hard disk, determines a first movement dimension (first movement distance) in the width direction for locating the first side edge 14 (one side edge) of each of the glass plates 11a and 11b at the first positioning reference L1 (virtual first positioning reference line) according to a difference in the calculated dimension of each of the glass plates 11a and 11b in the width direction (Y-axis direction), and determines the number of rotations (the number of rotations of the shaft for causing the glass plates 11a and 11b to move by the first movement dimension (first movement distance) in the width direction) of the shaft of the third servomotor 61 that will be described later on the basis of the determined first movement dimension. The controller (glass plate processing system 10) stores the determined first movement dimension and the determined number of rotations of the shaft of the third servomotor 61 in the large-capacity hard disk in association with the glass plate specifying information (glass plate specifying identifier) of each of the glass plates 11a and 11b.

The controller (glass plate processing system 10) calculates the dimension of each of the glass plates 11a and 11b in the front-rear direction (X-axis direction) by using the coordinate data of each of the glass plates 11a and 11b stored in the large-capacity hard disk, and determines a second movement dimension of the carry-in conveyor 53 toward the rear side in the front-rear direction for locating the front-rear direction center O1 of one side edge 14 of each of the glass plates 11a and 11b at the second positioning reference L2 (virtual second positioning reference line) according to the difference in the calculated dimension of each of the glass plates 11a and 11b in the front-rear direction. The controller (glass plate processing system 10) stores the determined second movement dimension in the large-capacity hard disk in association with the glass plate specifying information (glass plate specifying identifier) of each of the glass plates 11a and 11b.

The controller (glass plate processing system 10) calculates a movement dimension (movement distance) of the notching device 65 and the grinding device 129 in the front-rear direction on the basis of the calculated dimension of each of the glass plates 11a and 11b in the front-rear direction, and determines the number of rotations, (the number of rotations of the shaft for causing the notching device 65 and the grinding device 129 to move in the front-rear direction by the movement dimension (movement distance)) of the shaft of the first servomotor 34 on the basis of the calculated movement dimension. The controller (glass plate processing system 10) stores the determined movement dimension and the determined number of rotations of the shaft of the first servomotor 34 in the large-capacity hard disk in association with the glass plate specifying information (glass plate specifying identifier) of each of the glass plates 11a and 11b.

As illustrated in Figs. 7 to 9, the carry-in conveyor 53 is a plurality of endless tracks extending in the front-rear direction (X direction), which are arranged to be spaced apart at predetermined intervals in the width direction (Y direction). A control unit that controls start/stop and a conveyance distance of the carry-in conveyor 53 is connected to the controller via an interface (wired or wireless) (not illustrated). The carry-in conveyor 53 conveys the glass plates 11a and 1b from the rear side to the front side in the front-rear direction from the rear end portion (carry-in port) toward the front end portion (carry-out port) of the carry-in region 19. The stoppers 54 are provided at the front end portion of the carry-in region 19 and are arranged to be spaced apart in the width direction. The front end edges 16 of the glass plates 11a and 11b to be caused to move forward from the rear end portion toward the front end portion of the carry-in region 19 by the carry-in conveyors 53 abut on the stoppers 54. The stopper 54 is provided with a contact sensor (not illustrated). The contact sensor is connected to the controller, detects abutting (contact) of the front end edge 16 of each of the glass plates 11a and 11b on the stopper 54, and transmits an abutting signal to the controller when the front end edge 16 abuts on the stopper 54.

The plurality of rollers 55 are rotatably attached to shafts 59 extending in the front-rear direction, or the plurality of rollers are attached to the shafts 59 extending in the front-rear direction and are rotated together with the shafts 59. The rollers 55 are installed between the carry-in conveyors 53 together with the shafts 59. The rollers 55 are arranged to be spaced apart by a predetermined dimension in the front-rear direction and are also arranged to be spaced apart by a predetermined dimension in the width direction. The rollers 55 are rotated clockwise and counterclockwise in the width direction, and abut on the lower surface 13 of the glass plate 11a and 11b to hold the glass plates 11a and 11b to be movable in the width direction. The shafts 59 are attached to a pedestal located below the shafts via bearings.

A resistance plate (rubber ring) (not illustrated) that increases the rotation resistance of a roller 55a of the rollers 55 is attached between the roller 55a and the shaft 59. In the roller 55a, resistance with the shaft 59 is increased by the resistance plate (rubber ring), the roller 55a is not rotated unless a rotational force exceeding the rotational resistance is applied to the roller 55a, and free rotation of the roller 55a is prevented by the resistance plate. When the glass plates 11a and 11b are placed on the rollers 55, free movement of the glass plates 11a and 11b in the width direction is prevented by the roller 55a having a large rotation resistance. Note that a resistance plate (rubber ring) may be attached between at least one of the rollers 55 and the shaft 59.

The roller lifting/lowering mechanisms 56 are installed below the pedestal to which the shaft 59 is attached, and are arranged to be spaced apart by a predetermined dimension in the width direction. Air cylinders are used for the roller lifting/lowering mechanisms 56, and the shafts 59 and the rollers 55 are lifted and lowered in the up-down direction together with the pedestal by the roller lifting/lowering mechanisms 56 (air cylinders). A lifting dimension and a lowering dimension of the roller lifting/lowering mechanisms 56 (air cylinders) are set in advance. A control unit that controls start/stop of the roller lifting/lowering mechanism 56 (air cylinder) is connected to the controller via an interface (wired or wireless) (not illustrated). When receiving a lifting/lowering signal from the controller, the control unit of the roller lifting/lowering mechanism 56 (air cylinder) lifts and lowers the roller 55 (the pedestal and the shaft 59) by using the roller lifting/lowering mechanism 56.

While the carry-in conveyors 53 are conveying the glass plates 11a and 11b, the rollers 55 (the pedestal and the shafts 59) are lowered below the carry-in conveyor 53 by the roller lifting/lowering mechanisms 56 (air cylinders), and the rollers 55 do not abut on the lower surfaces 13 of the glass plates 11a and 11b. When the rollers 55 (the pedestal and the shafts 59) are lifted by the roller lifting/lowering mechanisms 56 (air cylinders), parts of the peripheral edge portions of the rollers 55 are exposed to the upper side of the carry-in conveyors 53, and the glass plates 11a and 11b are lifted up to the upper side of the carry-in conveyors 53 by the rollers 55.

The movement mechanism 57 includes a rod 60 located above the carry-in conveyors 53 and the rollers 55, a third servomotor 61 installed (built in) in the rod 60, a feed screw (feed screw mechanism) (not illustrated) installed (built in) in the rod 60 and coupled to a shaft of the third servomotor 61, a movement arm 62 extending downward from the rod 60, and an abutting member 63 installed at a lower end portion of the movement arm 62.

The rod 60 is attached to the rear surface of the first pillar 26a and extends in the width direction. The movement arm 62 is movably installed on the feed screw, and linearly moves to one side and the other side in the width direction along the rod 60 through the rotation of the feed screw due to the rotation of the shaft of the third servomotor 61. The abutting member 63 linearly moves to one side and the other side in the width direction together with the movement arm 62 according to the movement of the movement arm 62 in the width direction. The abutting member 63 abuts on the other side edge 15 of the glass plates 11a and 11b in a state in which the roller 55 lifted by the roller lifting/lowering mechanism 56 (air cylinder) abuts on the lower surfaces 13 of the glass plates 11a and 11b, and presses the glass plates 11a and 11b in the width direction so that the glass plates 11a and 11b move in the width direction. A control unit that controls start/stop, the number of rotations, and a rotation speed of the third servomotor 61 is connected to the controller via an interface (wired or wireless) (not illustrated).

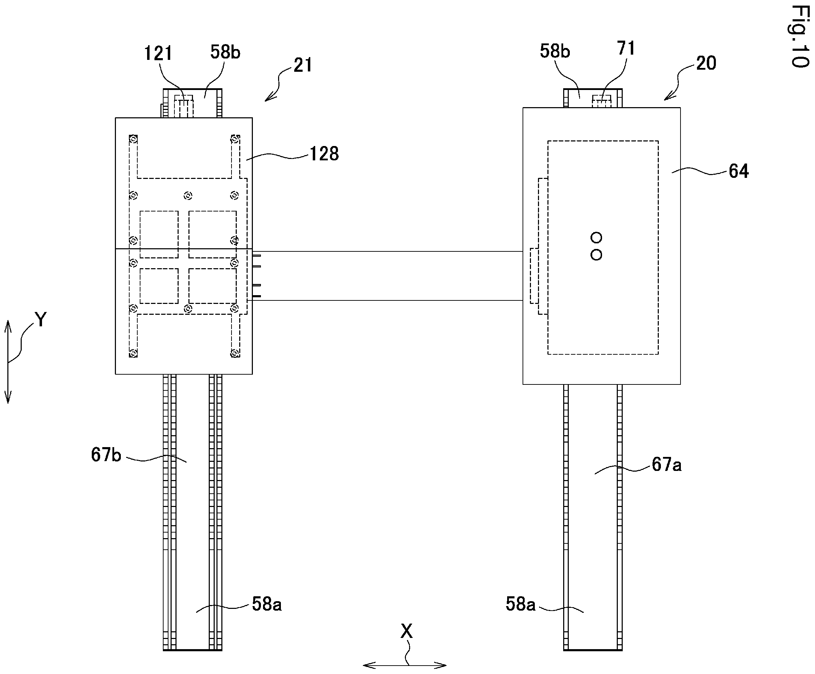

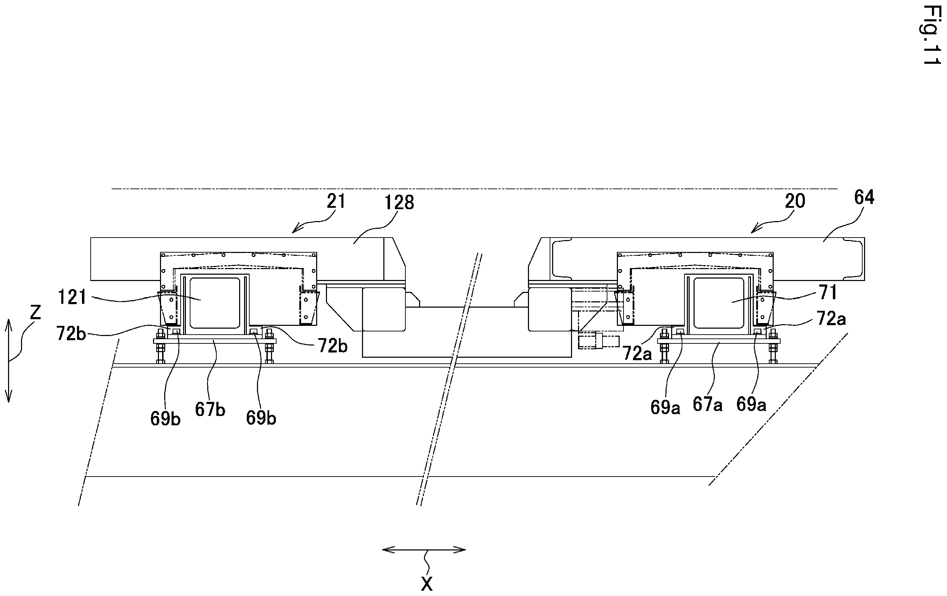

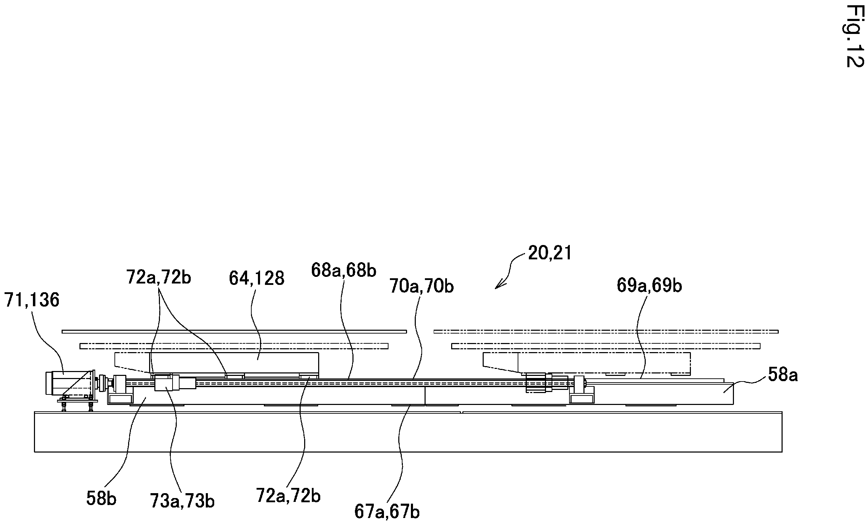

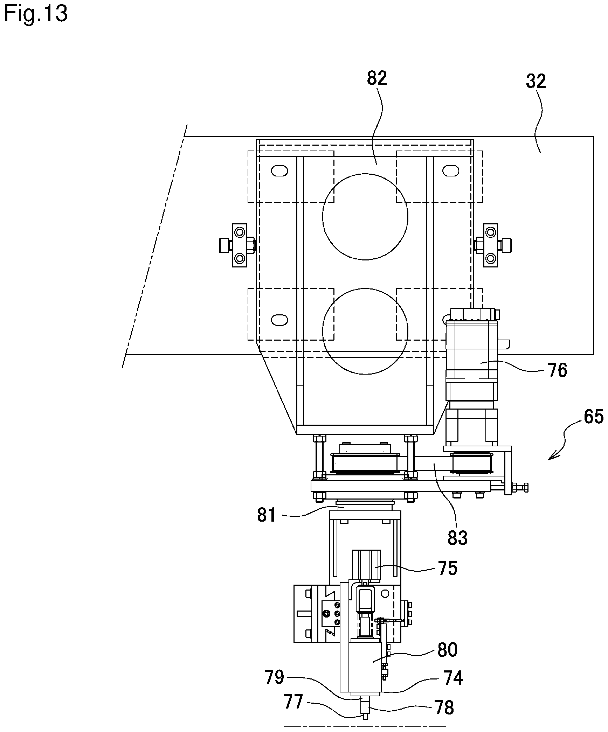

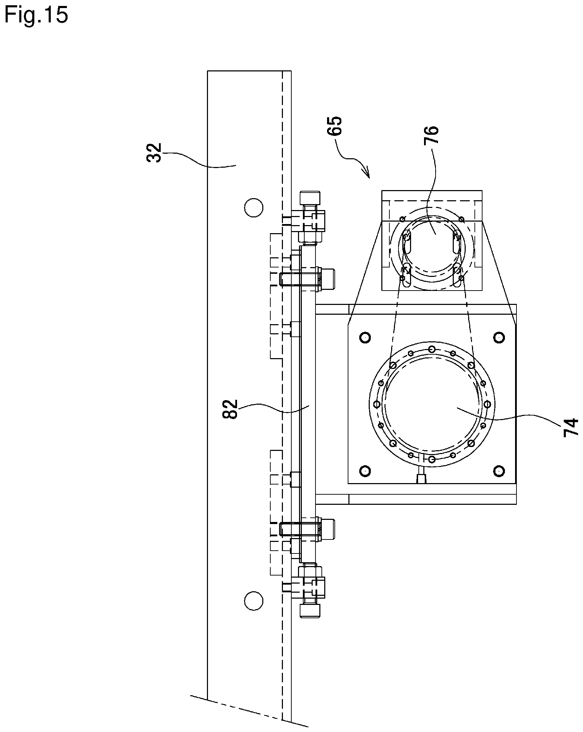

Fig. 10 is a top view of the notching processing table 64 and the grinding processing table 128, and Fig. 11 is a side view of the notching processing table 64 and the grinding processing table 128. Fig. 12 is a view for describing the movement of the notching processing table 64 and the grinding processing table 128, and Fig. 13 is a side view of the notching device 65 installed in the notching processing region 20 as an example. Fig. 14 is a front view of the notching device 65, and Fig. 15 is a top view of the notching device 65. In Figs. 10 and 11, the front-rear direction (X-axis direction) is indicated by an arrow X, the width direction (Y-axis direction) is indicated by an arrow Y, and the up-down direction (Z-axis direction) is indicated by an arrow Z.

The notching processing region 20 includes a notching processing table 64 (notching processing stand) on which the glass plates 11a and 11b positioned in the carry-in region 19 are placed, and a notching device 65 (cutting device) that puts a contour cutout line K1 (notching line) into the edge portions 66b (peripheral edge portions) of the glass plates 11a and 11b placed on the notching processing table 64.

The notching processing table 64 is installed on a base lane 67a that is fixed to the floor surface of the system stand 25 and is long in the width direction. The notching processing table 64 moves in the width direction by using the first movement mechanism 68a in a state in which the positioned glass plates 11a and 11b are placed thereon. The first movement mechanism 68a includes traveling guide rails 69a, a feed screw 70a (ball screw), a fourth servomotor 71, guide shoes 72a, and a slide block 73a (housing nut).

These traveling guide rails 69a are installed on the upper surface of the base lane 67a and extend in the width direction. The feed screw 70a (ball screw) is installed on the upper surface of the base lane 67a and on the side of the traveling guide rails 69a, and extends in the width direction. The fourth servomotor 71 is installed in the base lane 67a and causes the notching processing table 64 to reciprocate in the width direction. The other end portion of the feed screw 70a is coupled to the shaft of the fourth servomotor 71.

The feed screw 70a is rotatably supported by a bearing (not illustrated) fixed to the base lane 67a. The guide shoes 72a are attached to the lower surface of the notching processing table 64 and extend in the width direction. The guide shoes 72a are slidably fitted to the traveling guide rail 69a. The slide block 73a (housing nut) is attached to the lower surface of the notching processing table 64 and between the guide shoes 72a. The slide block 73a is rotatably screwed to the feed screw 70a.

When the shaft of the fourth servomotor 71 rotates in the clockwise direction, the feed screw 70a rotates in the clockwise direction, the slide block 73a moves in the width direction from the second side edge portion 58b (the other side edge) of the notching processing region 20 toward the first side edge portion 58a (one side edge) due to the rotation of the feed screw 70a in the clockwise direction, and the notching processing table 64 moves in the width direction from the second side edge portion 58b of the notching processing region 20 toward the first side edge portion 58a due to the movement of the slide block 73a. Conversely, when the shaft of the fourth servomotor 71 rotates in the counterclockwise direction, the feed screw 70a rotates in the counterclockwise direction, the slide block 73a moves in the width direction from the first side edge portion 58a (one side edge portion) of the notching processing region 20 toward the second side edge portion 58b (the other side edge portion) due to the rotation of the feed screw 70a in the counterclockwise direction, and the notching processing table 64 moves in the width direction from the first side edge portion 58a toward the second side edge portion 58b of the notching processing region 20 due to the movement of the slide block 73a.

The notching device 65 includes a notching jig 74, an air cylinder 75, and a fifth servomotor 76. The notching jig 74 includes a notching cutter wheel 77, a notching cutter holder 78 (notching holder), a cutter lifting/lowering shaft 79, and a cutter lifting/lowering guide 80. The notching cutter wheel 77 is coupled to the notching cutter holder 78 via a bearing (not illustrated), and freely rotates along an axis of the interposed bearing. The notching cutter wheel 77 forms a contour cutout line K1 at the edge portions 66b (peripheral edge portions) of the glass plates 11a and 11b.

The notching cutter holder 78 is located immediately above the notching cutter wheel 77 and coupled to the cutter wheel 77 to support the cutter wheel 77. The cutter lifting/lowering shaft 79 is located directly above the notching cutter holder 78 and coupled to the cutter holder 78 to support the cutter holder 78. The cutter lifting/lowering guide 80 is located immediately above the cutter lifting/lowering shaft 79 and coupled to the cutter lifting/lowering shaft 79 to support the cutter lifting/lowering shaft 79. The notching jig 74 (including the air cylinder 75) is coupled to a support shaft 81 that is located immediately above the air cylinder 75 and rotatably supports the notching jig 74. The support shaft 81 is attached to a bracket 82 located immediately above the support shaft. The bracket 82 (notching device 65) is coupled to the first movement unit 28 of the conveyance mechanism 24 that advances and retreats (linearly moves) in the front-rear direction (X-axis direction).

The air cylinder 75 is installed immediately above the cutter lifting/lowering shaft 79. The air cylinder 75 lifts and lowers (up-down movement) the notching cutter wheel 77 (notching cutter holder 78) in the up-down direction (Z-axis direction), and lowers the cutter wheel 77 toward the upper surfaces 12 of the glass plates 11a and 11b to apply (add) a notching pressure (downward pressing force) to the cutter wheel 77 at the time of forming the contour cutout line K1 (notching line) on the edge portions 66b of the glass plates 11a and 11b. The shaft of the fifth servomotor 76 is coupled to the support shaft 81 via a timing belt 83. The fifth servomotor 76 adjusts an orientation of the notching jig 74 (notching cutter wheel 77) (an angle around the axis orthogonal to the XY plane) in the notching direction.

In the notching device 65, a control unit of the fifth servomotor 76 causes the shaft of the motor 76 to rotate on the basis of an NC control signal transmitted from the controller, NC-controls the notching jig 74 (notching cutter wheel 77), and the notching jig 74 (notching cutter wheel 77) forms (inserts) the contour cutout line K1 (notching line) of a shape desired to be processed into the edge portions 66b (peripheral edge portions) of the glass plates 11a and 11b according to the NC-control. The control unit that controls start/stop, the number of rotations, and a rotation speed of the fourth and fifth servomotors 71 and 76 is connected to the controller via an interface (wired or wireless) (not illustrated).

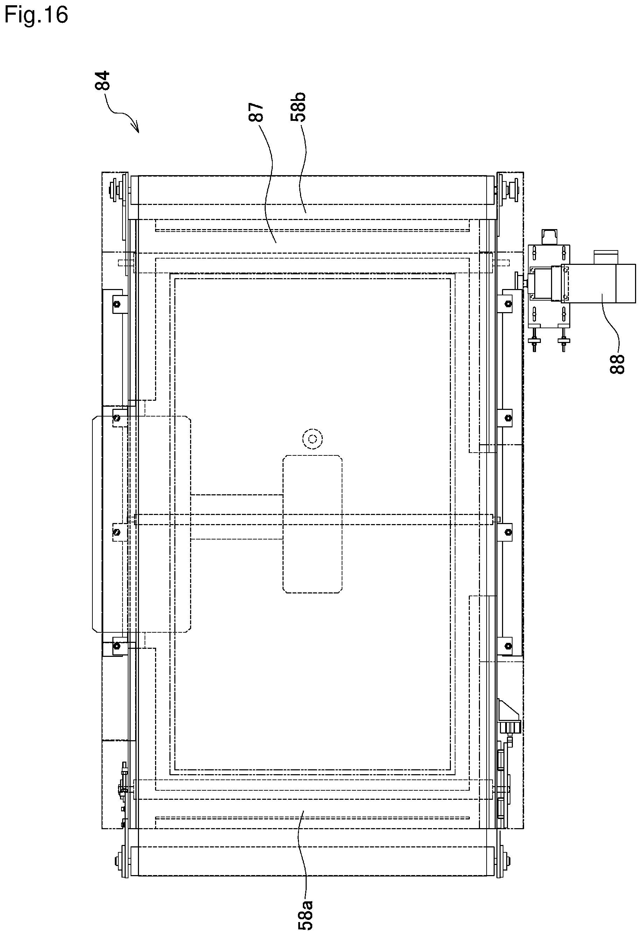

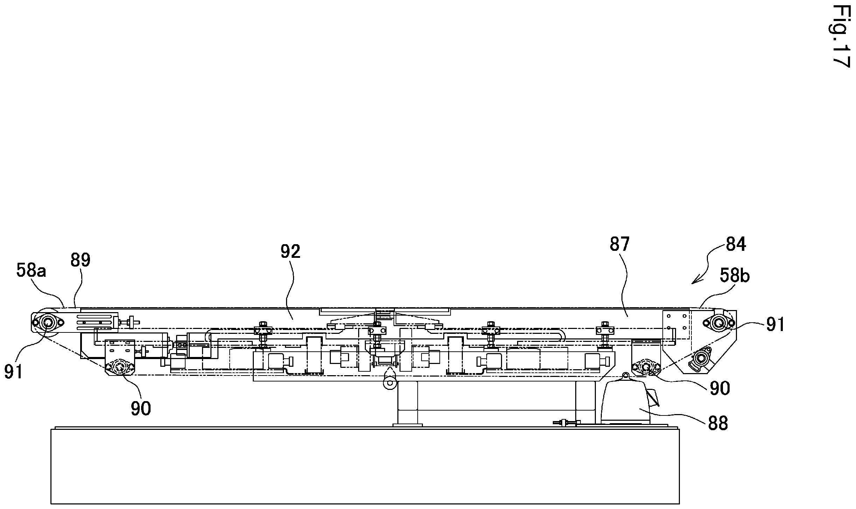

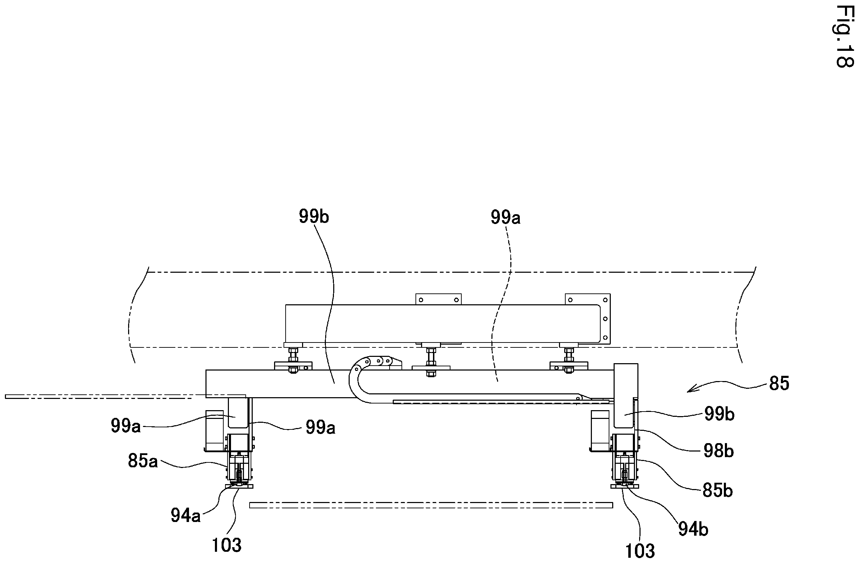

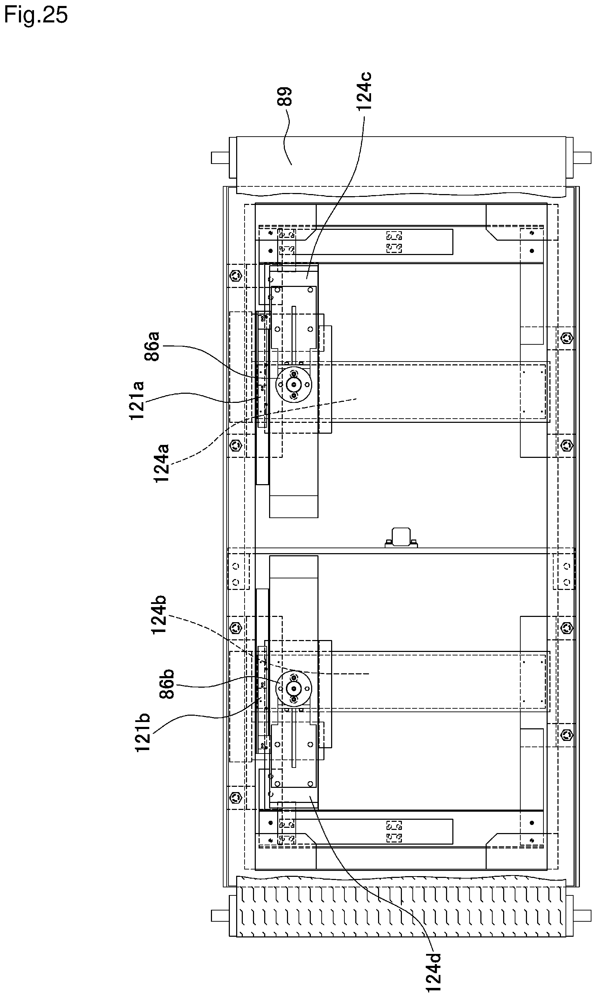

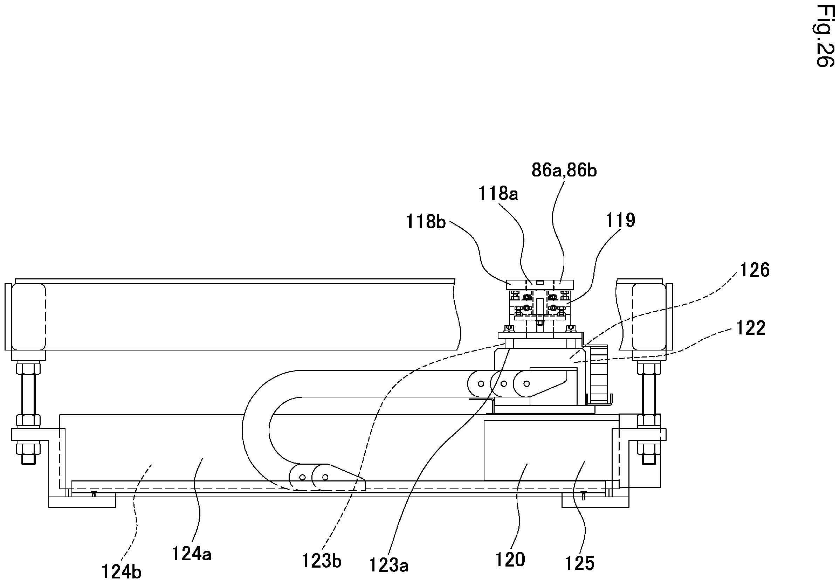

Fig. 16 is a top view of the bend-breaking processing table 84, and Fig. 17 is a side view of the bend-breaking processing table 84. The bend-breaking processing region 21 includes a bend-breaking processing table 84 (bend-breaking processing stand) on which the glass plates 11a and 11b positioned in the carry-in region 19 and subjected to notching processing in the notching processing region 20 are placed, a bend-breaking device 85 (see Figs. 18 to 24) that bend-breaks the edge portions 66b (peripheral edge portions) located outside the contour cutout line K1 (notching line) of the glass plates 11a and 11b placed on the bend-breaking processing table 84, and a support device 86 (see Figs. 25 and 26) that supports the glass plates.

The bend-breaking processing table 84 includes a belt conveyor 87 that travels in the width direction (Y-axis direction) and a conveyor drive motor 88 that causes the belt conveyor 87 to travel, and is installed on a base board fixed to a floor surface of the system stand 25. The belt conveyor 87 includes a belt 89 extending in the width direction, a plurality of pulleys 90 and a carrier roller 91 that support the belt 89, and a conveyor frame 92 that supports the belt 89, the pulleys 90, and the carrier roller 91. The glass plates 11a and 11b subjected to the notching processing are placed on the belt conveyor 87. The belt conveyor 87 conveys the edge portions 66b of the glass plates 11a and 11b that are bend-broken by the bend-breaking device 85 to the other side (from the first side edge portion 58a to the second side edge portion 58b) in the width direction, and discards the bend-broken edge portions 66b of the glass plates 11a and 11b to a dust box (not illustrated).

A shaft of the conveyor drive motor 88 is coupled to the pulley 90 via a timing belt. A control unit that controls start/stop of the conveyor drive motor 88 is connected to the controller via an interface (wired or wireless) (not illustrated). A rotation speed (a travel speed of the belt) of the shaft of the conveyor drive motor 88 is set in advance, and is stored in the large-capacity hard disk of the controller in a state in which the rotation speed (the travel speed of the belt) is associated with specific information of the conveyor drive motor 88. A control unit of the conveyor drive motor 88 drives the drive motor 88 at a predetermined number of rotations upon receiving a drive signal from the controller, and stops the drive of the drive motor 88 upon receiving a stop signal from the controller. When the shaft of the conveyor drive motor 88 rotates in the clockwise direction, the rotation is transmitted to the pulley 90 via the timing belt, the pulley 90 rotates in the clockwise direction, and the belt 89 travels toward the other side in the width direction due to the rotation of the pulley 90.

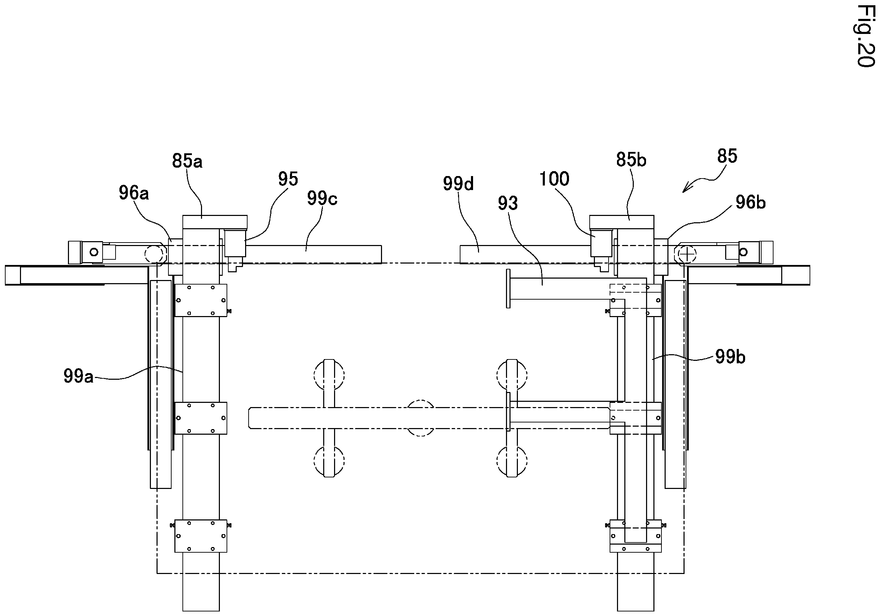

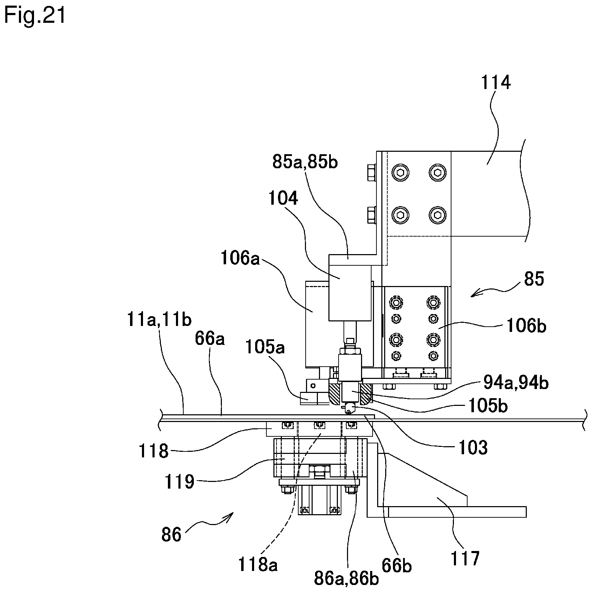

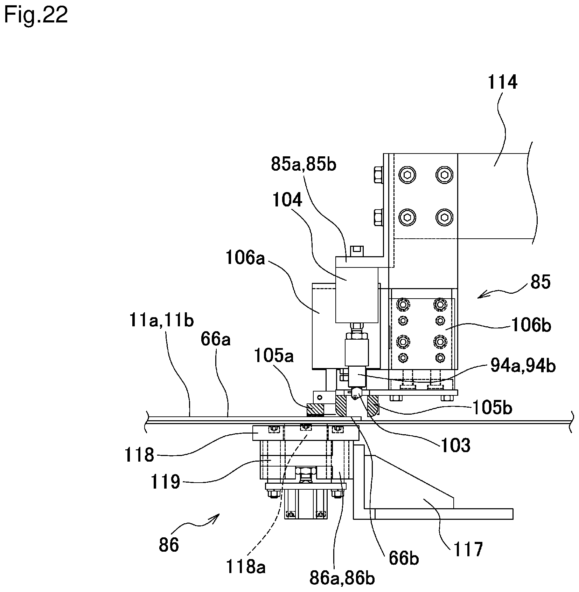

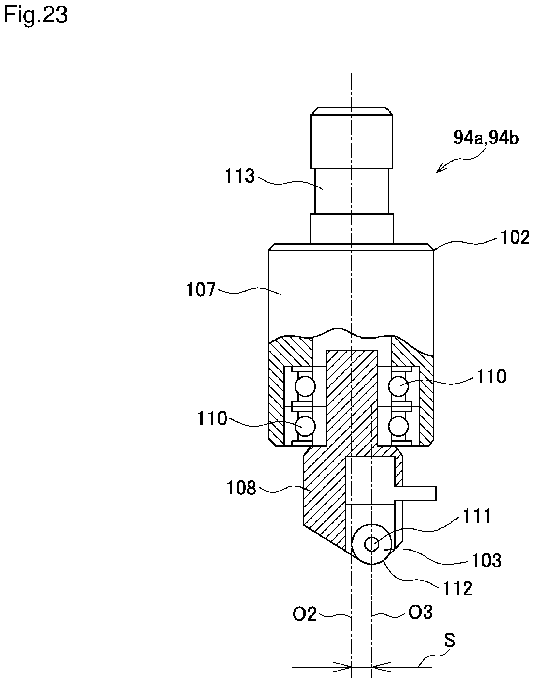

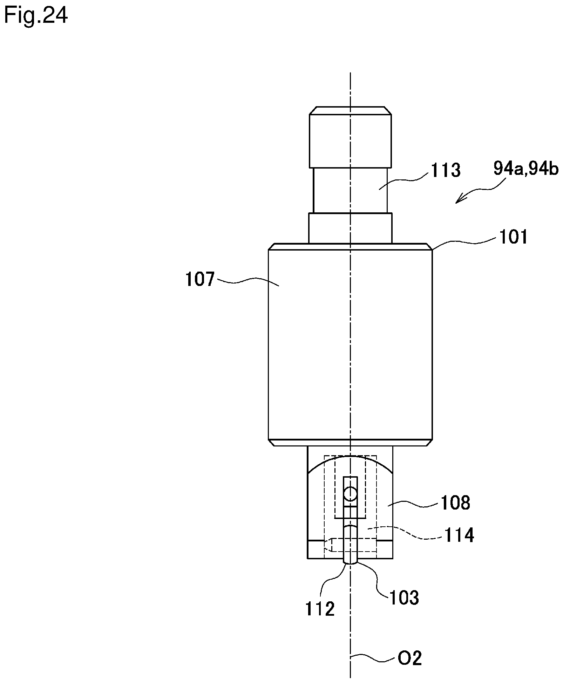

Fig. 18 is a side view of the bend-breaking device 85, and Fig. 19 is a front view of the bend-breaking device 85. Fig. 20 is a top view of the bend-breaking device 85, and Figs. 21 and 22 are enlarged front views of the bend-breaking device 85. Fig. 23 is a partially broken side view of first and second bend-breaking jigs 94a and 94b. Fig. 24 is a front view of the first and second bend-breaking jigs 94a and 94b. Fig. 21 illustrates a state in which the bend-breaking cutter wheel 103 is lowered and the first and second pressing members 105a and 105b are lifted. Fig. 22 illustrates a state in which the bend-breaking cutter wheel 103 is lifted and the first and second pressing members 105a and 105b are lowered.

The bend-breaking device 85 includes two devices such as a first bend-breaking device 85a and a second bend-breaking device 85b spaced apart in the width direction. The first bend-breaking device 85a is coupled to the first guide frame 30, and the second bend-breaking device 85b is coupled to a suspension frame 93. The suspension frame 93 is coupled to a side portion of the second guide frame 35. The first bend-breaking device 85a includes a first bend-breaking jig 94a (bend-breaking jig), a sixth servomotor 95 (X-axis servomotor) and a first X-axis actuator 96a, a seventh servomotor 97 (Y-axis servomotor) and a first Y-axis actuator 98a, and a first X-axis actuator frame 99a and a first Y-axis actuator frame 99c. The first X-axis actuator frame 99a and the first Y-axis actuator frame 99c are coupled in series at one end portions thereof.

The second bend-breaking device 85b includes a second bend-breaking jig 94b (bend-breaking jig), an eighth servomotor 100 (X-axis servomotor) and a second X-axis actuator 96b, a ninth servomotor 101 (Y-axis servomotor) and a second Y-axis actuator 98b, and a second X-axis actuator frame 99b and a second Y-axis actuator frame 99d. The second X-axis actuator frame 99b and the second Y-axis actuator frame 99d are coupled in series at one end portions thereof.

As illustrated in Figs. 21 and 22, the first and second bend-breaking jigs 94a and 94b of the first and second bend-breaking devices 85a and 85b are formed of a bend-breaking cutter holder 102, a bend-breaking cutter wheel 103, a holder lifting/lowering mechanism 104 (first lifting/lowering mechanism), a first pressing member 105a that presses downward the main body portions 66a (the glass plates 11a and 11b extending inside the contour cutout line K1) of the glass plates 11a and 11b on which the contour cutout line K1 (notching line) and an end cutting line K2 are formed, a second pressing member 105b that presses downward the edge portions 66b (the glass plates 11a and 11b extending outside the contour cutout line K1) of the glass plates 11a and 11b on which the contour cutout line K1 (notching line) and the end cutting line K2 are formed, a first pressing member lifting/lowering mechanism 106a (second lifting/lowering mechanism), and a second pressing member lifting/lowering mechanism 106b (third lifting/lowering mechanism).

The bend-breaking cutter holder 102 is located above the bend-breaking cutter wheel 103 and supports the bend-breaking cutter wheel 103. As illustrated in Figs. 23 and 24, the bend-breaking cutter holder 102 includes a holder main body 107 provided with a coupling portion, and a holder head 108 attached to a tip of the holder main body 107.

The bend-breaking cutter wheel 103 forms (inserts) the end cutting line K2 (scribe) in the edge portions 66b (the edge portions 66b of the glass plates 11a and 11b extending outside the contour cutout line K1) of the glass plates 11a and 11b that are processing targets. The bend-breaking cutter wheel 103 is rotatably (rollably) attached to a tip of the holder head 108 via a rolling shaft 111, and a circumferential edge 112 thereof rolls about the rolling shaft 111. A cutter wheel axis O3 extending in the up-down direction of the bend-breaking cutter wheel 103 is eccentric (displaced) radially outward with respect to a cutter holder center axis O2 extending in the up-down direction of the bend-breaking cutter holder 102 (holder main body 107). A separation dimension S (eccentric dimension) in the width direction of the cutter wheel axis O3 with respect to the cutter holder center axis O2 is in a range of 0.5 to 2 mm.

The holder head 108 is coupled to the holder main body 107 via the bearing 110, freely rotates along the axis of the interposed bearing 110, and is rotatable by 360° in a direction (θ direction) around the cutter holder center axis O2 of the bend-breaking cutter holder 102. The holder head 108 rotates in the clockwise direction and the counterclockwise direction about the cutter holder center axis O2. When the holder head 108 rotates, the bend-breaking cutter wheel 103 (the bend-breaking cutter wheel 103 having a cutter wheel axis O3 that is eccentric with respect to the cutter holder center axis O2) is rotatable by 360° in a direction around the cutter wheel axis O3 with respect to the bend-breaking cutter holder 102. The bend-breaking cutter wheel 103 rotates in the clockwise direction and the counterclockwise direction about the cutter holder center axis O2.

Since the cutter wheel axis O3 of the bend-breaking cutter wheel 103 is eccentric outward in the radial direction with respect to the cutter holder center axis O2, when the first and second bend-breaking jigs 94a and 94b (bend-breaking cutter holder 102) travel (move) on the upper surfaces 12 of the glass plates 11a and 11b in a predetermined direction, a caster effect is obtained in which the rolling (moving) direction of the circumferential edge 112 of the bend-breaking cutter wheel 103 faces the traveling (moving) direction of the first and second bend-breaking jigs 94a and 94b (bend-breaking cutter holder 102) (a direction in which the virtual end cutting line extends).

The holder lifting/lowering mechanism 104 (first lifting/lowering mechanism) is installed immediately above the holder main body 107, and is coupled to the coupling portion 113 of the bend-breaking cutter holder 102 (holder main body 107). The holder lifting/lowering mechanism 104 is fixed to the bracket 114 via a fixing member. An air cylinder is used for the holder lifting/lowering mechanism 104 (first lifting/lowering mechanism). The holder lifting/lowering mechanism 104 (air cylinder) lifts and lowers (up-down movement) the bend-breaking cutter holder 102 (bend-breaking cutter wheel 103) of the first and second bend-breaking jigs 94a and 94b in the up-down direction (Z-axis direction). The holder lifting/lowering mechanism 104 (air cylinder) lowers the bend-breaking cutter wheel 103 toward the upper surfaces 12 of the glass plates 11a and 11b at the time of bend-breaking processing on the edge portions 66b of the glass plates 11a and 11b, and applies (adds) an end cutting pressure (downward pressing force) to the cutter wheel 103. A lifting dimension and a lowering dimension of the holder lifting/lowering mechanism are set in advance.

The first pressing member 105a is made of rubber or synthetic resin having rubber elasticity. The first pressing member 105a is located in the vicinity of the outside of the second pressing member 105b and extends in the direction around the second pressing member 105b. The first pressing member 105a has a first pressing surface 115a that abuts on the upper surfaces 12 of the glass plates 11a and 1b and has a predetermined area. The first pressing surface 115a is formed in a semi-annular shape surrounding the second pressing member 105b.

The first pressing member lifting/lowering mechanism 106a (second lifting/lowering mechanism) is located on the side in the width direction of the first pressing member 105a, and is fixed to the bracket 114 via a fixing member. An air cylinder is used for the first pressing member lifting/lowering mechanism 106a. The first pressing member lifting/lowering mechanism 106a (air cylinder) lifts and lowers (up-down movement) the first pressing member 105a of the first and second bend-breaking jigs 94a and 94b in the up-down direction (Z-axis direction).

The first pressing member lifting/lowering mechanism 106a (second lifting/lowering mechanism) lowers the first pressing member 105a toward the upper surfaces 12 of the glass plates 11a and 11b at the time of bend-breaking processing on the edge portions 66b of the glass plates 11a and 11b, and applies (adds) a downward pressing force to the first pressing member 105a. A lifting dimension and a lowering dimension of the first pressing member 105a are set in advance. One bracket 114 is slidably attached to the first X-axis actuator frame 99a and the first Y-axis actuator frame 99c.

The second pressing member 105b is made of rubber or synthetic resin having rubber elasticity. The second pressing member 105b is located in the vicinity of the outside of the bend-breaking cutter wheel 103 and extends in the direction around the bend-breaking cutter wheel 103. The second pressing member 105b has a second pressing surface 115b that abuts on the upper surfaces 12 of the glass plates 11a and 1b and has a predetermined area. The second pressing surface 115b is formed in an annular shape surrounding the bend-breaking cutter wheel 103. A through-hole 116 penetrating in the up-down direction is formed at the center of the second pressing member 105b.

The second pressing member lifting/lowering mechanism 106b (third lifting/lowering mechanism) is located on the side in the width direction of the second pressing member 105b, and is fixed to the bracket 114 via a fixing member. An air cylinder is used for the second pressing member lifting/lowering mechanism 106b. The second pressing member lifting/lowering mechanism 106b (air cylinder) lifts and lowers (up-down movement) the second pressing member 105b of the first and second bend-breaking jigs 94a and 94b in the up-down direction (Z-axis direction). The second pressing member lifting/lowering mechanism 106b (third lifting/lowering mechanism) lowers the second pressing member 105b toward the upper surfaces 12 of the glass plates 11a and 11b at the time of bend-breaking processing on the edge portions 66b of the glass plates 11a and 11b, and applies (adds) a downward pressing force to the second pressing member 105b. A lifting dimension and a lowering dimension of the second pressing member 105b are set in advance. The other bracket 114 is slidably attached to the second X-axis actuator frame 99b and the second Y-axis actuator frame 99d. A control unit that controls start/stop of the holder lifting/lowering mechanism 104 (first lifting/lowering mechanism), a control unit that controls start/stop of the first pressing member lifting/lowering mechanism 106a (second lifting/lowering mechanism), and a control unit that controls start/stop of the second pressing member lifting/lowering mechanism 106b (third lifting/lowering mechanism) are connected to the controller via an interface (wired or wireless) (not illustrated).

The sixth servomotor 95 (X-axis servomotor) is installed in the first X-axis actuator frame 99a, and a shaft thereof is coupled to the first X-axis actuator 96a. The first X-axis actuator 96a includes a screw portion and a guide portion (not illustrated). When the shaft of the sixth servomotor 95 rotates in the clockwise direction, the screw portion of the first X-axis actuator 96a rotates in the clockwise direction. When the screw portion rotates in the counterclockwise direction, the first bend-breaking jig 94a of the first bend-breaking device 85a moves forward in the front-rear direction along the first X-axis actuator frame 99a together with the bracket 114. When the shaft of the sixth servomotor 95 rotates in the counterclockwise direction, the screw portion of the first X-axis actuator 96a rotates in the counterclockwise direction. When the screw portion rotates in the counterclockwise direction, the first bend-breaking jig 94a of the first bend-breaking device 85a moves rearward in the front-rear direction along the first X-axis actuator frame 99a together with the bracket 114.

The seventh servomotor 97 (Y-axis servomotor) is installed in the first Y-axis actuator frame 99c, and a shaft thereof is coupled to the first Y-axis actuator 98a. The first Y-axis actuator 98a includes a screw portion and a guide portion (not illustrated). When the shaft of the seventh servomotor 97 rotates in the clockwise direction, the screw portion of the first Y-axis actuator 98a rotates in the clockwise direction. When the screw portion rotates in the counterclockwise direction, the first bend-breaking jig 94a of the first bend-breaking device 85a moves to one side in the width direction along the first Y-axis actuator frame 99c together with the bracket 114. When the shaft of the seventh servomotor 97 rotates in the counterclockwise direction, the screw portion of the first Y-axis actuator 98a rotates in the counterclockwise direction. When the screw portion rotates in the counterclockwise direction, the first bend-breaking jig 94a of the first bend-breaking device 85a moves in the other direction in the width direction along the first Y-axis actuator frame 99c together with the bracket 114. A control unit that controls start/stop, the number of rotations, and a rotation speed of the sixth and seventh servomotors 95 and 97 is connected to the controller via an interface (wired or wireless) (not illustrated).

The eighth servomotor 100 (X-axis servomotor) is installed in the second X-axis actuator frame 99b, and a shaft thereof is coupled to the second X-axis actuator 96b. The second X-axis actuator 96b includes a screw portion and a guide portion (not illustrated). When the shaft of the eighth servomotor 100 rotates in the clockwise direction, the screw portion of the second X-axis actuator 96b rotates in the clockwise direction. When the screw portion rotates in the counterclockwise direction, the second bend-breaking jig 94b of the second bend-breaking device 85b moves forward in the front-rear direction along the second X-axis actuator frame 99b together with the bracket 114. When the shaft of the eighth servomotor 100 rotates in the counterclockwise direction, the screw portion of the second X-axis actuator 96b rotates in the counterclockwise direction. When the screw portion rotates in the counterclockwise direction, the second bend-breaking jig 94b of the second bend-breaking device 85b moves rearward in the front-rear direction along the second X-axis actuator frame 99b together with the bracket 114.

The ninth servomotor 101 (Y-axis servomotor) is installed in the second Y-axis actuator frame 99d, and a shaft thereof is coupled to the second Y-axis actuator 98b. The second Y-axis actuator 98b includes a screw portion and a guide portion (not illustrated). When the shaft of the ninth servomotor 101 rotates in the clockwise direction, the screw portion of the second Y-axis actuator 98b rotates in the clockwise direction. When the screw portion rotates in the counterclockwise direction, the second bend-breaking jig 94b of the second bend-breaking device 85b moves toward one side in the width direction along the second actuator frame 99d together with the bracket 114. When the shaft of the ninth servomotor 101 rotates in the counterclockwise direction, the screw portion of the second Y-axis actuator 98b rotates in the counterclockwise direction. When the screw portion rotates in the counterclockwise direction, the second bend-breaking jig 94b of the second bend-breaking device 85b moves toward the other side in the width direction along the second Y-axis actuator frame 99d together with the bracket 114. A control unit that controls start/stop, the number of rotations, and a rotation speed of each of the eighth and ninth servomotors 100 and 101 is connected to the controller via an interface (wired or wireless) (not illustrated).

Fig. 25 is a top view of the bend-breaking processing table 84 illustrated in a state in which the support device 86 is exposed, and Fig. 26 is a front view of the bend-breaking processing table 84 when the support device 86 is viewed from the front. The support device 86 includes two devices such as a first support devices 86a and a second support device 86b spaced apart in the width direction. The first and second support devices 86a and 86b are coupled to the guide frame 117.

The first support device 86a includes a first support member 118a and a second support member 118b, a second support member lifting/lowering mechanism 119 (fourth lifting/lowering mechanism) that lifts and lowers the second support member 118b in the up-down direction, a tenth servomotor 120 (X-axis servomotor) and a third X-axis actuator 121a, an eleventh servomotor 122 (Y-axis servomotor) and a third Y-axis actuator 123a, and a third X-axis actuator frame 124a and a third Y-axis actuator frame 124c.

The second support device 86b includes a first support member 118a and a second support member 118b, a second support member lifting/lowering mechanism 119 (fourth lifting/lowering mechanism) that lifts and lowers the second support member 118b in the up-down direction, a twelfth servomotor 125 (X-axis servomotor) and a fourth X-axis actuator 121b, a thirteenth servomotor 126 (Y-axis servomotor) and a fourth Y-axis actuator 123b, and a fourth X-axis actuator frame 124b and a fourth Y-axis actuator frame 124d.

The first support member 118a is located radially inward of the second support member 118b and includes a first support surface 127a that supports the lower surfaces 13 of the glass plates 11a and 11b and has a predetermined area. The first support surface 127a is formed in a flat perfect circular shape. The second support member 118b is located radially outward of the first support member 118a and includes a second support surface 127b that supports the lower surfaces 13 of the glass plates 11a and 11b and has a predetermined area. The second support surface 127b is formed in a flat annular shape surrounding the first support member 118a (first support surface 127a).

The second support member lifting/lowering mechanism 119 (fourth lifting/lowering mechanism) is located immediately below the second support member 118b, and is fixed to the guide frame 117 via a fixing member. An air cylinder is used for the second support member lifting/lowering mechanism 119. The second support member lifting/lowering mechanism 119 (air cylinder) lifts and lowers (up-down movement) the second support member 118b of the first and second support devices 86a and 86b in the up-down direction (Z-axis direction). The second support member lifting/lowering mechanism 119 (fourth lifting/lowering mechanism) lowers the second support member 118b from the lower surfaces 13 of the glass plates 11a and 11b at the time of bend-breaking processing on the edge portions 66b of the glass plates 11a and 11b, and forms a gap (a step between the first support surface 127a and the second support surface 127b) between the lower surfaces 13 of the glass plates 11a and 11b and the second support surface 127b. A lowering dimension of the second support member 118b is set in advance.

A control unit that controls start/stop of the second support member lifting/lowering mechanism 119 (fourth lifting/lowering mechanism) is connected to the controller via an interface (wired or wireless) (not illustrated). Upon receiving a lifting/lowering signal from the controller, the control unit of the second support member lifting/lowering mechanism 119 lifts and lowers the second support member 118b by using the second support member lifting/lowering mechanism 119 (air cylinder).

The tenth servomotor 120 (X-axis servomotor) is installed in the third X-axis actuator frame 124a, and a shaft thereof is coupled to the third X-axis actuator 121a. The third X-axis actuator 121a includes a screw portion and a guide portion (not illustrated). When the shaft of the tenth servomotor 120 rotates in the clockwise direction, the screw portion of the third X-axis actuator 121a rotates in the clockwise direction. When the screw portion rotates in the counterclockwise direction, the first support device 86a moves forward in the front-rear direction along the third X-axis actuator frame 124a together with the guide frame 117. When the shaft of the tenth servomotor 120 rotates in the counterclockwise direction, the screw portion of the third X-axis actuator 121a rotates in the counterclockwise direction. When the screw portion rotates in the counterclockwise direction, the first support device 86a moves rearward in the front-rear direction along the third X-axis actuator frame 124a together with the guide frame 117.

The eleventh servomotor 122 (Y-axis servomotor) is installed in the third Y-axis actuator frame 124c, and a shaft thereof is coupled to the third Y-axis actuator 123a. The third Y-axis actuator 123a includes a screw portion and a guide portion (not illustrated). When the shaft of the eleventh servomotor 122 rotates in the clockwise direction, the screw portion of the third Y-axis actuator 123a rotates in the clockwise direction. When the screw portion rotates in the counterclockwise direction, the first support device 86a moves toward one side in the width direction along the third Y-axis actuator frame 124c together with the guide frame 117. When the shaft of the eleventh servomotor 122 rotates in the counterclockwise direction, the screw portion of the third Y-axis actuator 123a rotates in the counterclockwise direction. When the screw portion rotates in the counterclockwise direction, the first support device 86a moves toward the other side in the width direction along the third Y-axis actuator frame 124c together with the guide frame 117. The first support device 86a moves in the front-rear direction and the width direction (horizontal direction) in synchronization with the first bend-breaking device 85a (first bend-breaking jig 94a). A control unit that controls start/stop, the number of rotations, and a rotation speed of each of the tenth and eleventh servomotors 120 and 122 is connected to the controller via an interface (wired or wireless) (not illustrated).

The twelfth servomotor 125 (X-axis servomotor) is installed in a fourth X-axis actuator frame 124b, and a shaft thereof is coupled to the fourth X-axis actuator 121b. The fourth X-axis actuator 121b includes a screw portion and a guide portion (not illustrated). When the shaft of the twelfth servomotor 125 rotates in the clockwise direction, the screw portion of the fourth X-axis actuator 121b rotates in the clockwise direction. When the screw portion rotates in the counterclockwise direction, the second support device 86b moves forward in the front-rear direction along the fourth X-axis actuator frame 124b together with the guide frame 117. When the shaft of the twelfth servomotor 125 rotates in the counterclockwise direction, the screw portion of the fourth X-axis actuator 121b rotates in the counterclockwise direction. When the screw portion rotates in the counterclockwise direction, the second support device 86b moves rearward in the front-rear direction along the fourth X-axis actuator frame 124b together with the guide frame 117.

The thirteenth servomotor 126 (Y-axis servomotor) is installed in a fourth Y-axis actuator frame 124d, and a shaft thereof is coupled to the fourth Y-axis actuator 123b. The fourth Y-axis actuator 123b includes a screw portion and a guide portion (not illustrated). When the shaft of the thirteenth servomotor 126 rotates in the clockwise direction, the screw portion of the fourth Y-axis actuator 123b rotates in the clockwise direction. When the screw portion rotates in the counterclockwise direction, the second support device 86b moves toward one side in the width direction along the fourth Y-axis actuator frame 124d together with the guide frame 117. When the shaft of the thirteenth servomotor 126 rotates in the counterclockwise direction, the screw portion of the fourth Y-axis actuator 123b rotates in the counterclockwise direction. When the screw portion rotates in the counterclockwise direction, the second support device 86b moves toward the other side in the width direction along the fourth Y-axis actuator frame 124d together with the guide frame 117. The second support device 86b moves in the front-rear direction and the width direction (horizontal direction) in synchronization with the second bend-breaking device 85b (second bend-breaking jig 94b). A control unit that controls start/stop, the number of rotations, and a rotation speed of each of the twelfth and thirteenth servomotors 125 and 126 is connected to the controller via an interface (wired or wireless) (not illustrated).

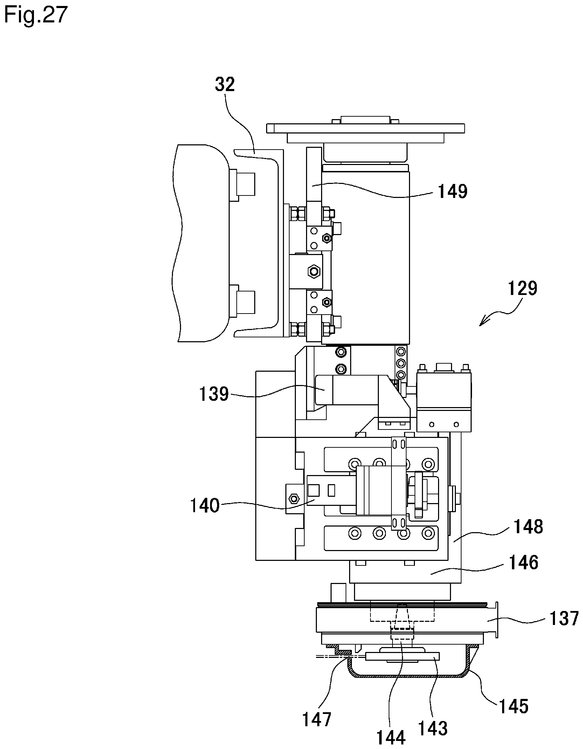

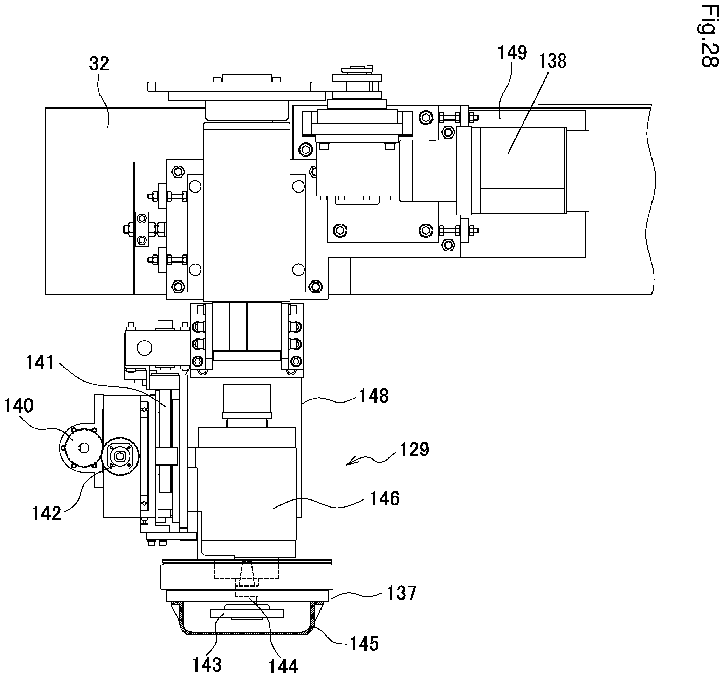

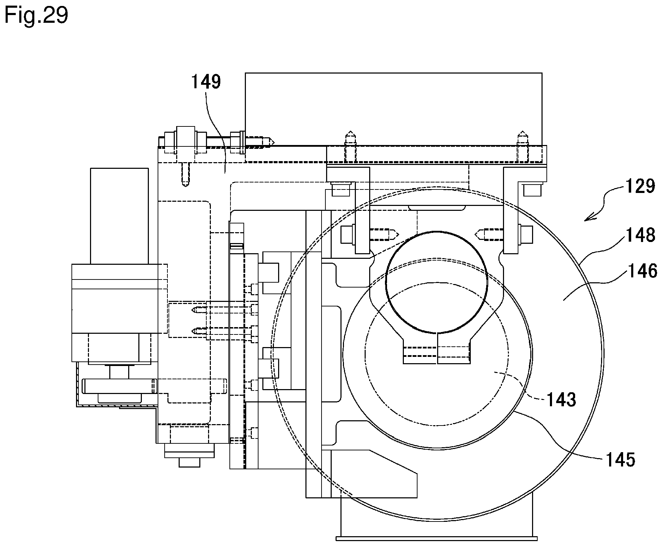

Fig. 27 is a front view of the grinding device 129 illustrated as an example installed in the grinding processing region 22, and Fig. 28 is a side view of the grinding device 129. Fig. 29 is a top view of the grinding device 129. The grinding processing region 22 includes the grinding processing table 128 (grinding processing stand) that is positioned in the carry-in region 19, performs notching processing in the notching processing region 20, and places the glass plates 11a and 11b subjected to bend-breaking processing in the bend-breaking processing region 21 thereon, and the grinding device 129 (grinding mechanism) that grinds edges (peripheral edges) of the main body portions 66a of the glass plates 11a and 11b placed on the grinding processing table 128.

The grinding processing table 128 is installed on a base lane 67b that is long in the width direction fixed to the floor surface of the system stand 25 (see Fig. 10). The grinding processing table 128 includes a table sucker 130 (attraction pad) that attracts and holds the lower surfaces 13 of the glass plates 11a and 11b, a magnet 131 located immediately below the table sucker 130, a support column 132 that supports the table sucker 130, and a vacuum mechanism (air suction device) (air vacuum pump) (not illustrated) that applies an attraction force to the table sucker by causing the table sucker 130 to have a negative pressure. A control unit that controls start/stop of the vacuum mechanism is connected to the controller via an interface (wired or wireless) (not illustrated).

The table sucker 130 (attraction pad) is detachably coupled and fixed to the upper portion of the support column 132 by predetermined coupling means. The table sucker 130 is made of a rubber-based material such as nitrile rubber, natural rubber, or polyurethane rubber, and has a predetermined area. The magnet 131 is detachably coupled and fixed to a central portion of the support column 132 at an upper portion of the support column 132 by predetermined coupling means. The magnet 131 has an attraction surface 134 having a predetermined area, and the attraction surface 134 is located immediately below the center 133 of the table sucker 130 having a predetermined area. The attraction surface 134 is a flat surface that has a circular shape and is flat in the horizontal direction.

A cylindrical permanent magnet elongated in the up-down direction is used for the magnet 131. As the permanent magnet, a ferrite magnet, an alloy magnet such as an alnico magnet or an iron chromium cobalt magnet, or a rare earth magnet such as a neodymium magnet or a samarium cobalt magnet may be used. Although not illustrated, the permanent magnet (magnet 131) is covered with an iron cap to form a yoke that guides a magnetic flux. By forming the yoke that induces a magnetic flux to the permanent magnet (magnet 131) by using the iron cap, an attraction force of the permanent magnet (magnet 131) increases. Note that the permanent magnet (magnet 131) does not need to be covered with an iron cap, and a yoke does not need to be formed in the permanent magnet (magnet 131).

An electromagnet may be used for the magnet 131. The electromagnet is covered with an iron cap to form a yoke that induces a magnetic flux. By forming the yoke that induces a magnetic flux in the electromagnet (magnet 131) with the iron cap, an attraction force of the electromagnet (magnet 131) increases. Note that the electromagnet (magnet 131) does not need to be covered with an iron cap, and a yoke does not need to be formed in the electromagnet (magnet 131).

Electric power is supplied (energized) from a DC power supply (not illustrated) to the electromagnet (magnet 131). A control unit that controls the supply of power (energization) to the electromagnet (magnet 131) is connected to the controller via an interface (wired or wireless) (not illustrated). The support column 132 is formed in a columnar shape elongated in the up-down direction, and a lower end portion thereof is detachably coupled and fixed to the grinding processing table 128 by predetermined coupling means. A connection joint 135 (nipple) connected to a vacuum mechanism (air suction device) (air vacuum pump) is attached to an upper side surface of the support column 132.

The grinding processing table 128 is caused to move by the second movement mechanism 68b in the width direction in a state in which the positioned glass plates 11a and 11b are placed thereon. The support column 132 (table sucker 130) coupled and fixed to the grinding processing table 128 moves in the width direction according to the movement of the grinding processing table 128. The second movement mechanism 68b includes traveling guide rails 69b, a feed screw 70b (ball screw), a fourteenth servomotor 136, guide shoes 72b, and a slide block 73b (housing nut) .

The traveling guide rails 69b are installed on the upper surface of the base lane 67b and extend in the width direction. The feed screw 70b (ball screw) is installed on the upper surface of the base lane 67b and on the side of the traveling guide rail 69b, and extends in the width direction. The fourteenth servomotor 136 is installed in the base lane 67b and causes the grinding processing table 128 to reciprocate in the width direction. The other end portion of the feed screw 70b is coupled to a shaft of the fourteenth servomotor 136.

A control unit that controls start/stop, the number of rotations, and a rotation speed of the fourteenth servomotor 136 is connected to the controller via an interface (wired or wireless) (not illustrated). The control unit of the fourteenth servomotor 136 drives the fourteenth servomotor 136 at a predetermined number of rotations and rotation speed when receiving a drive signal from the controller, and stops the drive of the fourteenth servomotor 136 when receiving a stop signal from the controller.

The feed screw 70b is rotatably supported by a bearing (not illustrated) fixed to the base lane 67b. The guide shoes 72b are attached to the lower surface of the grinding processing table 128 and extends in the width direction. The guide shoes 72b are slidably fitted to the traveling guide rail 69b. The slide block 73b (housing nut) is attached to the lower surface of the grinding processing table 128 and between the guide shoes 72b. The slide block 73b is rotatably screwed to the feed screw 70b.

When the shaft of the fourteenth servomotor 136 rotates in the clockwise direction, the feed screw 70b rotates in the clockwise direction, the slide block 73b moves in the width direction from the other side edge portion 58b of the grinding processing region 22 toward the one side edge portion 58a due to the rotation of the feed screw 70b in the clockwise direction, and the grinding processing table 128 (table sucker 130) moves in the width direction from the other side edge portion 58b of the grinding processing region 22 toward the one side edge portion 58a due to the movement of the slide block 73b.

When the shaft of the fourteenth servomotor 136 rotates in the counterclockwise direction, the feed screw 70b rotates in the counterclockwise direction, the slide block 73b moves in the width direction from one side edge portion 58a of the grinding processing region 22 toward the other side edge portion 58b due to the rotation of the feed screw 70b in the counterclockwise direction, and the grinding processing table 128 (table sucker 130) moves in the width direction from one side edge portion 58a of the grinding processing region 22 toward the other side edge portion 58b due to the movement of the slide block 73b.

Note that the fourteenth servomotor 136 is driven in synchronization with the fourth servomotor 71 in the notching processing region 20, and the grinding processing table 128 (table sucker 130) moves from the other side edge portion 58b of the grinding processing region 22 toward the one side edge portion 58a in synchronization with the movement from the other side edge portion 58b to the one side edge portion 58a of the notching processing region 20 of the notching processing table 64. In addition, the grinding processing table 128 (table sucker 130) moves from one side edge portion 58a of the grinding processing region 22 toward the other side edge portion 58b in synchronization with the movement from one side edge portion 58a of the notching processing region 20 of the notching processing table 64 to the other side edge portion 58b. A control unit that controls start/stop, the number of rotations, and a rotation speed of the fourteenth servomotor 136 is connected to the controller via an interface (wired or wireless) (not illustrated).

The grinding device 129 (grinding mechanism) includes a grinding jig 137, a fifteenth servomotor 138 (grinding Z-axis servomotor), a sixteenth servomotor 139 (lifting/lowering servomotor), a seventeenth servomotor 140 (notching servomotor), a grinding wheel lifting/lowering screw 141, and a grinding wheel notching screw 142. The grinding jig 137 includes a grinding wheel 143, a grinding holder 144, a cover 145, and a spindle motor 146. The grinding wheel 143 is formed in a disk shape having a predetermined diameter, and grinds an edge (peripheral edge) of the main body portion 66a of each of the glass plates 11a and 1b with an outer circumferential surface thereof.

The grinding holder 144 is located immediately above the grinding wheel 143 and rotatably supports the grinding wheel 143. The cover 145 is located immediately below the grinding wheel 143 and covers the entire grinding wheel 143. The cover 145 is detachably attached to the grinding jig 137. The cover 145 is provided with a slit 147 into which the edge (peripheral edge) of the main body portion 66a of each of the glass plates 11a and 11b is inserted. The spindle motor 146 is located immediately above the grinding wheel 143 (grinding holder 144), and is installed and accommodated in the motor housing 148. The spindle motor 146 has a shaft coupled to the center of the grinding wheel 143. The grinding wheel 143 rotates due to rotation of the spindle motor 146.

The motor housing 148 is fixed to the traveling frame 32 via a bracket 149. A control unit that controls start/stop, the number of rotations, and a rotation speed of the spindle motor 146 is connected to the controller via an interface (wired or wireless) (not illustrated). The control unit of the spindle motor 146 drives the spindle motor 146 at a predetermined number of rotations and rotation speed when receiving a drive signal from the controller, and stops the drive of the spindle motor 146 when receiving a stop signal from the controller.

The fifteenth servomotor 138 (grinding Z-axis servomotor) is located in the vicinity of the rear of the grinding jig 137, and is coupled and fixed to the traveling frame 32 via a bracket 149. The shaft of the fifteenth servomotor 138 is coupled to a support shaft of the motor housing 148. The fifteenth servomotor 138 finely adjusts a posture (an angle around the axis) of the grinding wheel 143 in the axial direction such that the outer circumferential surface of the grinding wheel 143 abuts on the edges (peripheral edge) of the main body portions 66a of the glass plates 11a and 11b in parallel.

The sixteenth servomotor 139 (lifting/lowering servomotor) is located in the vicinity of the outside in the width direction of the motor housing 148 (spindle motor 146), and is coupled and fixed to the motor housing 148. The sixteenth servomotor 139 has a shaft that is coupled to the grinding wheel lifting/lowering screw 141, and causes the grinding wheel lifting/lowering screw 141 to rotate. The sixteenth servomotor 139 causes the grinding wheel 143 (motor housing 148) to move up and down according to thickness dimensions of the glass plates 11a and 11b, and finely adjusts a height of the grinding wheel 143 such that the height of the grinding wheel 143 coincides with the heights of the edges of the main body portions 66a of the glass plates 11a and 11b and the outer circumferential surface of the grinding wheel 143 abuts on the edges of the main body portions 66a of the glass plates 11a and 11b.

In the initial setting for starting processing of the glass plates 11a and 11b, a distance from an attachment reference surface of the grinding wheel 143 to the center of the groove is input to the controller. The controller calculates the number of rotations of the shaft of the sixteenth servomotor 139 on the basis of the input distance, and transmits the calculated number of rotations to the control unit of the sixteenth servomotor 139. The control unit of the sixteenth servomotor 139 causes the shaft of the sixteenth servomotor 139 to rotate at the number of rotations received from the controller. When the shaft of the sixteenth servomotor 139 rotates in the clockwise direction at a predetermined number of rotations, the lifting/lowering screw 141 is lowered while the grinding wheel lifting/lowering screw 141 rotates in the clockwise direction, and thus the grinding wheel 143 (motor housing 148) is lowered.

When the shaft of the sixteenth servomotor 139 rotates in the counterclockwise direction at a predetermined number of rotations, the lifting/lowering screw 141 is lifted while the grinding wheel lifting/lowering screw 141 rotates in the counterclockwise direction, and thus the grinding wheel 143 (motor housing 148) is lifted. As long as the thickness dimensions of the glass plates 11a and 11b to be processed are the same, once fine adjustment of the height of the grinding wheel 143 is set, no subsequent adjustment is performed.

The seventeenth servomotor 140 (notching servomotor) is located immediately below the sixteenth servomotor 139 (lifting/lowering servomotor) and in the vicinity of the outside of the motor housing 148 (spindle motor 146) in the width direction, and is coupled and fixed to the motor housing 148. The seventeenth servomotor 140 has a shaft coupled to the grinding wheel notching screw 142, and causes the grinding wheel notching screw 142 to rotate. The seventeenth servomotor 140 causes the grinding wheel 143 (motor housing 148) to move in the width direction according to the outer circumferential surface diameter of the grinding wheel 143, and finely adjusts a notching depth of the grinding wheel 143 such that the outer circumferential surface of the grinding wheel 143 abuts on the edges (peripheral edges) of the main body portions 66a of the glass plates 11a and 11b. A control unit that controls start/stop, the number of rotations, and a rotation speed of each of the fifteenth to seventeenth servomotors 138 to 140 is connected to the controller via an interface (wired or wireless) (not illustrated).

In the initial setting for starting processing of the glass plates 11a and 11b, a diameter of the grinding wheel 143 is input to the controller. The controller calculates the number of rotations of the shaft of the seventeenth servomotor 140 on the basis of the input diameter of the grinding wheel 143, and transmits the calculated number of rotations to the control unit of the seventeenth servomotor 140. The control unit of the seventeenth servomotor 140 causes the shaft of the seventeenth servomotor 140 to rotate at the number of rotations received from the controller. When the shaft of the seventeenth servomotor 140 rotates in the clockwise direction at a predetermined number of rotations, the grinding wheel notching screw 142 rotates in the clockwise direction and the screw 142 moves rearward in the front-rear direction, and thus the grinding wheel 143 (motor housing 148) moves rearward in the front-rear direction.

When the shaft of the seventeenth servomotor 140 rotates in the counterclockwise direction at a predetermined number of rotations, the grinding wheel notching screw 142 rotates in the counterclockwise direction and the screw 142 moves forward in the front-rear direction, and thus the grinding wheel 143 (motor housing 148) moves forward in the front-rear direction. As long as the diameter of the grinding wheel 143 is the same, once fine adjustment of the position of the grinding wheel 143 in the front-rear direction is set, no subsequent adjustment is performed.

In the carry-out region 23, carry-out conveyors 150 are installed. The carry-out region 23 is supported by leg portions (support columns) extending upward from the floor surface of the system stand 25. The carry-out conveyors 150 are a plurality of endless tracks extending in the front-rear direction (X direction), and are arranged to be spaced apart at predetermined intervals in the width direction (Y direction). A control unit that controls start/stop and a conveyance distance of the carry-out conveyor 150 is connected to the controller via an interface (wired or wireless) (not illustrated). The carry-out conveyor 150 conveys the glass plates 11a and 11b from the rear side to the front side in the front-rear direction from the rear end portion (carry-in port) toward the front end portion (carry-out port) of the carry-out region 23.

Hereinafter, an example of processing (notching processing, bend-breaking processing, and grinding processing) of the glass plates 11a and 11b will be described. At the start of processing, the first glass plate holder 40a stands by above the carry-in region 19, the second glass plate holder 40b stands by above the notching processing region 20, the third glass plate holder 40c stands by above the bend-breaking processing region 21, and the fourth glass plate holder 40d stands by above the grinding processing region 22.

Various glass plate images are output (displayed) on a monitor, a display, or a touch panel (output device) connected to the controller. The specific glass plates 11a and 11b that are processing targets are clicked (tapped) (selected) from the plurality of various glass plate images output (displayed) to the output device. When the specific glass plates 11a and 11b are selected, the controller selects an NC control program for processing to be performed on the glass plates 11a and 11b. The controller outputs (displays) an input region for a distance from the attachment reference surface of the grinding wheel 143 to the center of the groove, a dimension input region for the glass plates 11a and 11b in the front-rear direction, and a diameter input region for the grinding wheel 143 to the output device.

After inputting the distance into the input region for the distance from the attachment reference surface of the grinding wheel 143 to the center of the groove and inputting the diameter into the diameter input region for the grinding wheel 143, an input button that is output (displayed) to the output device is clicked (tapped). When the distance and the diameter are input, the controller drives the sixteenth servomotor 139 to move the grinding wheel 143 (motor housing 148) up and down to finely adjust the height of the grinding wheel 143, and drives the seventeenth servomotor 140 to move the grinding wheel 143 (motor housing 148) in the width direction to finely adjust the position of the grinding wheel 143 in the front-rear direction. After the fine adjustment is ended, the controller outputs (displays) a processing start button to the output device. When the processing start button is clicked (tapped), processing of the glass plates 11a and 11b is started.

The selected glass plates 11a and 11b that are processing targets (before processing) are carried into the carry-in region 19. In the carry-in region 19, first positioning means (first positioning step) and second positioning means (second positioning step) are performed. The glass plates 11a and 11b that are processing targets are automatically supplied to the carry-in conveyors 53 in the carry-in region 19 by an automatic supply device (not illustrated). In the automatic supply device, a plurality of glass plates 11a and 11b that are processing targets of which the upper surface 12 and the lower surface 13 have the same area (same size) are stacked in the up-down direction, and the glass plates 11a and 11b are supplied from the automatic supply device to the carry-in conveyor 53 one by one.

An example of a procedure of positioning the glass plates 11a and 11b in the carry-in region 19 is as follows. The controller transmits a conveyance signal (ON signal) to the control unit of the carry-in conveyors 53, and the control unit of the carry-in conveyors 53 that has received the advance signal (ON signal) drives the carry-in conveyors 53. The glass plates 11a and 11b carried into the carry-in region 19 are placed on the carry-in conveyors 53 in a state in which the lower surfaces 13 thereof abut on the carry-in conveyors 53. In the glass plates 11a and 11b, a first side edge 14 (one side edge 14) (including a case where the side edge 14 is curved) is parallel to one side edge portion 58a of the carry-in region 19, and the other side edge 15 is parallel to the other side edge portion 58b of the carry-in region 19.

The glass plates 11a and 11b placed on the carry-in conveyors 53 are caused to gradually move forward in the front-rear direction from the rear side toward the front side of the carry-in region 19 by the carry-in conveyors 53. When the glass plates 11a and 11b move from the rear side toward the front side of the carry-in region 19 and the front end edges 16 of the glass plates 11a and 11b abut on the stopper 54, the contact sensor installed in the stopper 54 detects the abutment of the front end edges 16 of the glass plates 11a and 11b on the stopper 54, and transmits a contact (abutment) signal to the controller.

The controller that has received the contact signal transmits a stop signal (OFF signal) to the control unit of the carry-in conveyors 53, and the control unit of the carry-in conveyors 53 that has received the stop signal (OFF signal) stops the drive of the carry-in conveyors 53. Next, the controller transmits, to the control unit of the carry-in conveyors 53, a second movement dimension of the carry-in conveyors 53 to the rear side in the front-rear direction for locating the front-rear direction center O1 (a center line L2 extending in the width direction obtained by dividing the dimension of the glass plates 11a and 11b in the front-rear direction by 2) of the first side edges 14 of the glass plates 11a and 11b at the second positioning reference L2 (virtual second positioning reference line) of the carry-in region 19, and transmits a retreat signal (ON signal) to the control unit of the carry-in conveyors 53.

The control unit of the carry-in conveyors 53 that has received the second movement dimension and the retreat signal (ON signal) drives the carry-in conveyors 53 such that the glass plates 11a and 11b are caused to move rearward in the front-rear direction by the second movement dimension by the carry-in conveyors 53. When the carry-in conveyors 53 cause the glass plates 11a and 11b to move rearward in the front-rear direction by the second movement dimension, the front-rear direction center O1 (the center line L2 of the glass plates 11a and 11b) of one side edge in the width direction of the glass plates 11a and 11b is located at the second positioning reference L2 (virtual second positioning reference line) in the carry-in region 19 (second positioning means (second positioning step)).

After moving the glass plates 11a and 11b rearward in the front-rear direction by the second movement dimension, the controller transmits a stop signal (OFF signal) to the control unit of the carry-in conveyors 53, and the control unit of the carry-in conveyors 53 that has received the stop signal (OFF signal) stops the drive of the carry-in conveyors 53. Next, the controller transmits a lifting signal (ON signal) to the control unit of the roller lifting/lowering mechanisms 56 (air cylinders). Upon receiving the lifting signal (ON signal), the control unit of the roller lifting/lowering mechanisms 56 lifts the roller lifting/lowering mechanisms 56 (air cylinders). The rollers 55 are lifted through the lifting of the roller lifting/lowering mechanisms 56, parts of the circumferential edge portions of the rollers 55 are exposed to the upper side of the carry-in conveyors 53, and in a state in which the lifted rollers 55 abut on the lower surfaces 13 of the glass plates 11a and 11b, the rollers 55 lift the glass plates 11a and 11b to the upper side of the carry-in conveyors 53.

After the lifting of the roller lifting/lowering mechanisms 56 (air cylinders) is completed, the controller transmits, to the control unit of the third servomotor 61, the number of rotations of the third servomotor 61 calculated from the first movement dimension (first movement distance) in the width direction of the movement mechanism 57 for locating the first side edges 14 of the glass plates 11a and 11b at the first positioning reference L1 (virtual first positioning reference line), and transmits a forward rotation signal (ON signal) to the control unit of the third servomotor 61. The control unit that has received the number of rotations of the third servomotor 61 and the forward rotation signal (ON signal) drives the third servomotor 61 such that the shaft of the third servomotor 61 rotates in the clockwise direction by a predetermined number of rotations.

When the feed screw rotates due to the rotation of the shaft of the third servomotor 61 in the clockwise direction, the abutting member 63 gradually moves together with the movement arm 62 from the movement start point to one side in the width direction. The abutting member 63 that is moving to one side in the width direction abuts on the second side edges 15 (the other side edges) of the glass plates 11a and 11b, and the abutting member 63 presses the second side edges 15 of the glass plates 11a and 11b in the width direction such that the glass plates 11a and 11b move from the other side to the one side in the width direction. The glass plates 11a and 11b pressed by the abutting member 63 move in the width direction on the rollers 55 from the other side to the one side in the width direction, and the outermost edge located on the outermost side in the width direction among the first side edges 14 of the glass plates 11a and 11b in the width direction is located at the first positioning reference L1 (virtual first positioning reference line) in the carry-in region 19 (first positioning means (first positioning step)).

When the movement of the abutting member 63 to one side in the width direction is ended and the outermost edge located on the outermost side in the width direction among the first side edges 14 in the width direction of the glass plates 11a and 11b is located at the first positioning reference L1 in the carry-in region 19, the controller transmits a stop signal (OFF signal) to the control unit of the third servomotor 61. The control unit of the third servomotor 61 that has received the stop signal (OFF signal) stops the drive of the third servomotor 61. After the third servomotor 61 stops being driven, the controller transmits a reverse rotation signal (ON signal) to the control unit of the third servomotor 61. The control unit of the third servomotor 61 that has received the reverse rotation signal (ON signal) drives the third servomotor 61 such that the shaft of the third servomotor 61 rotates in the counterclockwise direction by a predetermined number of rotations.

When the feed screw rotates due to the rotation of the shaft of the third servomotor 61 in the counterclockwise direction, the abutting member 63 gradually moves to the other side in the width direction together with the movement arm 62, and the abutting member 63 returns to the movement start point. After the abutting member 63 returns to the movement start point, the controller transmits a stop signal (OFF signal) to the control unit of the third servomotor 61, and transmits a lowering signal (ON signal) to the control unit of the roller lifting/lowering mechanisms 56 (air cylinders). The control unit of the third servomotor 61 that has received the stop signal (OFF signal) stops the drive of the third servomotor 61, and the control unit of the roller lifting/lowering mechanisms 56 that has received the lowering signal (ON signal) lowers the roller lifting/lowering mechanisms 56 (air cylinders). When the roller lifting/lowering mechanisms 56 are lowered, the lower surfaces 13 of the glass plates 11a and 11b positioned by the first positioning means (first positioning step) and the second positioning means (second positioning step) abut on the carry-in conveyors 53.

In the bend-breaking system 10a and the grinding processing method (glass plate processing system 10), after the glass plates 11a and 11b move from the rear side to the front side in the carry-in region 19 by the carry-in conveyors 53 and the front end edges 16 of the glass plates 11a and 11b abut on the stopper 54, the glass plates 11a and 11b move to the rear side in the front-rear direction by the carry-in conveyors 53, so that the front-rear direction center O1 (the center line L2 of the glass plates 11a and 11b) of the first side edges 14 in the width direction of the glass plates 11a and 11b is located at the second positioning reference L2 in the carry-in region 19. Then, after the front-rear direction center O1 (the center line L2 of the glass plates 11a and 11b) of one side edges 14 in the width direction of the glass plates 11a and 11b is located at the second positioning reference L2 by the second positioning means (second positioning step), the glass plates 11a and 11b are lifted together with the rollers 55 by the roller lifting/lowering mechanisms 56 (air cylinders), and the second side edges 15 of the lifted glass plates 11a and 11b are pressed and caused to move in the width direction by the movement mechanism 57, so that the outermost edge located on the outermost side in the width direction among the first side edges 14 of the glass plates 11a and 11b in the width direction is located at the first positioning reference L1 in the carry-in region 19. Therefore, the front-rear direction center O1 (the center line L2 of the glass plate 11b) of the first side edge 14 extending in the front-rear direction on one side in the width direction of the glass plate 11b to be processed later and having different areas of the upper and lower surfaces 12 and 13 can be accurately located (matched) at the position of the front-rear direction center O1 (the center line L2 of the glass plate 11a) of the first side edge 14 extending in the front-rear direction on one side in the width direction of the glass plate 11a to be processed first. As a result, the outermost edge among the first side edges 14 extending in the front-rear direction on one side in the width direction of the glass plate 11b to be processed later and having different sizes in which the areas of the upper surface 12 and the lower surface 13 are different can be accurately located (matched) at the position of the outermost edge among the first side edges 14 extending in the front-rear direction on one side in the width direction of the glass plate 11a to be processed first.

Another example of the procedure of positioning the glass plates 11a and 11b in the carry-in region 19 is as follows. The controller transmits an advance signal (ON signal) to the control unit of the carry-in conveyors 53, and the control unit of the carry-in conveyors 53 that has received the advance signal (ON signal) drives the carry-in conveyors 53. The glass plates 11a and 11b carried into the carry-in region 19 are placed on the carry-in conveyors 53 in a state in which the lower surfaces 13 thereof abut on the carry-in conveyors 53. The glass plates 11a and 11b placed on the carry-in conveyors 53 gradually move forward in the front-rear direction from the rear side (start position) of the carry-in region 19 toward the front side by the carry-in conveyors 53. When the glass plates 11a and 11b move from the rear side of the carry-in region 19 toward the front side and the front end edges 16 of the glass plates 11a and 11b abut on the stopper 54, the contact sensor installed in the stopper 54 detects the abutment of the front end edges 16 of the glass plates 11a and 11b on the stopper 54, and transmits a contact signal to the controller.

The controller that has received the contact signal transmits a stop signal (OFF signal) to the control unit of the carry-in conveyors 53, and the control unit of the carry-in conveyors 53 that has received the stop signal (OFF signal) stops the drive of the carry-in conveyors 53. Next, the controller transmits a lifting signal (ON signal) to the control unit of the roller lifting/lowering mechanisms 56 (air cylinders). Upon receiving the lifting signal (ON signal), the control unit of the roller lifting/lowering mechanisms 56 lifts the roller lifting/lowering mechanisms 56 (air cylinders). The rollers 55 are lifted through the lifting of the roller lifting/lowering mechanisms 56, parts of the circumferential edge portions of the rollers 55 are exposed to the upper side of the carry-in conveyors 53, and in a state in which the lifted rollers 55 abut on the lower surfaces 13 of the glass plates 11a and 11b, the rollers 55 lift the glass plates 11a and 11b to the upper side of the carry-in conveyors 53.

After the lifting of the roller lifting/lowering mechanisms 56 (air cylinders) is completed, the controller transmits, to the control unit of the third servomotor 61, the number of rotations of the third servomotor 61 calculated from the first movement dimension (first movement distance) in the width direction of the movement mechanism 57 for locating the first side edges 14 of the glass plates 11a and 11b at the first positioning reference L1 (virtual first positioning reference line), and transmits a forward rotation signal (ON signal) to the control unit of the third servomotor 61. The control unit of the third servomotor 61 that has received the number of rotations and the forward rotation signal (ON signal) drives the third servomotor 61 such that the shaft of the third servomotor 61 rotates in the clockwise direction by a predetermined number of rotations.

When the feed screw rotates due to the rotation of the shaft of the third servomotor 61 in the clockwise direction, the abutting member 63 gradually moves together with the movement arm 62 from the movement start point to one side (one side portion 58a of the carry-in region 19) in the width direction. The abutting member 63 that is moving to one side in the width direction abuts on the second side edges 15 of the glass plates 11a and 11b, and the abutting member 63 presses the second side edges 15 of the glass plates 11a and 11b in the width direction such that the glass plates 11a and 11b move from the other side to the one side in the width direction. The glass plates 11a and 11b pressed by the abutting member 63 move in the width direction on the rollers 55 from the other side to the one side in the width direction, and the outermost edge located on the outermost side in the width direction among the first side edges 14 of the glass plates 11a and 11b in the width direction is located at the first positioning reference L1 (virtual first positioning reference line) in the carry-in region 19 (first positioning means (first positioning step)).

When the movement of the abutting member 63 to one side in the width direction is ended and the first side edge 14 in the width direction of the glass plates 11a and 11b is located at the first positioning reference L1 in the carry-in region 19, the controller transmits a stop signal (OFF signal) to the control unit of the third servomotor 61. The control unit of the third servomotor 61 that has received the stop signal (OFF signal) stops the drive of the third servomotor 61. After the third servomotor 61 stops being driven, the controller transmits a reverse rotation signal (ON signal) to the control unit of the third servomotor 61. The control unit of the third servomotor 61 that has received the reverse rotation signal (ON signal) drives the third servomotor 61 such that the shaft of the third servomotor 61 rotates in the counterclockwise direction by a predetermined number of rotations.

When the feed screw rotates due to the rotation of the shaft of the third servomotor 61 in the counterclockwise direction, the abutting member 63 gradually moves to the other side (the other side portion 58b of the carry-in region 19) in the width direction together with the movement arm 62, and the abutting member 63 returns to the movement start point. After the abutting member 63 returns to the movement start point, the controller transmits a stop signal (OFF signal) to the control unit of the third servomotor 61, and transmits a lowering signal (ON signal) to the control unit of the roller lifting/lowering mechanisms 56 (air cylinders). The control unit of the third servomotor 61 that has received the stop signal (OFF signal) stops the drive of the third servomotor 61, and the control unit of the roller lifting/lowering mechanisms 56 that has received the lowering signal (ON signal) lowers the roller lifting/lowering mechanisms 56 (air cylinders). When the roller lifting/lowering mechanisms 56 are lowered, the lower surfaces 13 of the glass plates 11a and 11b abut on the carry-in conveyors 53.

After the lower surfaces 13 of the glass plates 11a and 11b abut on the carry-in conveyors 53, the controller transmits the second movement dimension to the rear side in the front-rear direction of the carry-in conveyors 53 for locating the front-rear direction center O1 of the first side edges 14 of the glass plates 11a and 11b at the second positioning reference L2 (virtual second positioning reference line) of the carry-in region 19 to the control unit of the carry-in conveyors 53, and transmits a conveyance signal (ON signal) to the control unit of the carry-in conveyors 53.

The control unit of the carry-in conveyors 53 that has received the second movement dimension and the conveyance signal (ON signal) drives the carry-in conveyors 53, and thus the glass plates 11a and 11b are caused to move rearward in the front-rear direction by the second movement dimension by the carry-in conveyors 53. When the carry-in conveyors 53 cause the glass plates 11a and 11b to move rearward in the front-rear direction by the second movement dimension, the front-rear direction center O1 (the center line L2 extending in the width direction obtained by dividing the dimension of the glass plates 11a and 11b in the front-rear direction by 2) of the first side edges 14 of the glass plates 11a and 11b in the width direction is located at the second positioning reference L2 (virtual second positioning reference line) in the carry-in region 19 (second positioning means (second positioning step)). After moving the glass plates 11a and 11b rearward in the front-rear direction by the second movement dimension, the controller transmits a stop signal (OFF signal) to the control unit of the carry-in conveyors 53, and the control unit of the carry-in conveyors 53 that has received the stop signal (OFF signal) stops the drive of the carry-in conveyors 53. The glass plates 11a and 11b are positioned by the first positioning means (first positioning step) and the second positioning means (second positioning step) .

In the bend-breaking system 10a and the grinding processing method (glass plate processing system 10), after the glass plates 11a and 11b are caused to move from the rear side to the front side in the carry-in region 19 by the carry-in conveyors 53 and the front end edges 16 of the glass plates 11a and 11b abut on the stopper 54, the glass plates 11a and 11b are lifted together with the rollers 55 by the roller lifting/lowering mechanisms 56 (air cylinders), and the second side edges 15 of the lifted glass plates 11a and 11b are pressed and caused to move in the width direction by the movement mechanism 57, so that the outermost edge located on the outermost side in the width direction of the first side edges 14 in the width direction of the glass plates 11a and 11b is located at the first positioning reference L1 in the carry-in region 19. Then, after the outermost edge located on the outermost side in the width direction among the first side edges 14 in the width direction of the glass plates 11a and 11b is located at the first positioning reference L1 by the first positioning means (first positioning step), the glass plates 11a and 11b are lowered together with the rollers 55 by the roller lifting/lowering mechanisms 56 (air cylinders), the glass plates 11a and 11b move from the rear side of the carry-in region 19 to the front side by the carry-in conveyors 53, the front end edges 16 of the glass plates 11a and 11b abut on the stopper 54, and then the glass plates 11a and 11b move to the rear side in the front-rear direction by the carry-in conveyors 53, so that the front-rear direction center O1 (the center line L2 of the glass plates 11a and 11b) of the first side edges 14 in the width direction of the glass plates 11a and 11b is located at the second positioning reference L2 in the carry-in region 19. As a result, the outermost edge among the first side edges 14 extending in the front-rear direction on one side in the width direction of the glass plate 11b to be processed later and having different sizes in which the areas of the upper surface 12 and the lower surface 13 are different can be accurately located (matched) at the position of the outermost edge among the first side edges 14 extending in the front-rear direction on one side in the width direction of the glass plate 11a to be processed first. In addition, the front-rear direction center O1 (the center line L2 of the glass plate 11b) of the side edge 14 extending in the front-rear direction on one side in the width direction of the glass plate 11b to be processed later and having different sizes in which the areas of the upper and lower surfaces 12 and 13 are different can be accurately located (matched) at the position of the front-rear direction center O1 (the center line L2 of the glass plate 11a) of the side edge 14 extending in the front-rear direction on one side in the width direction of the glass plate 11a to be processed first.

In the bend-breaking system 10a and the bend-breaking processing method (glass plate processing system 10), when the large-size glass plate 11a having large areas of the upper and lower surfaces 12 and 13 and the small-size glass plate 11b having smaller areas of the upper and lower surfaces 12 and 13 than the large-size glass plate 11a are positioned by the first positioning means (first positioning step) and the second positioning means (second positioning step), as illustrated in Fig. 3, the first side edge 14 (one side edge) extending in the front-rear direction of the large-size glass plate 11a and the first side edge 14 (one side edge) extending in the front-rear direction of the small-size glass plate 11b are located at the first positioning reference L1 (virtual first positioning reference line) of the carry-in region 19, and the front-rear direction center O1 in the front-rear direction of the first side edge 14 extending in the front-rear direction of the large-size glass plate 11a and the front-rear direction center O1 in the front-rear direction of the first side edge 14 extending in the front-rear direction of the small-size glass plate 11b are located at the second positioning reference L2 (virtual second positioning reference line) of the carry-in region 19.

In the large-size glass plate 11a and the small-size glass plate 11b positioned by the first positioning means (first positioning step) and the second positioning means (second positioning step), the outermost edges (in the illustrated glass plates 11a and 11b, the first side edge 14) located on the outermost side in the width direction among the first side edges 14 of the glass plates 11a and 11b match each other at the first positioning reference L1 (virtual first positioning reference line), and the front-rear direction center O1 (center line L2 extending in the width direction by dividing the dimension of the glass plates 11a and 11b in the front-rear direction by 2) of the first side edges 14 of the glass plates 11a and 11b match each other at the second positioning reference L2 (virtual second positioning reference line).

After the positioning of the glass plates 11a and 11b is completed by the first positioning means (first positioning step) and the second positioning means (second positioning step), the controller transmits a lowering signal (ON signal) to the control unit of the lifting/lowering mechanism (servomotor) of the first glass plate holder 40a. The control unit of the lifting/lowering mechanism (servomotor) that has received the lowering signal (ON signal) lowers the holder sucker 42 (attraction pad) toward the upper surfaces 12 of the glass plates 11a and 11b by using the lifting/lowering mechanism. After the holder sucker 42 of the first glass plate holder 40a abuts on the upper surfaces 12 of the glass plates 11a and 11b, the controller transmits a suction signal (ON signal) to the control unit of the vacuum mechanism of first glass plate holder 40a. The control unit of the vacuum mechanism that has received the suction signal (ON signal) activates the vacuum mechanism.

When the vacuum mechanism is activated, the glass plates 11a and 11b located in the carry-in region 19 are sucked by the holder sucker 42. After activating the vacuum mechanism, the controller transmits a lifting signal (ON signal) to the control unit of the pad lifting/lowering mechanism (air cylinder) of the first glass plate holder 40a. The control unit of the pad lifting/lowering mechanism (air cylinder) that has received the lifting signal (ON signal) lifts the holder sucker 42 by using the pad lifting/lowering mechanism. The glass plates 11a and 11b positioned by the first positioning means (first positioning step) and the second positioning means (second positioning step) in the carry-in region 19 are lifted together with the holder sucker 42 in a state of being attracted to the holder sucker 42.

After holder sucker 42 (glass plate 11a and 11b) is lifted, the controller transmits an advance signal (ON signal) to the control unit of the second servomotor 39. The control unit of the second servomotor 39 that has received the advance signal (ON signal) drives the second servomotor 39. The slide block moves in the front-rear direction from the rear side of the second guide frame 35 toward the front side due to the rotation of the shaft of the second servomotor 39, and thus the first glass plate holder 40a (the glass plates 11a and 11b attracted by the holder sucker 42 (attraction pad)) moves from the carry-in region 19 to the notching processing region 20 (glass plate movement means (glass plate movement step)). The movement of the slide block causes the first glass plate holder 40a and the second to fourth glass plate holders 40b to 40d to move forward in the front-rear direction.

After the first glass plate holder 40a moves to the notching processing region 20, the controller transmits a lowering signal (ON signal) to the control unit of the pad lifting/lowering mechanism (air cylinder) of the first glass plate holder 40a. The control unit of the pad lifting/lowering mechanism (air cylinder) that has received the lowering signal (ON signal) causes the pad lifting/lowering mechanism to lower the holder sucker 42 (glass plates 11a and 11b) onto the notching processing table 64 in the notching processing region 20. After the glass plates 11a and 11b attracted to the holder sucker 42 of the first glass plate holder 40a abut on the notching processing table 64, the controller transmits a stop signal (OFF signal) to the control unit of the vacuum mechanism of the first glass plate holder 40a. The control unit of the vacuum mechanism that has received the stop signal (OFF signal) stops the activation of the vacuum mechanism. When the vacuum mechanism is stopped, the attraction of the holder sucker 42 to the glass plates 11a and 11b is released, and the positioned glass plates 11a and 11b are placed on the notching processing table 64.

Next, the controller transmits a lifting signal (ON signal) to the control unit of the pad lifting/lowering mechanism (air cylinder) of the first glass plate holder 40a, and the first glass plate holder 40a (pad lifting/lowering mechanism) is lifted above the notching processing table 64 in response to the lifting signal. After the first glass plate holder 40a is lifted, a retreat signal (ON signal) is transmitted from the controller to the control unit of the second servomotor 39, the first glass plate holder 40a moves from the notching processing region 20 to the carry-in region 19 due to the rotation of the shaft of the second servomotor 39, and the first glass plate holder 40a stands by above the carry-in region 19. The second to fourth glass plate holders 40b to 40d also move rearward in the front-rear direction together with the first glass plate holder 40a, the second glass plate holder 40b stands by above the notching processing region 20, the third glass plate holder 40c stands by above the bend-breaking processing region 21, and the fourth glass plate holder 40d stands by above the grinding processing region 22.

A conveyance procedure (glass plate movement means (glass plate movement step)) for the glass plates 11a and 11b after the notching processing from the notching processing region 20 to the bend-breaking processing region 21 using the second glass plate holder 40b, a conveyance procedure (glass plate movement means (glass plate movement step)) for the glass plates 11a and 11b after the bend-breaking processing from the bend-breaking processing region 21 to the grinding processing region 22 using the third glass plate holder 40c, and a conveyance procedure (glass plate movement means (glass plate movement step)) for the glass plates 11a and 11b after the grinding processing from the grinding processing region 22 to the carry-out region 23 using the fourth glass plate holder 40d are the same as those for the glass plates 11a and 11b from the carry-in region 19 to the notching processing region 20 using the first glass plate holder 40a. Therefore, description of the conveyance procedures using the second to fourth glass plate holders 40b to 40d will be omitted.

After the glass plates 11a and 11b are placed on the notching processing table 64, the controller transmits a retreat signal (ON signal) to the control unit of the first servomotor 34. The control unit of the first servomotor 34 that has received the retreat signal (ON signal) drives the first servomotor 34. The first slide block moves in the front-rear direction from the front side of the first guide frame 30 toward the rear side due to the rotation of the shaft of the first servomotor 34, so that the notching device 65 moves rearward in the front-rear direction in the notching processing region 20 together with the first traveling frame 32, and the notching device 65 is located outward in the width direction (notching processing start position) of the first corner portions 18a (front end edges 16) of the glass plates 11a and 11b.

In the notching processing, although not illustrated, the second glass plate holder 40b that has moved (returned) from the bend-breaking processing region 21 to the notching processing region 20 is lowered onto the notching processing table 64 in the notching processing region 20 by the pad lifting/lowering mechanism (air cylinder), the holder sucker 42 (attraction pad) of the second glass plate holder 40b abuts on the upper surfaces 12 of the glass plates 11a and 11b placed on the notching processing table 64, the vacuum mechanism is activated, and the holder sucker 42 of the second glass plate holder 40b presses the glass plates 11a and 11b downward while the holder sucker 42 attracts the glass plates 11a and 11b. During the notching processing, the glass plates 11a and 11b are supported under pressure by the holder sucker 42 of the second glass plate holder 40b.

After the notching device 65 is located outward in the width direction (notching processing start position) of the first corner portion 18a of the glass plates 11a and 11b, the controller transmits a stop signal (OFF signal) to the control unit of the first servomotor 34 and transmits a drive signal (ON signal) to the control unit of the fourth servomotor 71. The control unit of the first servomotor 34 that has received the stop signal (OFF signal) stops the first servomotor 34, and the control unit of the fourth servomotor 71 that has received the drive signal (ON signal) drives the fourth servomotor 71. The slide block 73a moves in the width direction from the other side edge portion 58b of the notching processing region 20 toward the one side edge portion 58a due to the rotation of the shaft of the fourth servomotor 71, so that the notching processing table 64 moves in the width direction from the other side edge portion 58b side of the notching processing region 20 toward the one side edge portion 58a side, and the notching cutter wheel 77 of the notching device 65 is located at the first corner portions 18a of the glass plates 11a and 11b.

After the notching cutter wheel 77 of the notching device 65 is located at the first corner portions 18a of the glass plates 11a and 11b, the controller transmits a drive signal (ON signal) and an NC control signal to the control unit of the air cylinder 75 and the fifth servomotor 76 of the notching device 65, transmits a retreat signal (ON signal) and an NC control signal to the control unit of the first servomotor 34, and transmits an NC control signal to the control unit of the fourth servomotor 71. The control unit of the air cylinder 75, the control unit of the fifth servomotor 76, the control unit of the first servomotor 34, and the control unit of the fourth servomotor 71 of the notching device 65 that have received the drive signal (ON signal) or the NC control signal drive the air cylinder 75, the fifth servomotor 76, the first servomotor 34, and the fourth servomotor 71 to perform the contour control motion using the NC control on the vicinity of the first side edges 14 (first side edge portions) of the glass plates 11a and 11b, and the notching cutter wheel 77 performs notching processing on the vicinity of the first side edges 14 (first side edge portions) of the glass plates 11a and 11b (notching processing means (notching processing step)).

The control unit of the first servomotor 34 that has received the retreat signal (ON signal) drives the first servomotor 34 during the notching processing such that the notching device 65 moves rearward in the front-rear direction in the notching processing region 20, and the control unit of the fourth servomotor 71 drives the fourth servomotor 71 during the notching processing such that the notching device 65 reciprocates in the width direction in the notching processing region 20. The notching cutter wheel 77 of the notching device 65 moves from the first corner portions 18a of the glass plates 11a and 11b toward the second corner portions 18b while forming the contour cutout line K1 in the vicinity of the first side edges 14 (first side edge portion) of the glass plates 11a and 11b.

After the notching processing of the vicinity of the first side edges 14 (first side edge portions) of the glass plates 11a and 11b is ended by the notching cutter wheel 77 of the notching device 65 and the notching cutter wheel 77 is located at the second corner portions 18b of the glass plates 11a and 11b, the notching processing table 64 moves in the width direction from one side edge portion 58a side of the notching processing region 20 toward the other side edge portion 58b side, and the notching cutter wheel 77 performs the notching processing on the vicinity (rear end edge portion) of the rear end edges 17 of the glass plates 11a and 11b according to the movement of the notching processing table 64 in the width direction (notching processing means (notching processing step)).

The control unit of the fourth servomotor 71 drives the fourth servomotor 71 during the notching processing such that the notching processing table 64 moves in the width direction in the notching processing region 20, and the control unit of the first servomotor 34 drives the first servomotor 34 during the notching processing such that the notching device 65 reciprocates in the front-rear direction in the notching processing region 20. The notching cutter wheel 77 of the notching device 65 moves from the second corner portions 18b of the glass plates 11a and 11b toward the third corner portions 18c while forming the contour cutout line K1 in the vicinity of the rear end edges 17 (rear end edge portions) of the glass plates 11a and 11b.

After the notching processing on the vicinity of the rear end edges 17 (rear end edge portions) of the glass plates 11a and 11b is ended by the notching cutter wheel 77 of the notching device 65 and the notching cutter wheel 77 is located at the third corner portions 18c of the glass plates 11a and 11b, the notching device 65 moves forward in the front-rear direction, and the notching cutter wheel 77 performs notching processing on the vicinity of the second side edges 15 (second side edge portions) of the glass plates 11a and 11b according to the movement of the notching device 65 forward in the front-rear direction (notching processing means (notching processing step)).

The control unit of the first servomotor 34 drives the first servomotor 34 during the notching processing such that the notching device 65 moves forward in the front-rear direction in the notching processing region 20, and the control unit of the fourth servomotor 71 drives the fourth servomotor 71 during the notching processing such that the notching processing table 64 reciprocates in the width direction in the notching processing region 20. The notching cutter wheel 77 of the notching device 65 moves from the third corner portions 18c of the glass plates 11a and 11b toward the fourth corner portions 18d while forming the contour cutout line K1 in the vicinity of the second side edges 15 (second side edge portions) of the glass plates 11a and 11b.

After the notching processing on the vicinity of the second side edges (second side edge portions) of the glass plates 11a and 11b is ended by the notching cutter wheel 77 of the notching device 65 and the notching cutter wheel 77 is located at the fourth corner portions 18d of the glass plates 11a and 11b, the notching processing table 64 moves in the width direction from the other side edge portion 58b side of the notching processing region 20 toward the one side edge portion 58a side, and the notching cutter wheel 77 performs the notching processing on the vicinity of the front end edges 16 (front end edge portions) of the glass plates 11a and 11b according to the movement of the notching processing table 64 in the width direction (notching processing means (notching processing step)).

The control unit of the fourth servomotor 71 drives the fourth servomotor 71 during the notching processing such that the notching processing table 64 moves in the width direction in the notching processing region 20, and the control unit of the first servomotor 34 drives the first servomotor 34 during the notching processing such that the notching device 65 reciprocates in the front-rear direction in the notching processing region 20. The notching cutter wheel 77 of the notching device 65 moves from the fourth corner portions 18d of the glass plates 11a and 11b toward the first corner portions 18a while forming the contour cutout line K1 in the vicinity of the front end edges 16 (front end edge portions) of the glass plates 11a and 11b. When the notching processing on the vicinity of the front end edges 16 (front end edge portions) of the glass plates 11a and 11b is ended by the notching cutter wheel 77 of the notching device 65, the notching device 65 moves outward in the width direction (notching processing start position) of the first corner portions 18a (front end edges 16) of the glass plates 11a and 11b and stands by.

In the notching processing region 20, for example, the outermost edge (in the illustrated glass plate 11b, the first side edge 14) located on the outermost side in the width direction among the first side edges 14 extending in the front-rear direction on one side in the width direction of the small-size (small-area) glass plate 11b having a small area of the upper surface 12 and the lower surface 13 to be processed later is located (matched) at the position (first positioning reference L1 (virtual first positioning reference line)) of the outermost edge (in the illustrated glass plate 11a, the first side edge 14) located on the outermost side in the width direction among the first side edges 14 extending in the front-rear direction on one side in the width direction of the large-size (large-area) glass plate 11a having a large area of the upper surface 12 and the lower surface 13 to be processed first by the first positioning means (first positioning step) such that the glass plates 11a and 11b having different sizes in which the areas of the upper surface 12 and the lower surface 13 are different are positioned, and, simultaneously, the front-rear direction center O1 (the center line L2 extending in the width direction obtained by dividing a dimension in the front-rear direction of the glass plate 11b by 2) of the first side edge 14 extending in the front-rear direction on one side in the width direction of the small-size glass plate 11b to be processed later is located (matched) at the position (second positioning reference L2 (virtual second positioning reference line)) of the front-rear direction center O1 (the center line L2 extending in the width direction obtained by dividing the dimension in the front-rear direction of the glass plate 11a by 2) of the first side edge 14 extending in the front-rear direction on one side in the width direction of the large-size glass plate 11a to be processed first by the second positioning means (second positioning step) such that the glass plates 11a and 11b having different areas of the upper surface 12 and the lower surface 13 are positioned. Thereafter, in a case where notching processing is performed on the glass plate 11b having a different area to be processed later, a movement distance of the notching device 65 until reaching the side edge 14 of the large-size glass plate 11a (a movement distance of the notching processing table 64 in the width direction) is equal to a movement distance of the notching device 65 until reaching the side edge 14 of the small-size glass plate 11b (a movement distance of the notching processing table 64 in the width direction), and a movement distance until the notching device 65 returns from the outermost edge (first side edge 14) of the large-size glass plate 11a to the outside in the width direction of the glass plate 11a is equal to a movement distance until returning from the outermost edge (first side edge 14) of the small-size glass plate 11b to the outside in the width direction of the glass plate 11b. The movement distance of the notching device 65 until reaching the outermost edge (side edge 14) of the small-size glass plate 11b is shortened, the movement distance of the notching device 65 until returning from the outermost edge (side edge 14) of the small-size glass plate 11b to the outside in the width direction of the glass is shortened, the arrival time (non-processing time) until the notching device 65 reaches the outermost edge (side edge 14) of the small-size glass plate 11b is reduced, and the return time until the notching device 65 returns from the outermost edge (side edge 14) of the small-size glass plate 11b to the outside in the width direction of the glass plate 11b is reduced.

In the bend-breaking system 10a and the bend-breaking processing method (glass plate processing system 10), the position (first positioning reference L1 (virtual first positioning reference line)) of the outermost edge (in the illustrated glass plate 11a, one side edge 14) located on the outermost side in the width direction among one side edges 14 extending in the front-rear direction on one side in the width direction of the large-size (large-area) glass plate 11a having a large area of the upper surface 12 and the lower surface 13 to be processed first and the position (first positioning reference L1 (virtual first positioning reference line)) of the outermost edge (in the illustrated glass plate 11b, one side edge 14) located on the outermost side in the width direction among one side edges 14 extending in the front-rear direction on one side in the width direction of the small-size (small-area) glass plate 11b having a small area of the upper surface 12 and the lower surface 13 to be processed later match each other through the first positioning means (first positioning step) such that the glass plates 11a and 11b having different sizes in which the areas of the upper surface 12 and the lower surface 13 are different are positioned, and, simultaneously, the position (second positioning reference (virtual second positioning reference line)) of the front-rear direction center O1 (the center line L2 extending in the width direction obtained by dividing a dimension in the front-rear direction of the glass plate 11a by 2) of the side edge 14 extending in the front-rear direction on one side in the width direction of the large-size glass plate 11a to be processed first and a position (second positioning reference L2 (virtual second positioning reference line)) of the front-rear direction center O1 (the center line L2 extending in the width direction obtained by dividing a dimension in the front-rear direction of the glass plate 11b by 2) of the side edge 14 extending in the front-rear direction on one side in the width direction of the small-size glass plate 11b to be processed later match each other through the second positioning means (second positioning step) such that the glass plates 11a and 11b having different sizes in which the areas of the upper surface 12 and the lower surface 13 are different are positioned. Thereafter, the notching processing is performed on the small-size glass plate 11b (the glass plate 11b having a different area) to be processed later. Therefore, a movement distance of the notching device 65 (a movement distance of the notching processing table 64 in the width direction) until reaching the outermost edge (side edge 14) of the large-size (large-area) glass plate 11a having a large area of the upper surface 12 and the lower surface 13 is equal to a movement distance of the notching device 65 (a movement distance of the notching processing table 64 in the width direction) until reaching the outermost edge (side edge 14) of the small-size (small-area) glass plate 11b having a small area of the upper surface 12 and the lower surface 13, and a movement distance (movement distance of the notching processing table 64 in the width direction) from the outermost edge (side edge 14) of the large-size glass plate 11a until the notching device 65 returns to the outside in the width direction of the glass plate 11a is equal to a movement distance (a movement distance of the notching processing table 64 in the width direction) from the outermost edge (side edge 14) of the small-size glass plate 11b until the notching device 65 returns to the outside in the width direction of the small-size glass plate 11b. Therefore, the movement distance of the notching device 65 until the notching device 65 reaches the outermost edge (side edge 14) of the small-size glass plate 11b can be reduced, and the movement distance of the notching device 65 until the notching device 65 returns to the outside in the width direction of the small-size glass plate 11b from the outermost edge (side edge 14) of the small-size glass plate 11b can be reduced. It is possible to shorten the arrival time (non-processing time) until the notching device 65 reaches the outermost edge (side edge 14) of the small-size glass plate 11b, and it is possible to shorten the return time until the notching device 65 returns from the outermost edge (side edge 14) of the small-size glass plate 11b to the outside in the width direction of the glass plate 11b.

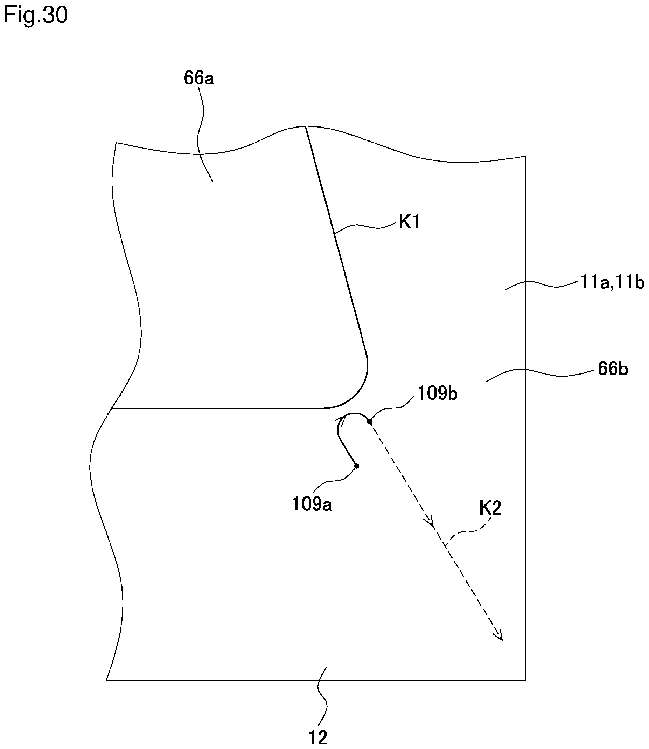

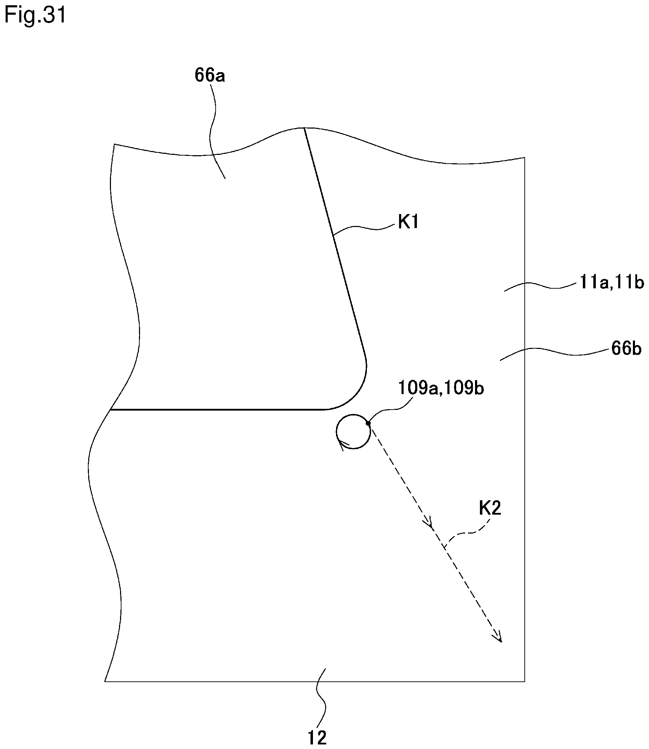

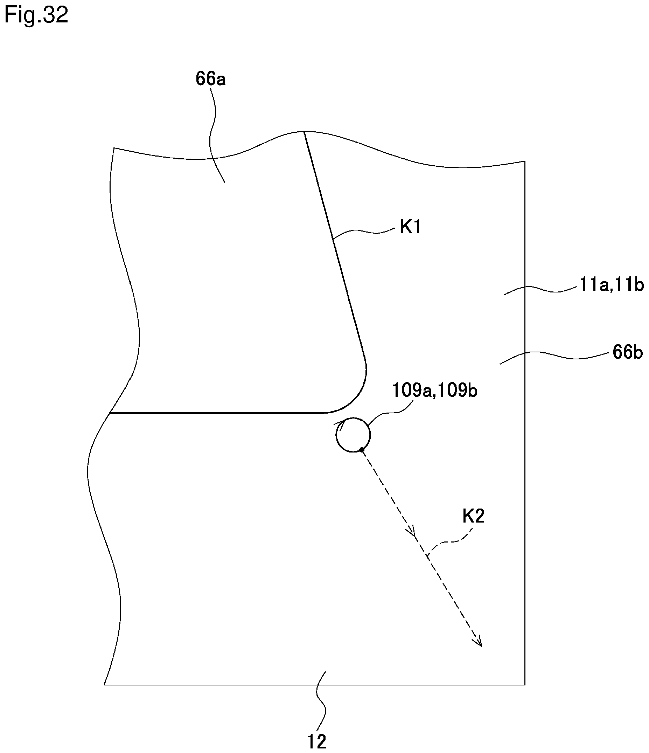

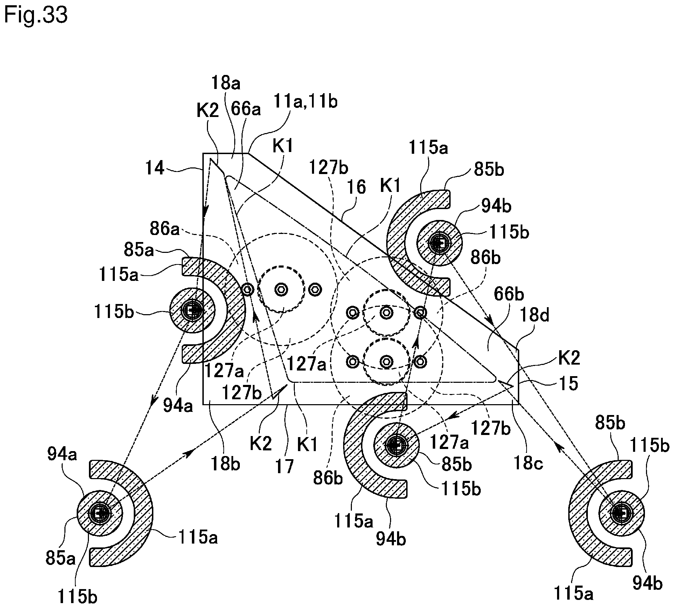

Fig. 30 is a diagram illustrating one example of a change of a rolling direction of the bend-breaking cutter wheel 103, and Fig. 31 is a diagram illustrating another example of a change of a rolling direction of the bend-breaking cutter wheel 103. Fig. 32 is a diagram illustrating still another example of a change of a rolling direction of the bend-breaking cutter wheel 103, and Fig. 33 is a diagram illustrating an example of a bend-breaking procedure in the bend-breaking processing.

After the notching processing (contour cutout line K1) is ended for the edge portions 66b (peripheral edge portions) of the glass plates 11a and 11b, the glass plates 11a and 11b after the notching processing are conveyed from the notching processing region 20 to the bend-breaking processing region 21 by the second glass plate holder 40b. In the bend-breaking processing region 21, the end cutting line K2 is inserted in the edge portions 66b extending to the outside of the contour cutout line K1, of the glass plates 11a and 11b after the notching processing, and the edge portions 66b of the glass plates 11a and 11b surrounded by the contour cutout line K1 and the end cutting line K2 are bend-broken.

In the bend-breaking processing, although not illustrated, the third glass plate holder 40c that has moved (returned) from the grinding processing region 22 to the bend-breaking processing region 21 is lowered onto the bend-breaking processing table 84 in the bend-breaking processing region 21 by the pad lifting/lowering mechanism (air cylinder), the holder sucker 42 (attraction pad) of the third glass plate holder 40c abuts on the upper surfaces 12 of the glass plates 11a and 11b placed on the bend-breaking processing table 84, the vacuum mechanism is activated, and the holder sucker 42 of the third glass plate holder 40c presses the glass plates 11a and 11b downward while the holder sucker 42 attracts the glass plates 11a and 11b. During the bend-breaking processing, the glass plates 11a and 11b are supported under pressure by the holder sucker 42 of the third glass plate holder 40c.

After the glass plates 11a and 11b subjected to the notching processing are placed on the bend-breaking processing table 84, the controller transmits a drive signal (ON signal) to each of the control units of the holder lifting/lowering mechanism 104, the first pressing member lifting/lowering mechanism 106a, the second pressing member lifting/lowering mechanism 106b, the sixth servomotor 95 (X-axis servomotor), the seventh servomotor 97 (Y-axis servomotor), the eighth servomotor 100 (X-axis servomotor), and the ninth servomotor 101 (Y-axis servomotor) of the first bend-breaking device 85a and the second bend-breaking device 85b. The control unit of the holder lifting/lowering mechanism 104, the control units of the first and second pressing member lifting/lowering mechanisms 106a and 106b, and the control units of the sixth to ninth servomotors 95, 97, 100, and 101 that have received the drive signal (ON signal) drive the holder lifting/lowering mechanism 104, the first and second pressing member lifting/lowering mechanisms 106a and 106b, and the sixth to ninth servomotors 95, 97, 100, and 101. A command (signal) is transmitted from the controller to the holder lifting/lowering mechanism 104, the first and second pressing member lifting/lowering mechanisms 106a and 106b, and the sixth to ninth servomotors 95, 97, 100, and 101 so that the first and second bend-breaking devices 85a and 85b travel (move) on the upper surfaces of the glass plates 11a and 11b along a preset traveling trajectory (bend-breaking trajectory).

In the first bend-breaking device 85a driven by the holder lifting/lowering mechanism 104, the first and second pressing member lifting/lowering mechanisms 106a and 106b, and the sixth to ninth servomotors 95, 97, 100, and 101, the first bend-breaking jig 94a (bend-breaking jig) moves in the front-rear direction and the width direction (oblique direction) by the first X-axis actuator 96a and the first Y-axis actuator 98a, and the first bend-breaking jig 94a is located at the bend-breaking start position in a first (initial) end cutting line forming region outward in the width direction of the first corner portions 18a of the glass plates 11a and 11b.

In the second bend-breaking device 85b driven by the holder lifting/lowering mechanism 104, the first and second pressing member lifting/lowering mechanisms 106a and 106b, and the sixth to ninth servomotors 95, 97, 100, and 101, the second bend-breaking jig 94b (bend-breaking jig) moves in the front-rear direction and the width direction (oblique direction) by the second X-axis actuator 96b and the second Y-axis actuator 98b, and the second bend-breaking jig 94b is located at the bend-breaking start position in a first (initial) end cutting line forming region outward in the width direction of the fourth corner portion 18d of the glass plates 11a and 11b.

After the first bend-breaking jig 94a of the first bend-breaking device 85a is located at the bend-breaking start position (outward in the width direction) of the first corner portions 18a of the glass plates 11a and 11b, as illustrated by arrows in Fig. 30, the first bend-breaking jig 94a moves in the front-rear direction and the width direction (oblique direction) by the first X-axis actuator 96a and the first Y-axis actuator 98a, and moves to a rolling direction changing position in the vicinity (nearest) of the contour cutout line K1 among the edge portions 66b of the glass plates 11a and 11b extending outside the contour cutout line K1. After the first bend-breaking jig 94a moves to the rolling direction changing position in the vicinity of the contour cutout line K1, the holder lifting/lowering mechanism 104 (first lifting/lowering mechanism) is operated to lower the bend-breaking cutter holder 102 toward the upper surfaces 12 of the edge portions 66b of the glass plates 11a and 11b (holder lowering means (holder lowering step)).

After the second bend-breaking jig 94b of the second bend-breaking device 85b is located at the bend-breaking start position (outward in the width direction) of the fourth corner portions 18d of the glass plates 11a and 11b, as illustrated by arrows in Fig. 30, the second bend-breaking jig 94b moves in the front-rear direction and the width direction (oblique direction) by the second X-axis actuator 96b and the second Y-axis actuator 98b, and moves to the rolling direction change region in the vicinity (nearest) of the contour cutout line K1 among the edge portions 66b of the glass plates 11a and 11b extending outside the contour cutout line K1. After the second bend-breaking jig 94b moves to the rolling direction change region in the vicinity of the contour cutout line K1, the holder lifting/lowering mechanism 104 is operated to lower the bend-breaking cutter holder 102 toward the upper surfaces 12 of the edge portions 66b of the glass plates 11a and 11b (holder lowering means (holder lowering step)). Note that the rolling direction change region may be not in the vicinity of the contour cutout line K1 but in the vicinity of the peripheral edges of the glass plates 11a and 11b.

When the bend-breaking cutter holder 102 is lowered, the bend-breaking cutter wheel 103 is exposed downward from a through-hole 116 formed at the center of the second pressing member 105b. When the bend-breaking cutter wheel 103 is exposed below the through-hole 116, the bend-breaking cutter wheel 103 abuts on the upper surfaces 12 of the glass plates 11a and 11b in the rolling direction change region with a predetermined pressing force. In this case, a rolling direction of the bend-breaking cutter wheel 103 is not determined, the circumferential edge 112 of the bend-breaking cutter wheel 103 is directed in one of four directions, and the rolling direction of the bend-breaking cutter wheel 103 does not match the extending direction of the virtual end cutting line at the edge portions 66b of the glass plates 11a and 11b.

The controller transmits a travel signal to the control units of the sixth and seventh servomotors 95 and 97 such that the bend-breaking cutter wheel 103 travels (moves) in a predetermined direction. The control units of the sixth and seventh servomotors 95 and 97 that have received the travel signal drive the sixth and seventh servomotors 95 and 97. The first X-axis actuator 96a and the first Y-axis actuator 98a are operated due to the drive of the sixth and seventh servomotors 95 and 97, and the bend-breaking cutter wheel 103 slightly travels (moves) in a predetermined direction, so that a caster effect is exerted on the bend-breaking cutter wheel 103, the bend-breaking cutter wheel 103 rotates in the circumferential direction (axial direction) (the clockwise direction or the counterclockwise direction) about the cutter holder center axis O2, and the rolling (moving) direction of the circumferential edge 112 of the bend-breaking cutter wheel 103 faces the traveling (moving) direction (the direction in which the virtual end cutting line extends) of the first bend-breaking jig 94a (the bend-breaking cutter holder 102) (rolling direction change means (rolling direction change step)).

The controller transmits a travel signal to the control units of the eighth and ninth servomotors 100 and 101 such that the bend-breaking cutter wheel 103 travels (moves) in a predetermined direction. The control units of the eighth and ninth servomotors 100 and 101 that have received the travel signal drive the eighth and ninth servomotors 100 and 101. The second X-axis actuator 96b and the second Y-axis actuator 98b are operated due to the drive of the eighth and ninth servomotors 100 and 101, and the bend-breaking cutter wheel 103 slightly travels (moves) in a predetermined direction, so that a caster effect is exerted on the bend-breaking cutter wheel 103, the bend-breaking cutter wheel 103 rotates in the circumferential direction (the axial direction) (the clockwise direction or the counterclockwise direction) about the cutter holder center axis O2, and the rolling (moving) direction of the circumferential edge 112 of the bend-breaking cutter wheel 103 faces the traveling (moving) direction (the direction in which the virtual end cutting line extends) of the second bend-breaking jig 94b (the bend-breaking cutter holder 102) (rolling direction change means (rolling direction change step)). A travel dimension (movement dimension) of the bend-breaking cutter wheel 103 (first and second bend-breaking jigs 94a and 94b) in a predetermined direction is 0.8 to 4 mm.

As illustrated in Fig. 30, in one example of the change of the rolling direction of the bend-breaking cutter wheel 103, when the first bend-breaking jig 94a (bend-breaking jig) and the second bend-breaking jig 94b (bend-breaking jig) travel (move) in a circular shape (semicircular shape) from a rolling direction change start point 109a on the side of the virtual end cutting line toward the rolling direction change end point 109b, the circumferential edge 112 of the bend-breaking cutter wheel 103 turns by 180° to draw a circular trajectory (semicircular trajectory), and the circumferential edge 112 of the cutter wheel 103 is located at the start point of the virtual end cutting line (the rolling direction change end point 109b), the rolling (moving) direction of the circumferential edge 112 of the bend-breaking cutter wheel 103 faces the traveling (moving) direction of the first and second bend-breaking jigs 94a and 94b (the direction in which the virtual end cutting line extends).

In another example of the change of the rolling direction of the bend-breaking cutter wheel 103, as illustrated in Figs. 31 and 32, when the first bend-breaking jig 94a (bend-breaking jig) and the second bend-breaking jig 94b (bend-breaking jig) travel (move) in a circular shape (perfect circular shape) from the start point of the virtual end cutting line (rolling direction change start point 109a) toward the start point of the virtual end cutting line (rolling direction change end point 109b), the circumferential edge 112 of the bend-breaking cutter wheel 103 turns by 360° to draw a circular trajectory (perfect circle), and the circumferential edge 112 of the cutter wheel 103 is located at the start point of the virtual end cutting line (rolling direction change end point 109b), the rolling (moving) direction of the circumferential edge 112 of the bend-breaking cutter wheel 103 faces the traveling (moving) direction of the first and second bend-breaking jigs 94a and 94b (the direction in which the virtual end cutting line extends). In Fig. 31, the start points (rolling direction change start point 109a and rolling direction change end point 109b) of the virtual end cutting line are located at the contact points of the circular trajectory (perfect circle) defined by the first bend-breaking jig 94a and the second bend-breaking jig 94b, and the end cutting line K2 extends in the tangential direction of the circular trajectory (perfect circle). In Fig. 32, the start points (the rolling direction change start point 109a and the rolling direction change end point 109b) of the virtual end cutting line are located on the circular trajectory (perfect circle) defined by the first bend-breaking jig 94a and the second bend-breaking jig 94b, and the end cutting line K2 extends in the radial direction of the circular trajectory (perfect circle).

In the glass plate processing system 10 (bend-breaking processing method), the first and second bend-breaking jigs 94a and 94b are caused to slightly travel (draw the circular trajectory) in a predetermined direction on the upper surfaces 12 of the glass plates 11a and 11b in parallel to the upper surfaces 12 of the edge portions 66b of the glass plates 11a and 11b in the rolling direction change region, so that the bend-breaking cutter wheel 103 exerts a caster effect, the rolling (moving) direction of the circumferential edge 112 of the bend-breaking cutter wheel 103 is changed to the traveling (moving) direction of the first bend-breaking jig 94a (bend-breaking cutter holder 102) (the direction in which the virtual end cutting line extends), and the rolling (moving) direction of the circumferential edge 112 of the bend-breaking cutter wheel 103 is changed to the traveling (moving) direction of the second bend-breaking jig 94b (bend-breaking cutter holder 102) (the direction in which the virtual end cutting line extends).

After the rolling direction of the circumferential edge 112 of the bend-breaking cutter wheel 103 is changed to the traveling direction of the first and second bend-breaking jigs 94a and 94b (the direction in which the virtual end cutting line extends) by the rolling direction change means (rolling direction change step) (after the rolling direction of the bend-breaking cutter wheel 103 becomes the same as the traveling direction of the first and second bend-breaking jigs 94a and 94b), the first bend-breaking jig 94a travels linearly from the vicinity of the contour cutout line K1 of the glass plates 11a and 11b toward the edges of the glass plates 11a and 11b, and the bend-breaking cutter wheel 103 forms the end cutting line K2 (scribe) in a first (initial) end cutting line forming region of the edge portions 66b of the glass plates 11a and 11b in the traveling direction of the first bend-breaking jig 94a (end cutting line forming means (end cutting line forming step)).

In the end cutting line forming means (end cutting line forming step), while the first support device 86a moves in synchronization with the first bend-breaking device 85a, the first and second support surfaces 127a and 127b of the first and second support members 118a and 118b support the lower surface 13 of the edge portion 66b extending outside the contour cutout line K1 of the glass plates 11a and 11b, the bend-breaking cutter wheel 103 of the first bend-breaking jig 94a forms the end cutting line K2 on the edge portions 66b of the glass plates 11a and 11b.

Further, the second bend-breaking jig 94b travels linearly from the vicinity of the contour cutout lines K1 of the glass plates 11a and 11b toward the edges of the glass plates 11a and 11b, and the bend-breaking cutter wheel 103 forms the end cutting line K2 (scribe) in the first (initial) end cutting line forming region (predetermined region) of the edge portions 66b of the glass plates 11a and 11b in the traveling direction of the second bend-breaking jig 94b (end cutting line forming means (end cutting line forming step)). In the end cutting line forming means (end cutting line forming step), while the second support device 86b moves in synchronization with the second bend-breaking device 85b, the bend-breaking cutter wheel 103 of the second bend-breaking jig 94b forms the end cutting line K2 on the edge portion 66b of the glass plates 11a and 11b in a state in which the first and second support surfaces 127a and 127b of the first and second support members 118a and 118b support the lower surface 13 of the edge portion 66b extending outside the contour cutout line K1 of the glass plates 11a and 11b.

The first and second bend-breaking devices 85a and 85b and the first and second support devices 86a and 86b travel (move) at the same speed. In the end cutting line forming means (end cutting line forming step), the first and second bend-breaking jigs 94a and 94b may travel linearly from the edges of the glass plates 11a and 11b toward the vicinity of the contour cutout line K1 of the glass plates 11a and 11b, and the bend-breaking cutter wheel 103 may form the end cutting line K2 (scribe) on the edge portions 66b of the glass plates 11a and 11b. In the bend-breaking system 10a and the grinding processing method (glass plate processing system 10), the first and second support surfaces 127a and 127b of the first and second support members 118a and 118b support the lower surfaces 13 of the edge portions 66b of the glass plates 11a and 11b, so that the elastic deformation of the edge portions 66b can be prevented, and the end cutting line K2 can be reliably formed on the edge portions 66b of the glass plates 11a and 11b in a state in which the edge portions 66b of the glass plates 11a and 11b are horizontally held.

After the end cutting line K2 is formed in the first (initial) end cutting line forming region of the edge portions 66b of the glass plates 11a and 11b, the holder lifting/lowering mechanism 104 is operated to lift the bend-breaking cutter holder 102 from the edges of the edge portions 66b of the glass plates 11a and 11b (holder lifting means (holder lifting step)). After the bend-breaking cutter holder 102 is lifted by the holder lifting means (holder lifting step), the first and second bend-breaking devices 85a and 85b (first and second bend-breaking jigs 94a and 94b) are caused to move to the first (initial) pressing region through operations of the first and second X-axis actuators 96a and 96b and the first and second Y-axis actuators 98a and 98b (bend-breaking device movement means (bend-breaking device movement step)).

After the first and second bend-breaking devices 85a and 85b are caused to move to the first (initial) pressing region by the bend-breaking device movement means (bend-breaking device movement step), as illustrated in Fig. 33, the first pressing member 105a of the first and second bend-breaking devices 85a and 85b is lowered in the up-down direction by the first pressing member lifting/lowering mechanism 106a, and the first pressing surface 115a of the first pressing member 105a and the first and second support surfaces 127a and 127b of the first and second support members 118a and 118b sandwich the main body portions 66a and the edge portions 66b of the glass plates 11a and 11b (glass plate sandwiching means (glass plate sandwiching step)).

In the glass plate sandwiching means (glass plate sandwiching step), when the first pressing member 105a of the first and second bend-breaking devices 85a and 85b is lowered by the first pressing member lifting/lowering mechanism 106a (second lifting/lowering mechanism), the first pressing surface 115a of the first pressing member 105a formed in a semi-annular shape abuts on the upper surfaces 12 of the edge portions 66b of the glass plates 11a and 11b extending to the vicinity of the outside of the contour cutout line K1 across the contour cutout line K1 and the upper surfaces 12 of the main body portions 66a of the glass plates 11a and 11b extending to the vicinity of the inside of the contour cutout line K1.

In the glass plate sandwiching means (glass plate sandwiching step), when the first and second support members 118a and 118b are lifted by the second support member lifting/lowering mechanism 119, the second support surface 127b formed in an annular shape of the second support member 118b supports the lower surfaces 13 of the edge portions 66b of the glass plates 11a and 11b extending in the vicinity of the outside of the contour cutout line K1 across the contour cutout line K1 and the lower surfaces 13 of the main body portions 66a of the glass plates 11a and 11b extending in the vicinity of the inside of the contour cutout line K1, the first support surface 127a of the first support member 118a formed in a perfect circular shape supports the lower surfaces 13 of the main body portions 66a of the glass plates 11a and 11b extending in the vicinity of the inside of the contour cutout line K1, and the vicinity of the outer peripheral edge of the first support surface 127a supports the lower surfaces 13 of the edge portions 66b of the glass plates 11a and 11b extending to the vicinity of the outside of the contour cutout line K1.

After the first pressing surface 115a of the first pressing member 105a and the first and second support surfaces 127a and 127b of the first and second support members 118a and 118b sandwich the main body portions 66a and the edge portions 66b of the glass plates 11a and 11b through the glass plate sandwiching means (glass plate sandwiching step), the second support member 118b is lowered in the up-down direction in the first (initial) pressing region by the second support member lifting/lowering mechanism 119 (second support member lowering means (second support member lowering step)). When the second support member 118b is lowered, a gap (a step between the first support surface 127a and the second support surface 127b) is formed between the lower surfaces 13 of the glass plates 11a and 11b and the second support surface 127b. Note that sandwiching of the main body portions 66a of the glass plates 11a and 11b using the first pressing surface 115a of the first pressing member 105a and the first support surface 127a of the first support member 118a is maintained.

After the second support member 118b is lowered by the second support member lowering means (second support member lowering step), the second pressing member 105b is lowered in the up-down direction by the second pressing member lifting/lowering mechanism 106b while sandwiching of the main body portions 66a of the glass plates 11a and 11b using the first pressing surface 115a of the first pressing member 105a and the first support surface 127a of the first support member 118a is maintained, the second pressing surface 115b of the second pressing member 105b formed in an annular shape abuts on the upper surfaces 12 of the edge portions 66b of the glass plates 11a and 11b extending in the vicinity of the outside of the contour cutout line K1, and the second pressing surface 115b of the second pressing member 105b presses the edge portions 66b of the glass plates 11a and 11b extending outside the contour cutout line K1 downward. When the second pressing surface 115b presses the edge portion 66b downward, the edge portion 66b is bend-broken (edge portion bend-breaking means (edge portion bend-breaking step)). In the edge portion bend-breaking means (edge portion bend-breaking step), the main body portions 66a and the edge portions 66b of the glass plates 11a and 11b are separated from each other. The bend-broken (separated) edge portions 66b (peripheral edge portions) of the glass plates 11a and 11b remain on the belt conveyor 87.

After the edge portion 66b is bend-broken by the edge portion bend-breaking means (edge portion bend-breaking step) in the first (initial) pressing region, the second support member 118b is lifted in the up-down direction by the second support member lifting/lowering mechanism 119, the first pressing member 105a is lifted in the up-down direction by the first pressing member lifting/lowering mechanism 106a, and the second pressing member 105b is lifted in the up-down direction by the second pressing member lifting/lowering mechanism 106b.

After the first and second pressing members 105a and 105b and the second support member 118b are lifted, the first and second bend-breaking devices 85a and 85b move to a second (next) end cutting line forming region of the edge portions 66b of the glass plates 11a and 11b (bend-breaking device movement means (bend-breaking device movement step)). The first bend-breaking jig 94a is located at a bend-breaking start position of the second (next) end cutting line forming region outside the glass plates 11a and 11b in the width direction, and the second bend-breaking jig 94b is located at a bend-breaking start position of the second (next) end cutting line forming region outside the glass plates 11a and 11b in the width direction. The first and second support devices 86a and 86b move to the rolling direction change region in the second (next) end cutting line forming region in synchronization with the first and second bend-breaking devices 85a and 85b.

After the first and second bend-breaking devices 85a and 85b move to the rolling direction change region in the second (next) end cutting line forming region, the holder lifting/lowering mechanism 104 is operated to lower the bend-breaking cutter holder 102 toward the upper surfaces 12 of the edge portions 66b of the glass plates 11a and 11b (holder lowering means (holder lowering step)), and the bend-breaking cutter wheel 103 abuts on the upper surfaces 12 of the glass plates 11a and 11b with a predetermined pressing force.

After the bend-breaking cutter holder 102 is lowered (abuts on) to the upper surfaces 12 of the edge portions 66b of the glass plates 11a and 11b in the second (next) rolling direction change region by the holder lowering means (holder lowering step), as described above, the first and second bend-breaking jigs 94a and 94b (bend-breaking jigs) travel (move) in a circular shape to draw a circular trajectory, and a caster effect is exerted on the bend-breaking cutter wheel 103, so that the rolling (moving) direction of the circumferential edge 112 of the bend-breaking cutter wheel 103 faces the traveling (moving) direction (the direction in which virtual end cutting line extends) of the first and second bend-breaking jigs 94a and 94b (bend-breaking cutter holder 102) (rolling direction change means (rolling direction change step), and the rolling (moving) direction of the circumferential edge 112 of the bend-breaking cutter wheel 103 is changed to the traveling direction (the direction in which the virtual end cutting line extends) of the first and second bend-breaking jigs 94a and 94b (bend-breaking cutter holder 102).

After the rolling direction of the circumferential edge 112 of the bend-breaking cutter wheel 103 is changed to the traveling direction of the first and second bend-breaking jigs 94a and 94b (the direction in which the virtual end cutting line extends) (after the rolling direction of the bend-breaking cutter wheel 103 becomes the same as the traveling direction of the first and second bend-breaking jigs 94a and 94b), the first and second bend-breaking jigs 94a and 94b linearly travel from the vicinity of the contour cutout lines K1 of the glass plates 11a and 11b toward the edges of the glass plates 11a and 11b, and the bend-breaking cutter wheel 103 forms the end cutting line K2 in the second (next) end cutting line forming region (predetermined region) of the edge portions 66b of the glass plates 11a and 11b in the traveling direction of the first and second bend-breaking jigs 94a and 94b (end cutting line forming means (end cutting line forming step)).

After the end cutting line K2 is formed in the second (next) end cutting line forming region of the edge portions 66b of the glass plates 11a and 11b, the bend-breaking cutter holder 102 is lifted from the edges of the edge portions 66b of the glass plates 11a and 11b by the holder lifting/lowering mechanism 104 (holder lifting means (holder lifting step)). After the bend-breaking cutter holder 102 is lifted, the first and second bend-breaking devices 85a and 85b (first and second bend-breaking jigs 94a and 94b) move to the second (next) pressing region (bend-breaking device movement means (bend-breaking device movement step)).

After the first and second bend-breaking devices 85a and 85b move to the second (next) pressing region, the first pressing member 105a of the first and second bend-breaking devices 85a and 85b is lowered in the up-down direction by the first pressing member lifting/lowering mechanism 106a, and the first pressing surface 115a of the first pressing member 105a and the first and second support surfaces 127a and 127b of the first and second support members 118a and 118b sandwich the main body portions 66a and the edge portions 66b of the glass plates 11a and 11b in the second (next) pressing region (glass plate sandwiching means (glass plate sandwiching step)).

After the first pressing surface 115a of the first pressing member 105a and the first and second support surfaces 127a and 127b of the first and second support members 118a and 118b sandwich the main body portions 66a and the edge portions 66b of the glass plates 11a and 11b, the second support member 118b is lowered in the up-down direction in the second (next) pressing region by the second support member lifting/lowering mechanism 119 (second support member lowering means (second support member lowering step)).

After the second support member 118b is lowered, the second pressing member 105b is lowered in the up-down direction by the second pressing member lifting/lowering mechanism 106b while sandwiching of the main body portions 66a of the glass plates 11a and 11b using the first pressing surface 115a of the first pressing member 105a and the first support surface 127a of the first support member 118a is maintained, and the second pressing surface 115b of the second pressing member 105b presses the edge portions 66b of the glass plates 11a and 11b extending outside the contour cutout line K1 downward in the second (next) pressing region. When the second pressing surface 115b presses the edge portion 66b downward, the edge portion 66b is bend-broken (edge portion bend-breaking means (edge portion bend-breaking step)). The bend-broken (separated) edge portions 66b (peripheral edge portions) of the glass plates 11a and 11b remain on the belt conveyor 87.

In the grinding processing system 10a and the grinding processing method (glass plate processing system 10), after the bend-breaking cutter wheel 103 and the first and second pressing members 105a and 105b are lifted by the holder lifting/lowering mechanism 104 and the first and second pressing member lifting/lowering mechanisms 106a and 106b, the first and second bend-breaking devices 85a and 85b move in the front-rear direction (horizontal direction) and the width direction (horizontal direction) on the upper surfaces 12 side of the glass plates 11a and 11b (bend-breaking device movement means (bend-breaking device movement step)), and after the second support member 118b is lifted by the second support member lifting/lowering mechanism 119, the first and second support devices 86a and 86b move in the front-rear direction (horizontal direction) and the width direction (horizontal direction) in synchronization with the first and second bend-breaking devices 85a and 85b on the lower surfaces 13 side of the glass plates 11a and 11b (support device movement means (support device movement step)). After the first and second bend-breaking devices 85a and 85b and the first and the second support devices 86a and 86b move in synchronization by the bend-breaking device movement means (bend-breaking device movement step) and the support device movement means (support device movement step), the first bend-breaking device 85a and the first support device 86a cooperate with each other, and the second bend-breaking device 85b and the second support device 86b cooperate to perform the end cutting line forming means (the end cutting line forming step), the glass plate sandwiching means (the glass plate sandwiching step), and the edge portion bend-breaking means (edge portion bend-breaking step).

By repeating the above-described procedures, all the edge portions 66b of the glass plates 11a and 11b on which the end cutting lines K2 are formed are bend-broken. In the glass plates 11a and 11b illustrated in Fig. 30, the first to third end cutting lines K2 are formed by the first bend-breaking jig 94a, and the first to third end cutting lines K2 are formed by the second bend-breaking jig 94b. However, the number of end cutting lines K2 is not particularly limited, and the number of end cutting lines K2 is determined depending on sizes (areas), thickness dimensions of the glass plates 11a and 11b, and shapes of main bodies of the glass plates 11a and 11b formed by the contour cutout lines K1.

After the bend-breaking is ended and the glass plates 11a and 11b subjected to the bend-breaking processing are lifted upward by the third glass plate holder 40c, the controller transmits a drive signal (ON signal) to the control unit of the conveyor drive motor 88. The control unit of the conveyor drive motor 88 that has received the drive signal (ON signal) drives the belt conveyor 87. The belt conveyor 87 moves from one side to the other side in the width direction. Due to the movement of the belt conveyor 87 in the width direction, the bend-broken edge portions 66b (peripheral edge portions) of the glass plates 11a and 11b remaining on the belt conveyor 87 gradually move from one side to the other side in the width direction, and the edge portions 66b fall from the belt conveyor 87 and are stored (discarded) in a dust box (not illustrated).

After the bend-breaking processing on the glass plates 11a and 11b are ended, the main body portions 66a of the glass plates 11a and 11b subjected to the bend-breaking processing are conveyed from the bend-breaking processing region 21 to the grinding processing region 22 by the third glass plate holder 40c, the third glass plate holder 40c is lowered, the main body portions 66a of the glass plates 11a and 11b are placed on the grinding processing table 128, and the lower surface 13 of the main body portion 66a abuts on the table sucker 130 (attraction pad). Note that the magnetic weight material 47 is attracted and held by the magnetic weight material holding sucker 49 due to the activation of the air vacuum pump, and the magnetic weight material holding mechanism 44 (magnetic weight material 47) is lifted by the lifting/lowering mechanism 45. Further, the fourth glass plate holder 40d on which the magnetic weight material holding sucker 49 that attracts and holds the magnetic weight material 47 is installed is located above the carry-out region 23.

After the main body portions 66a of the glass plates 11a and 11b are placed on the grinding processing table 128, the controller transmits a drive signal to the control unit of the vacuum mechanism of the grinding processing table 128. The control unit of the vacuum mechanism that has received the drive signal drives the vacuum mechanism. The main body portions 66a of glass plates 11a and 11b are attracted and held by the table sucker 130 (attraction pad) (grinding processing table 128) due to the drive of the vacuum mechanism (first fixing means (first fixing step)).

After the main body portions 66a of the glass plates 11a and 11b are attracted and held by the table sucker 130 (grinding processing table 128), the controller transmits a stop signal (OFF signal) to the control unit of the vacuum mechanism of the third glass plate holder 40c, and transmits a lifting signal (ON signal) to the control unit of the holder lifting/lowering mechanism (lifting/lowering mechanism). The control unit of the vacuum mechanism of third glass plate holder 40c that has received the stop signal (OFF signal) stops the vacuum mechanism to release the attraction of the main body portions 66a of the glass plates 11a and 11b by the holder sucker 42. The control unit of the holder lifting/lowering mechanism that has received the lifting signal (ON signal) lifts the pad installation plate 41 (third glass plate holder 40c).

Next, the controller transmits a retreat signal (ON signal) to the control unit of the second servomotor 39. The control unit of the second servomotor 39 that has received the retreat signal (ON signal) drives the second servomotor 39. The slide block moves in the front-rear direction from the front to the rear of the second guide frame 35 due to the rotation of the shaft of the second servomotor 39, and thus the fourth glass plate holder 40d moves from the carry-out region 23 to the grinding processing region 22. The first glass plate holder 40a moves from the notching processing region 20 to the carry-in region 19, the second glass plate holder 40b moves from the bend-breaking processing region 21 to the notching processing region 20, and the third glass plate holder 40c moves from the grinding processing region 22 to the bend-breaking processing region 21.

When the fourth glass plate holder 40d moves toward the grinding processing region 22 and the magnetic weight material holding mechanism 44 (magnetic weight material holding sucker 49) moves immediately above the center of the main body portions 66a of the glass plates 11a and 11b attracted and held by the table sucker 130, the controller transmits an OFF signal to the control unit of the second servomotor 39. The control unit of the second servomotor 39 that has received the OFF signal stops the second servomotor 39. The magnetic weight material holding mechanism 44 (the magnetic weight material 47 attracted and held by the magnetic weight material holding sucker 49) is located immediately above the center of the main body portion 66a (positioning means (positioning step)).

After the magnetic weight material 47 is located above the main body portion 66a and at the center of the main body portion 66a by the positioning means, the controller transmits a lowering signal (ON signal) to the control unit of the holder lifting/lowering mechanism. The control unit of the holder lifting/lowering mechanism that has received the lowering signal (ON signal) lowers the pad installation plate 41 (fourth glass plate holder 40d) by using the holder lifting/lowering mechanism. After the pad installation plate 41 is lowered, the controller transmits a lowering signal (ON signal) to the control unit of the lifting/lowering mechanism 45 (air cylinder) installed at the fourth glass plate holder 40d. The control unit of the lifting/lowering mechanism 45 that has received the lowering signal (ON signal) lowers the magnetic weight material holding mechanism 44 to the lowest limit by the lifting/lowering mechanism 45. When the magnetic weight material holding mechanism 44 is lowered, the magnetic weight material 47 attracted and held on the attraction holding surface 48 of the magnetic weight material holding sucker 49 is lowered toward the central upper surfaces of the main body portions 66a of the glass plates 11a and 11b, and the magnetic weight material 47 is placed immediately above the magnet 131 so that the magnet 131 and the magnetic weight material 47 sandwich the main body portions 66a (first lowering means (first lowering step)).

When the magnetic weight material holding mechanism 44 (magnetic weight material 47) is lowered and the magnetic weight material 47 abuts on the central upper surface of the main body portion 66a, the facing surface 51 (pressing surface) of the magnetic weight material 47 is attracted to the magnet 131 by the magnet 131 located immediately below the table sucker 130, and the main body portion is sandwiched and fixed by the attraction surface 134 of the magnet 131 located immediately below the lower surface 13 of the main body portion 66a and the facing surface 51 of the magnetic weight material 47 abutting on the upper surface 12 of the main body portion 66a and attracted to the magnet 131 (second fixing means (second fixing step)). Note that, in a case where an electromagnet is used as the magnet 131, at the same time as the start of lowering of the pad installation plate 41 or after the magnetic weight material 47 abuts on the central upper surfaces of the main body portions 66a (before starting of grinding processing on the peripheral edges of the main body portions 66a of the glass plates 11a and 11b), the electromagnet (magnet 131) is energized to generate a magnetic force in the electromagnet (energization starting means (energization starting step)).

After the facing surface 51 of the magnetic weight material 47 is attracted to the attraction surface 134 of the magnet 131 (after the magnetic weight material 47 is placed immediately above the magnet 131), the controller transmits an OFF signal to the control unit of the vacuum mechanism (air vacuum pump) of the magnetic weight material holding mechanism 44. The control unit of the vacuum mechanism that has received the OFF signal turns off the vacuum mechanism, so that the attraction force of the magnetic weight material holding sucker 49 disappears, and the attraction of the magnetic weight material 47 to the attraction holding surface 48 of the magnetic weight material holding sucker 49 is released.

Next, the controller transmits a lifting signal (ON signal) to the control unit of the lifting/lowering mechanism 45 (air cylinder) installed in the fourth glass plate holder 40d, and transmits a lifting signal (ON signal) to the control unit of the holder lifting/lowering mechanism. The control unit of the lifting/lowering mechanism 45 that has received the lifting signal lifts the magnetic weight material holding mechanism 44 upward of the magnetic weight material 47 (upward from the upper surface 12 of the main body portion 66a) to the highest limit by using the lifting/lowering mechanism 45 (first lifting means). The control unit of the holder lifting/lowering mechanism that has received the lifting signal lifts the pad installation plate 41 (fourth glass plate holder 40d) by using the holder lifting/lowering mechanism. The magnetic weight material 47 attracted to the magnet 131 remains on the upper surfaces 12 of the main body portions 66a of the glass plates 11a and 11b.

After lifting the magnetic weight material holding mechanism 44 above the magnetic weight material 47 and lifting the pad installation plate 41 (the fourth glass plate holder 40d), the controller transmits a retreat signal (ON signal) to the control unit of the first servomotor 34. The control unit of the first servomotor 34 that has received the retreat signal (ON signal) drives the first servomotor 34. The first slide block moves in the front-rear direction from the front side of the first guide frame 30 toward the rear side due to the rotation of the shaft of the first servomotor 34, so that the grinding device 129 moves to the rear side in the front-rear direction in the grinding processing region 22 together with the first traveling frame 32, and the grinding device 129 is located outward in the width direction (grinding processing start position) of the first corner portions 18a (front side edge) of the main body portions 66a of the glass plates 11a and 11b. The grinding device 129 moves along the peripheral edges (side edges or front and rear end edges) of the main body portions 66a of the glass plates 11a and 11b in synchronization with the notching device 65.

After the grinding device 129 is located outward in the width direction (grinding processing start position) of the first corner portions 18a of the main body portions 66a of the glass plates 11a and 11b, the controller transmits a stop signal (OFF signal) to the control unit of the first servomotor 34 and transmits a drive signal (ON signal) to the control unit of the fourteenth servomotor 136. The control unit of the first servomotor 34 that has received the stop signal (OFF signal) stops the first servomotor 34, and the control unit of the fourteenth servomotor 136 that has received the drive signal (ON signal) drives the fourteenth servomotor 136. The slide block 73b moves in the width direction from the other side edge portion 58b of the grinding processing region 22 toward the one side edge portion 58a due to the rotation of the shaft of the fourteenth servomotor 136, so that the grinding processing table 128 moves in the width direction from the other side edge portion 58b side of the grinding processing region 22 toward the one side edge portion 58a side, and the grinding wheel 143 of the grinding device 129 is located at the first corner portions 18a of the main body portions 66a of the glass plates 11a and 11b. The first corner portions 18a of the main body portions 66a of the glass plates 11a and 11b enter the slit 147 of the cover 145 of the grinding jig 137.

After the grinding wheel 143 of the grinding device 129 is located at the first corner portions 18a of the glass plates 11a and 11b, the controller transmits a drive signal (ON signal) and an NC control signal to the control units of the fifteenth to seventeenth servomotors 138 to 140 and the control unit of the spindle motor 146 of the grinding device 129, transmits a retreat signal (ON signal) and an NC control signal to the control unit of the first servomotor 34, and transmits an NC control signal to the control unit of the fourteenth servomotor 136. The control units of the fifteenth to seventeenth servomotors 138 to 140, the control unit of the spindle motor 146, the control unit of the first servomotor 34, and the control unit of the fourteenth servomotor 136 that have received the drive signal (ON signal) and the NC control signal drive the fifteenth to seventeenth servomotors 138 to 140, the spindle motor 146, the first servomotor 34, and the fourteenth servomotor 136, perform the contour control motion on the vicinity of one side edge (one side edge portion) of the main body portion 66a of each of the glass plates 11a and 11b in response to the NC control, bite the side surface (cylindrical portion) of the rotating disk-shaped grinding stone of the grinding wheel 143, and perform grinding processing on the vicinity of the one side edge (one side edge portion) of the main body portion 66a of each of the glass plates 11a and 11b (grinding processing means (grinding processing step)).

The control unit of the first servomotor 34 that has received the retreat signal drives the first servomotor 34 during the grinding processing (during the notching processing) such that the grinding device 129 moves rearward in the front-rear direction in the grinding processing region 22, and the control unit of the fourteenth servomotor 136 drives the fourteenth servomotor 136 during the grinding processing (during the notching processing) such that the grinding device 129 reciprocates in the width direction in the grinding processing region 22. The grinding wheel 143 of the grinding device 129 moves from the first corner portion 18a of each of the glass plates 11a and 11b toward the second corner portion 18b while grinding the vicinity of one side edge (one side edge portion) of the main body portion 66a of each of the glass plates 11a and 11b along the edge (contour cutout line K1) of the main body portion 66a of each of the glass plates 11a and 11b.

After the grinding processing on the vicinity of one side edge (one side edge portion) of the main body portions 66a of each of the glass plates 11a and 11b is ended by the grinding wheel 143 of the grinding device 129, and the grinding wheel 143 is located at the second corner portions 18b of the main body portions 66a of the glass plates 11a and 11b, the grinding processing table 128 moves in the width direction from the one side edge portion 58a side of the grinding processing region 22 toward the other side edge portion 58b side, and the side surface (cylindrical portion) of the rotating disk-shaped grinding stone of the grinding wheel 143 bites according to the movement of the grinding processing table 128 in the width direction to grind the vicinity of the rear end edges (rear end edge portions) of the main body portions 66a of the glass plates 11a and 11b (grinding processing means (grinding processing step).

The control unit of the fourteenth servomotor 136 drives the fourteenth servomotor 136 during the grinding processing (during the notching processing) such that the grinding processing table 128 moves in the width direction in the grinding processing region 22, and the control unit of the first servomotor 34 drives the first servomotor 34 during the grinding processing (during the notching processing) such that the grinding device 129 reciprocates in the front-rear direction in the grinding processing region 22. The grinding wheel 143 of the grinding device 129 moves from the second corner portion 18b of the main body portions 66a of the glass plates 11a and 11b toward the third corner portion 18c while grinding the vicinity of the rear end edge (rear end edge portion) of the main body portions 66a of the glass plates 11a and 11b along the edge (contour cutout line K1) of the main body portions 66a of the glass plates 11a and 11b.

After the grinding processing on the vicinity of the rear end edge (rear end edge portion) of the main body portions 66a of the glass plates 11a and 11b is ended by the grinding wheel 143 of the grinding device 129 and the grinding wheel 143 is located at the third corner portions 18c of the main body portions 66a of the glass plates 11a and 11b, the grinding device 129 moves forward in the front-rear direction, and the side surface (cylindrical portion) of the rotating disk-shaped grinding stone of the grinding wheel 143 bites according to the movement of the grinding device 129 forward in the front-rear direction to perform the grinding processing on the vicinity of the second side edges (second side edge portions) of the main body portions 66a of the glass plates 11a and 11b (grinding processing means (grinding processing step)).

The control unit of the first servomotor 34 drives the first servomotor 34 during the grinding processing (during the notching processing) such that the grinding device 129 moves forward in the front-rear direction in the grinding processing region 22, and the control unit of the fourteenth servomotor 136 drives the fourteenth servomotor 136 during the grinding processing (during the notching processing) such that the grinding processing table 128 reciprocates in the width direction in the grinding processing region 22. The grinding wheel 143 of the grinding device 129 grinds the vicinity of the second side edges (second side edge portions) of the main body portions 66a of the glass plates 11a and 11b along the edge (contour cutout line K1) of the main body portions 66a of the glass plates 11a and 11b, and moves from the third corner portions 18c of the main body portions 66a of the glass plates 11a and 11b toward the fourth corner portion 18d.

After the grinding processing on the vicinity of the second side edges (second side edge portions) of the main body portions 66a of the glass plates 11a and 11b is ended by the grinding wheel 143 of the grinding device 129 and the grinding wheel 143 is located at the fourth corner portions 18d of the main body portions 66a of the glass plates 11a and 11b, the grinding processing table 128 moves in the width direction from the other side edge portion 58b side of the grinding processing region 22 toward the one side edge portion 58a side, and the side surface (cylindrical portion) of the rotating disk-shaped grinding stone of the grinding wheel 143 bites according to the movement of the grinding processing table 128 in the width direction to perform grinding processing on the vicinity of the front end edges (front end edge portions) of the main body portions 66a of the glass plates 11a and 11b (grinding processing means (grinding processing step).

The control unit of the fourteenth servomotor 136 drives the fourteenth servomotor 136 during the grinding processing (during the notching processing) such that the grinding processing table 128 moves in the width direction in the grinding processing region 22, and the control unit of the first servomotor 34 drives the first servomotor 34 during the grinding processing (during the notching processing) such that the grinding device 129 reciprocates in the front-rear direction in the grinding processing region 22. The grinding wheel 143 of the grinding device 129 moves from the fourth corner portions 18d of the main body portions 66a of the glass plates 11a and 11b toward the first corner portions 18a while grinding the vicinity of the front end edges (front end edge portions) of the main body portions 66a of the glass plates 11a and 11b along the edge (contour cutout line K1) of the main body portion 66a of each of the glass plates 11a and 11b. When the grinding processing on the vicinity of the front end edges (front end edge portions) of the main body portions 66a of the glass plates 11a and 11b is ended by the grinding wheel 143 of the grinding device 129, the grinding device 129 moves outward in the width direction (grinding processing start position) of the first corner portions 18a (front end edges) of the main body portions 66a of the glass plates 11a and 11b and stands by.

In the grinding processing region 22, for example, the outermost edge (in the illustrated glass plate 11b, one side edge 14) located on the outermost side in the width direction among the one side edges 14 extending in the front-rear direction on one side in the width direction of the small-size (small-area) glass plate 11b having a small area of the upper surface 12 and the lower surface 13 to be processed later is located (matched) at the position (first positioning reference L1 (virtual first positioning reference line)) of the outermost edge (in the illustrated glass plate 11a, one side edge 14) located on the outermost side in the width direction among one side edges 14 extending in the front-rear direction on one side in the width direction of the large-size (large-area) glass plate 11a having a large area of the upper surface 12 and the lower surface 13 to be processed first by the first positioning means (first positioning step) such that the glass plates 11a and 11b having different areas of the upper surface 12 and the lower surface 13 are positioned, and, simultaneously, the front-rear direction center O1 (the center line L2 extending in the width direction obtained by dividing a dimension in the front-rear direction of the glass plate 11b by 2) of the first side edge 14 extending in the front-rear direction on one side in the width direction of the small-size glass plate 11b to be processed later is located (matched) at the position (second positioning reference L2 (virtual second positioning reference line)) of the front-rear direction center O1 (the center line L2 extending in the width direction obtained by dividing the dimension in the front-rear direction of the glass plate 11a by 2) of the first side edge 14 extending in the front-rear direction on one side in the width direction of the large-size glass plate 11a to be processed first by the second positioning means (second positioning step) such that the glass plates 11a and 11b having different areas of the upper surface 12 and the lower surface 13 are positioned. Thereafter, in a case where grinding processing is performed on the glass plate 11b having a different area to be processed later, a movement distance of the grinding device 129 until reaching the side edge 14 of the large-size glass plate 11a (a movement distance of the grinding processing table 128 in the width direction) is equal to a movement distance of the grinding device 129 until reaching the side edge 14 of the small-size glass plate 11b (a movement distance of the grinding processing table 128 in the width direction), and a movement distance until the grinding device 129 returns from the outermost edge (side edge 14) of the large-size glass plate 11a to the outside in the width direction of the glass plate 11a is equal to a movement distance until returning from the outermost edge (side edge 14) of the small-size glass plate 11b to the outside in the width direction of the glass plate 11b.

The movement distance of the grinding device 129 until reaching the outermost edge (side edge 14) of the small-size glass plate 11b is shortened, the movement distance of the grinding device 129 until returning from the outermost edge (side edge 14) of the small-size glass plate 11b to the outside in the width direction of the glass is shortened, the arrival time (non-processing time) until the grinding device 129 reaches the outermost edge (side edge 14) of the small-size glass plate 11b is reduced, and the return time until the grinding device 129 returns from the outermost edge (side edge 14) of the small-size glass plate 11b to the outside in the width direction of the glass plate is reduced.

After the grinding processing on the main body portions 66a of the glass plates 11a and 11b is ended, the controller transmits a lowering signal (ON signal) to the control unit of the lifting/lowering mechanism 45 (air cylinder) installed in the fourth glass plate holder 40d. The control unit of the lifting/lowering mechanism 45 that has received the lowering signal (ON signal) lowers the magnetic weight material holding mechanism 44 by using the lifting/lowering mechanism 45. The magnetic weight material holding mechanism 44 is lowered toward the magnetic weight material 47 remaining on the upper surfaces 12 of the main body portions 66a of the glass plates 11a and 11b. When the magnetic weight material holding mechanism 44 is lowered to the lowest limit, the attraction holding surface 48 of the magnetic weight material holding sucker 49 abuts on the attraction surface 50 of the magnetic weight material 47.

After the attraction holding surface 48 of the magnetic weight material holding sucker 49 abuts on the attraction surface 50 of the magnetic weight material 47 (after grinding processing on the peripheral edges of the main body portions 66a of the glass plates 11a and 11b is ended), the controller transmits an attraction signal (ON signal) to the control unit of the vacuum mechanism (air vacuum pump) of the magnetic weight material holding mechanism 44. The control unit of the vacuum mechanism that has received the attraction signal (ON signal) turns on (activates) the air vacuum pump. When the air vacuum pump is turned on, the attraction holding surface 48 of the magnetic weight material holding sucker 49 has a negative pressure, an attraction force is developed on the attraction holding surface 48, and the attraction surface 50 of the magnetic weight material 47 is attracted and held on the attraction holding surface 48 of the magnetic weight material holding sucker 49 (second lowering means (second lowering step)).

After the attraction holding surface 48 of the magnetic weight material holding sucker 49 attracts and holds the attraction surface 50 of the magnetic weight material 47, the controller transmits a lifting signal (ON signal) to the control unit of the lifting/lowering mechanism 45. The control unit of the lifting/lowering mechanism 45 that has received the lifting signal (ON signal) lifts the magnetic weight material holding mechanism 44 by using the lifting/lowering mechanism 45. The attraction force (output of the air vacuum pump) of the attraction holding surface 48 is adjusted such that the attraction force (suction force) of the attraction holding surface 48 of the magnetic weight material holding sucker 49 is larger than the attraction force of the magnet 131.

When the magnetic weight material 47 attracted to the attraction holding surface 48 of the magnetic weight material holding sucker 49 is pulled upward by the lifting/lowering mechanism 45, the attraction of the facing surface 51 of the magnetic weight material 47 on the attraction surface 134 of the magnet 131 is released, and the magnetic weight material 47 gradually is gradually lifted upward from the upper surfaces 12 of the main body portions 66a of the glass plates 11a and 11b together with the magnetic weight material holding sucker 49 in a state in which the magnetic weight material 47 is attracted to the attraction holding surface 48 (second lifting means). In a case where the magnet 131 is an electromagnet, after the attraction holding surface 48 of the magnetic weight material holding mechanism 44 attracts and holds the attraction surface 50 of the magnetic weight material 47 by using the second lowering means (second lowering step), the energization to the electromagnet is stopped to dissipate the magnetic force of the electromagnet (energization stopping means).

After the magnetic weight material holding mechanism 44 is lifted to the highest limit, the controller transmits an advance signal (ON signal) to the control unit of the second servomotor 39. The control unit of the second servomotor 39 that has received the advance signal (ON signal) drives the second servomotor 39. The slide block moves in the front-rear direction from the rear side of the second guide frame 35 toward the front side due to the rotation of the shaft of the second servomotor 39, and thus the fourth glass plate holder 40d moves forward in the front-rear direction.

When fourth glass plate holder 40d moves forward in the front-rear direction and holder sucker 42 (attraction pad) moves immediately above the center of the main body portions 66a of the glass plates 11a and 11b attracted and held by the table sucker 130, the controller transmits a stop signal (OFF signal) to the control unit of the second servomotor 39. The control unit of the second servomotor 39 that has received the stop signal (OFF signal) stops the second servomotor 39. The table sucker 130 is located immediately below the center of the main body portions 66a.

After the table sucker 130 is located below the main body portions 66a and at the center of the main body portions 66a, the controller transmits a lowering signal (ON signal) to the control unit of the holder lifting/lowering mechanism. The control unit of the holder lifting/lowering mechanism that has received the lowering signal (ON signal) lowers the pad installation plate 41 (holder sucker 42) of the fourth glass plate holder 40d by using the holder lifting/lowering mechanism. After the pad installation plate 41 is lowered and the holder sucker 42 abuts on the upper surfaces 12 at the center of the main body portions 66a of the glass plates 11a and 11b, the controller transmits a suction signal (ON signal) to the control unit of the vacuum mechanism (air vacuum pump). The control unit of the vacuum mechanism (air vacuum pump) that has received the suction signal (ON signal) activates the air vacuum pump.

The upper surface 12 of the main body portion 66a is attracted and held by the holder sucker 42 by activation of the air vacuum pump. After the main body portions 66a of the glass plates 11a and 11b are attracted and held by the holder sucker 42, the controller transmits a stop signal (OFF signal) to the control unit of the vacuum mechanism that makes the table sucker 130 have a negative pressure, and transmits a lifting signal (ON signal) to the control unit of the holder lifting/lowering mechanism. The control unit of the vacuum mechanism that has received the stop signal (OFF signal) stops the vacuum mechanism to eliminate the attraction force of the table sucker 130, and the control unit of the holder lifting/lowering mechanism that has received the lifting signal (ON signal) activates the holder lifting/lowering mechanism to lift the holder sucker 42 (fourth glass plate holder 40d) that attracts and holds the main body portions 66a.

After the holder sucker 42 (fourth glass plate holder 40d) is lifted to the highest limit, the controller transmits an advance signal (ON signal) to the control unit of the second servomotor 39. The control unit of the second servomotor 39 that has received the advance signal (ON signal) drives the second servomotor 39. The slide block moves in the front-rear direction from the rear side of the second guide frame 35 to the front side due to the rotation of the shaft of the second servomotor 39, and thus the fourth glass plate holder 40d moves forward in the front-rear direction toward the carry-out region (movement means (movement step)).

The fourth glass plate holder 40d moves forward in the front-rear direction, and the main body portions 66a of the glass plates 11a and 11b subjected to the grinding processing are conveyed from the grinding processing region 22 to the carry-out region 23 by the fourth glass plate holder 40d. When the main body portions 66a of the glass plates 11a and 11b are conveyed to the carry-out region, the controller transmits a stop signal (OFF signal) to the control unit of the second servomotor 39. The control unit of the second servomotor 39 that has received the stop signal (OFF signal) stops the second servomotor 39. In the carry-out region 23, the main body portions 66a of the glass plates 11a and 11b on which the notching processing, the bend-breaking processing, and the grinding processing are ended are caused to move forward from the rear end portion of the carry-out region 23 toward the front end portion by the carry-out conveyor 150, and the main body portions 66a of the glass plates 11a and 11b on which the above processing is ended are carried out from the carry-out region 23.

When the main body portions 66a of the glass plates 11a and 11b on which the above processing is ended are located on the carry-out conveyor 150 in the carry-out region 23, the main body portions 66a of the glass plates 11a and 11b subjected to the grinding processing are located on the grinding processing table 128 in the grinding processing region 22, the main body portions 66a of the glass plates 11a and 11b subjected to the bend-breaking processing are located on the bend-breaking processing table 84 in the bend-breaking processing region 21, the glass plates 11a and 11b subjected to the notching processing are located on the notching processing table 64 in the notching processing region 20, and the unprocessed glass plates 11a and 11b positioned by the first positioning means (first positioning step) and the second positioning means (second positioning step) are located on the carry-in conveyors 53 in the carry-in region 19. As described above, in the bend-breaking system 10a and the grinding processing method (glass plate processing system 10), the plurality of glass plates are sequentially conveyed from the carry-in region 19 toward the carry-out region 23, and each piece of processing is continuously performed on the plurality of glass plates 11a and 11b.

In the bend-breaking system 10a and the grinding processing method (glass plate processing system 10), the table sucker 130 (attraction pad) abuts on the lower surfaces 13 of the main body portions 66a to attract and hold the lower surfaces 13 of the main body portions 66a before the start of the grinding processing on the peripheral edge of the main body portions 66a of the glass plates 11a and 11b, and the main body portions 66a are sandwiched and fixed by the magnet 131 (a permanent magnet or an electromagnet) located immediately below the lower surfaces 13 of the main body portions 66a and the magnetic weight material 47 abutting on the upper surfaces 12 of the main body portions 66a and attracted to the magnet 131 before the start of the grinding processing on the peripheral edges of the main body portions 66a of the glass plates 11a and 11b. Therefore, the main body portions 66a of the glass plates 11a and 11b are placed and fixed on the grinding processing table 128 by the table sucker 130, and the main body portions 66a of the glass plates 11a and 11b are sandwiched between the magnet 131 located immediately below the lower surfaces 13 of the main body portions 66a at the center of the main body portions 66a and the magnetic weight material 47 that abuts on the upper surfaces 12 of the main body portions 66a and is attracted to the magnet 131. As a result, the fixation of the main body portions 66a of the glass plates 11a and 11b to the grinding processing table 128 is reinforced, and even for the small-size (small-area) glass plates 11a and 11b having the small main body portions 66a, the main body portions 66a of the glass plates 11a and 11b can be firmly fixed to the grinding processing table 128 by the magnet 131 and the magnetic weight material 47 together with the table sucker 130.

In the bend-breaking system 10a and the grinding processing method (glass plate processing system 10), in the case of grinding the peripheral edges of the main body portions 66a of the glass plates 11a and 11b by biting in of the side surface (cylindrical portion) of the rotating disk-shaped grinding stone of the grinding wheel 143 of the grinding device 129 (grinding mechanism), it is possible to prevent sideslip (lateral deviation) of the main body portions 66a of the glass plates 11a and 11b in the grinding processing table 128, and it is possible to perform grinding processing on the peripheral edge of the main body portions 66a in a state in which the main body portions 66a of the glass plates 11a and 11b are reliably fixed to the grinding processing table 128. The bend-breaking system 10a and the grinding processing method (glass plate processing system 10) can maintain the grinding processing speed, and can finish the glass plates 11a and 11b having predetermined shapes of which peripheral edges are ground as designed.

In the bend-breaking system 10a and the grinding processing method (the glass plate processing system 10), after completion of the grinding processing on the peripheral edge of the main body portion 66a of each of the glass plates 11a and 11b, the magnetic weight material holding mechanism 44 installed in the fourth glass plate holder 40d is lowered toward the upper surface 12 of the main body portion 66a of each of the glass plates 11a and 11b to hold the magnetic weight material 47, and after holding the magnetic weight material 47, the magnetic weight material holding mechanism 44 installed in the fourth glass plate holder 40d lifts upward from the upper surface 12 of the main body portion 66a to release the attraction of the magnetic weight material 47 to the magnet 131 (a permanent magnet or an electromagnet), so that it is possible to reliably release the sandwiching of the main body portion 66a of each of the glass plates 11a and 11b between the magnet 131 and the magnetic weight material 47, and it is possible to convey the main body portions 66a of the glass plates 11a and 11b of which the peripheral edges have been subjected to grinding processing to the next carry-out region 23 (processing end region).

Note that, in a case where the magnet 131 is an electromagnet, after completion of the grinding processing on the peripheral edge of the main body portions 66a of the glass plates 11a and 11b and after the magnetic weight material holding mechanism 44 holds the magnetic weight material 47, the magnetic force of the electromagnet is eliminated by stopping the energization to the electromagnet, whereby the attraction of the magnetic weight material 47 to the electromagnet is released, the sandwiching of the main body portions 66a of the glass plates 11a and 11b by the electromagnet and the magnetic weight material 47 can be easily released, and the main body portions 66a of the glass plates 11a and 11b of which the peripheral edge has been ground can be conveyed to the next carry-out region 23 (processing end region).

In the bend-breaking system 10a and the grinding processing method (glass plate processing system 10), after the grinding processing on the peripheral edges of the main body portions 66a of the glass plates 11a and 11b is ended, the engagement between the magnet 131 (a permanent magnet or an electromagnet) and the magnetic weight material 47 is released to convey the main body portions 66a of the glass plates 11a and 11b to the carry-out region, and the main body portions 66a of the next glass plates 11a and 11b not subjected to grinding processing are placed and fixed on the grinding processing table 128 to perform the grinding processing on the peripheral edges of the main body portions 66a. Therefore, the grinding processing on the main body portions 66a of the glass plates 11a and 11b can be continuously performed, and the plurality of glass plates 11a and 11b can be efficiently subjected to the grinding processing.

In the bend-breaking system 10a and the grinding processing method (the glass plate processing system 10), since the magnetic weight material 47 is made of any metal of iron, nickel, or cobalt, the magnetic weight material 47 is easily attracted to the magnet 131 (a permanent magnet or an electromagnet), and the main body portions 66a of the glass plates 11a and 11b are sandwiched between the magnet 131 of which the attraction surface 134 having a predetermined area is located at the center 133 of the table sucker 130 and the magnetic weight material 47 having a predetermined weight attracted to the magnet 131, so that the fixation of the main body portions 66a of the glass plates 11a and 11b to the grinding processing table 128 can be reliably reinforced by the magnet 131 including the attraction surface 134 having a predetermined area and the magnetic weight material 47 having a predetermined weight made of any metal of nickel or cobalt.

In the bend-breaking system 10a and the grinding processing method (glass plate processing system 10), the bend-breaking cutter wheel 103 lowered in the up-down direction by the holder lifting/lowering mechanism 104 forms the end cutting line K2 at the edge portions 66b of the glass plates 11a and 11b, and after the end cutting line K2 is formed at the edge portions 66b of the glass plates 11a and 11b, the bend-breaking cutter wheel 103 is lifted in the up-down direction by the holder lifting/lowering mechanism 104, the first pressing member 105a is lowered in the up-down direction by the first pressing member lifting/lowering mechanism 106a, the main body portions 66a and the edge portions 66b of the glass plates 11a and 11b are sandwiched between the semi-circular first pressing surface 115a of the first pressing member 105a abutting on the upper surfaces 12 of the edge portions 66b of the glass plates 11a and 11b extending in the vicinity of the outside of the contour cutout line K1 across the contour cutout line K1 and the upper surfaces 12 of the main body portions 66a of the glass plates 11a and 11b extending in the vicinity of the inside of the contour cutout line K1 and the first and second support surfaces 127a and 127b of the first and second support members 118a and 118b. After the first pressing member 105a and the first and second support members 118a and 118b sandwich the main body portions 66a and the edge portions 66b, the second support member 118b is lowered in the up-down direction by the second support member lifting/lowering mechanism 119, the second pressing member 105b is lowered in the up-down direction by the second pressing member lifting/lowering mechanism 106b while the sandwiching of the main body portions 66a between the first pressing surface 115a of the first pressing member 105a and the first support surface 127a of the first support member 118a is maintained, the second pressing surface 115b of the second pressing member 105b presses the edge portions 66b of the glass plates 11a and 11b extending outside the contour cutout line K1 downward, and the edge portions 66b are bend-broken. As a result, the main body portions 66a of the glass plates 11a and 11b are sandwiched between the first pressing surface 115a of the first pressing member 105a and the first support surface 127a of the first support member 118a, so that the first support surface 127a having a predetermined area formed in a perfect circular shape supports the lower surfaces 13 of the main body portions 66a of the glass plates 11a and 11b extending in the vicinity of the inside of the contour cutout line K1, the vicinity of the outer peripheral edge of the first support surface 127a supports the lower surfaces 13 of the edge portions 66b of the glass plates 11a and 11b extending in the vicinity of the outside of the contour cutout line K1, and the main body portions 66a of the glass plates 11a and 11b are firmly fixed by the first pressing member 105a and the first support member 118a. Thus, even if the second pressing surface 115b of the second pressing member 105b presses the edge portions 66b of the glass plates 11a and 11b extending outside of the contour cutout line K1 downward and the pressing force of the second pressing member 105b is applied to the edge portions 66b, the elastic deformation of the main body portions 66a and the edge portions 66b of the glass plates 11a and 11b extending in the vicinity of the contour cutout line K1 can be prevented, and the main body portions 66a and the edge portions 66b are not curved upward, and the edge portions 66b of the glass plates 11a and 11b can be bend-broken smoothly and reliably at the contour cutout line K1 and the end cutting line K2 by the pressing force of the second pressing member 105b.

In the bend-breaking system 10a and the grinding processing method (glass plate processing system 10), the cutter wheel axis O3 of the bend-breaking cutter wheel 103 is eccentric outward in the radial direction with respect to the cutter holder center axis O2 of the bend-breaking cutter holder 102 (holder main body 107), and the bend-breaking cutter wheel 103 has a caster effect. Therefore, only the first and second bend-breaking jigs 94a and 94b (bend-breaking jigs) travel (move) in a circular shape from the vicinity of the start point of the end cutting line K2 and draw a circular trajectory (only the bend-breaking jigs slightly travel (move) in a predetermined direction from the vicinity of the start point of the end cutting line K2), the bend-breaking cutter wheel 103 rotates in the circumferential direction (about the axis) of the cutter holder center axis O2, and the rolling (rotating) direction of the circumferential edge 112 of the bend-breaking cutter wheel 103 faces the traveling (moving) direction (the direction in which the virtual end cutting line extends) of the first and second bend-breaking jigs 94a and 94b (bend-breaking cutter holder 102), and the rolling direction of the circumferential edge 112 of the bend-breaking cutter wheel 103 can be quickly and easily changed.

In the bend-breaking system 10a and the grinding processing method (the glass plate processing system 10), in each of the end cutting line forming regions of the edge portions 66b of the glass plates 11a and 11b that are processing targets, while the rolling direction of the circumferential edge 112 of the bend-breaking cutter wheel 103 is caused to match the traveling direction (the direction in which the virtual end cutting line of the edge portions 66b of the glass plates 11a and 11b extends) of the first and second bend-breaking jigs 94a and 94b, the end cutting line K2 can be inserted into these end cutting line forming regions, and the plurality of end cutting lines K2 can be efficiently formed in the end cutting line forming regions of the edge portions 66b of the glass plates 11a and 11b in a short time.

### Reference Signs List

10 Glass plate processing system
10a Bend-breaking system
11a Large-size glass plate
11b Small-size glass plate
12 Upper surface
13 Lower surface
14 One side edge
15 Other side edge
16 Front end edge
17 Rear end edge
18a to 18d First to fourth corner portions
19 Carry-in region
20 Notching processing region
21 Bend-breaking processing region
22 Grinding processing region
23 Carry-out region
24 Conveyance mechanism
25 System stand
26a, 26b First and second pillars
27 Fixed frame
28 First movement unit (first movement means)
29 Second movement unit (second movement means)
30 First guide frame
31 First guide rail
32 First traveling frame
33 First guide shoe
34 First servomotor
35 Second guide frame
36 Second guide rail
37 Second traveling frame
38 Second guide shoe
39 Second servomotor
40a to 40d First to fourth glass plate holders
41 Pad installation plate
42 Holder sucker (attraction pad)
43 Slide rod
44 Magnetic weight material holding mechanism
45 Lifting/lowering mechanism
46 Memory
47 Magnetic weight material
48 Attraction holding surface
49 Magnetic weight material holding sucker
50 Attraction surface
51 Facing surface (pressing surface)
52 Handle
53 Carry-in conveyor
54 Stopper
55 Roller
55a Roller
56 Roller lifting/lowering mechanism
57 Movement mechanism
58a One side edge portion
58b Other side edge portion
59 Shaft
60 Rod
61 Third servomotor
62 Movement arm
63 Abutting member
64 Notching processing table
65 Notching device
66a Main body portion
66b Edge portion (peripheral edge portion)
67a, 67b Base lane
68a First movement mechanism
68b Second movement mechanism
69a, 69b Traveling guide rail
70a, 70b Feed screw
71 Fourth servomotor
72a, 72b Guide shoe
73a, 73b Slide block (housing nut)
74 Notching jig
75 Air cylinder
76 Fifth servomotor
77 Notching cutter wheel
78 Notching cutter holder
79 Cutter lifting/lowering shaft
80 Cutter lifting/lowering guide
81 Support shaft
82 Bracket
83 Timing belt
84 Bend-breaking processing table
85 Bend-breaking device
85a First bend-breaking device
85b Second bend-breaking device
86 Support device
86a First support device
86b Second support device
87 Belt conveyor
88 Conveyor drive motor
89 Belt
90 Pulley
91 Carrier roller
92 Conveyor frame
93 Suspension frame
94a First bend-breaking jig
94b Second bend-breaking jig
95 Sixth servomotor (X-axis servomotor)
96a First X-axis actuator
96b Second X-axis actuator
97 Seventh servomotor (Y-axis servomotor)
98a First Y-axis actuator
98b Second Y-axis actuator
99a First X-axis actuator frame
99b Second X-axis actuator frame
99c First Y-axis actuator frame
99d Second Y-axis actuator frame
100 Eighth servomotor (X-axis servomotor)
101 Ninth servomotor (Y-axis servomotor)
102 Bend-breaking cutter holder
103 Bend-breaking cutter wheel
104 Holder lifting/lowering mechanism (first lifting/lowering mechanism)
105a First pressing member
105b Second pressing member
106a First pressing member lifting/lowering mechanism (second lifting/lowering mechanism)
106b Second pressing member lifting/lowering mechanism (third lifting/lowering mechanism)
107 Holder main body
108 Holder head
109a Rolling direction change start point
109b Rolling direction change end point
110 Bearing
111 Rolling shaft
112 Peripheral edge
113 Coupling portion
114 Bracket
115a First pressing surface
115b Second pressing surface
116 Through-hole
117 Guide frame
118a First support member
118b Second support member
119 Second support member lifting/lowering mechanism (fourth lifting/lowering mechanism)
120 Tenth servomotor (X-axis servomotor)
121a Third X-axis actuator
121b Fourth X-axis actuator
122 Eleventh servomotor (Y-axis servomotor)
123a Third Y-axis actuator
123b Fourth Y-axis actuator
124a Third X-axis actuator frame
124b Fourth X-axis actuator frame
124c Third Y-axis actuator frame
124d Fourth Y-axis actuator frame
125 Twelfth servomotor (X-axis servomotor)
126 Thirteenth servomotor (Y-axis servomotor)
127a First support surface
127b Second support surface
128 Grinding processing table
129 Grinding device
130 Table sucker (attraction pad)
131 Magnet
132 Support column
133 Center
134 Attraction surface
135 Connection joint (nipple)
136 Fourteenth servomotor
137 Grinding jig
138 Fifteenth servomotor
139 Sixteenth servomotor
140 Seventeenth servomotor
141 Grinding wheel lifting/lowering screw
142 Grinding wheel notching screw
143 Grinding wheel
144 Grinding holder
145 Cover
146 Spindle motor
147 Slit
148 Motor housing
149 Bracket
150 Carry-out conveyor
K1 Contour cutout line (notching line)
K2 End cutting line
L1 First positioning reference (virtual first positioning reference line)
L2 Second positioning reference (virtual second positioning reference line) (center line)
O1 Front-rear direction center of side edge
O2 Cutter holder center axis
O3 Cutter wheel axis
S Separation dimension (eccentric dimension)

## Claims

1. A grinding processing system that includes a grinding processing table on which a main body portion of a glass plate of which an edge portion is bend-broken through predetermined bend-breaking processing is placed, a table sucker having a predetermined area, which is installed on the grinding processing table and attracts and holds a lower surface of the main body portion of the glass plate, and a grinding mechanism, and that performs grinding processing on a peripheral edge of the main body portion of the glass plate placed and fixed on the grinding processing table by the table sucker by using the grinding mechanism, the grinding processing system comprising:
a magnet placed on the table sucker and located immediately below the lower surface of the main body portion of the glass plate placed on the grinding processing table; a magnetic weight material having a predetermined weight and located on a side of an upper surface of the main body portion of the glass plate and attracted to the magnet;
first fixing means for causing the table sucker to abut on the lower surface of the main body portion of the glass plate before starting of the grinding processing on the peripheral edge of the main body portion of the glass plate to attract and hold the lower surface of the main body portion; and second fixing means for causing the magnet located immediately below the lower surface of the main body portion and the magnetic weight material abutting on the upper surface of the main body portion and attracted to the magnet to sandwich the main body portion before starting of the grinding processing on the peripheral edge of the main body portion of the glass plate.

2. The grinding processing system according to claim 1, further comprising a magnetic weight material holding mechanism located on the side of the upper surface of the main body portion of the glass plate, wherein the grinding system includes first lowering means for lowering the magnetic weight material toward the upper surface of the main body portion in a state in which the magnetic weight material holding mechanism holds the magnetic weight material before starting of the grinding processing on the peripheral edge of the main body portion of the glass plate and placing the magnetic weight material immediately above the magnet to sandwich the main body portion, and first lifting means for causing the magnetic weight material holding mechanism to release holding of the magnetic weight material and lifting the magnetic weight material holding mechanism above the magnetic weight material after the magnetic weight material is placed immediately above the magnet by the first lowering means before starting of the grinding processing on the peripheral edge of the main body portion of the glass plate.

3. The grinding processing system according to claim 2, further comprising: positioning means for causing the magnetic weight material holding mechanism to move in a front-rear direction to locate the magnetic weight material held by the magnetic weight material holding mechanism above the main body portion of the glass plate and at a center of the main body portion, wherein the first lowering means lowers the magnetic weight material toward the upper surface of the main body portion after the magnetic weight material is located above the main body portion and at the center of the main body portion by the positioning means.

4. The grinding processing system according to claim 2 or 3, further comprising: second lowering means for lowering the magnetic weight material holding mechanism toward the magnetic weight material to hold the magnetic weight material after the grinding processing on the peripheral edge of the main body portion of the glass plate is ended; and second lifting means for lifting the magnetic weight material holding mechanism upward from the upper surface of the main body portion of the glass plate in a state of holding the magnetic weight material after the second lowering means causes the magnetic weight material holding mechanism to hold the magnetic weight material after the grinding processing on the peripheral edge of the main body portion of the glass plate is ended, and releasing attraction of the magnetic weight material to the magnet.

5. The grinding processing system according to any one of claims 1 to 4, further comprising: a glass plate holder that is movable in a front-rear direction and an up-down direction and causes the main body portion of the glass plate on which the grinding processing is ended to move from the grinding processing table to a carry-out region; and a holder sucker that is installed in the glass plate holder and attracted to the upper surface of the main body portion of the glass plate, wherein the magnetic weight material holding mechanism is installed in the glass plate holder.

6. The grinding processing system according to claim 5, further comprising: a lifting/lowering mechanism that is installed in the glass plate holder and individually lifts or lowers the magnetic weight material holding mechanism, wherein in the second lifting means, the magnetic weight material holding mechanism holding the magnetic weight material is lifted by the lifting/lowering mechanism to release the attraction of the magnetic weight material to the magnet, and the grinding processing system further comprises movement means for, after the magnetic weight material holding mechanism holding the magnetic weight material is lifted by the lifting/lowering mechanism, causing the glass plate holder to move in the front-rear direction to locate the holder sucker above the main body portion of the glass plate, after the holder sucker is located above the main body portion, lowering the glass plate holder such that the holder sucker is attracted to the upper surface of the main body portion of the glass plate, and, after the holder sucker is attracted to the upper surface of the main body portion, causing the main body portion of the glass plate to move to the carry-out region by causing the glass plate holder to move upward and forward.

7. The grinding processing system according to any one of claims 1 to 6, wherein the magnet has an attraction surface having a predetermined area facing the lower surface of the main body portion of the glass plate, and the attraction surface is located at a center of the table sucker having the predetermined area.

8. The grinding processing system according to any one of claims 1 to 7, wherein the magnet is a permanent magnet.

9. The grinding processing system according to claim 8, wherein the permanent magnet is covered with an iron cap to form a yoke that induces a magnetic flux.

10. The grinding processing system according to any one of claims 1 to 9, wherein the magnetic weight material is made of any metal of iron, nickel, and cobalt, has a predetermined weight, and has a facing surface having a predetermined area facing the upper surface of the main body portion of the glass plate.
